(19) Europäisches Patentamt
European Patent Office
Office européen des brevets

(11) **EP 4 135 257 A1**

(12) **EUROPEAN PATENT APPLICATION**

(43) Date of publication:
**15.02.2023 Bulletin 2023/07**

(21) Application number: **22187180.9**

(22) Date of filing: **27.07.2022**

(51) International Patent Classification (IPC):
**H04L 9/12** $^{(1990.01)}$        **H04L 9/32** $^{(1990.01)}$

(52) Cooperative Patent Classification (CPC):
**H04L 9/12**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2021 US 202117398299**

(71) Applicant: **Wi-LAN Research Inc.
Vista, CA 92081 (US)**

(72) Inventors:
• **FAROOQ, Muddassar**
  **Islamabad (PK)**
• **RAMZAN, Muhammad Rashad**
  **Islamabad (PK)**
• **STANWOOD, Kenneth**
  **Vista (US)**
• **MAROOF, Uzma**
  **Sydney (AU)**

(74) Representative: **Mewburn Ellis LLP
Aurora Building
Counterslip
Bristol BS1 6BX (GB)**

(54) **SYSTEM AND METHOD FOR EVOLVING CRYPTOGRAPHY WITH A PRIVATE TIME BASE**

(57)    An evolving encryptor system for generating at least one customized user-defined encryption block, the evolving encryptor system comprising an encryptor requirements agent that receives a plurality of encryption block design parameters and then generates a current set of encryption block design requirements based on the received plurality of encryption block design parameters, an encryptor algorithm engine that provides a plurality of different encryption module design templates based on the current set of encryption block design requirements, and an evolving encryptor processor that generates a current plurality of encryption block templates based on the plurality of different encryption module design templates and evaluates a cryptographic fitness of each of the current plurality of encryption block templates and assigns a cryptographic fitness measure to each of the current plurality of encryption block templates, and determines whether a current iteration count is below an iteration threshold value and, if the current iteration count is below the iteration threshold value, conducts a next iteration by generating a next plurality of encryption block templates until both said determined conditions are met, in which case the next plurality of encryption block templates is saved into an encryption block template database as a plurality of elite encryption block templates.

EP 4 135 257 A1

**Description**

CROSS-REFERENCE TO RELATED APPLICATIONS

This application is a continuation-in-part of U.S. Patent Application 17/344,113, filed on June 10, 2021 and entitled "Evolving Cryptography System And Method", which is a continuation-in-part of U.S. Patent Application 17/119,257, filed on December 11, 2020 and entitled "Encryption Circuit Randomness Inspector and Method", which claims the benefit of priority to U.S. Provisional Patent Application No. 63/116,757 filed on November 20, 2020 and entitled "Encryption Circuit Randomness Inspector and Method", and which claims the benefit of priority to U.S. Provisional Patent Application No. 63/143,474 filed on January 29, 2021 and entitled "Evolving Cryptography System And Method", all of which are incorporated herein by reference.

FIELD OF THE INVENTION

The inventions described herein relate to a system for generating strong cryptography devices, systems and methods using customizable and evolving cryptography. Aspects of the inventions herein further relate to an evolving encryptor system and method for use in an encryption circuit, a baseband processor, an application processor, a processor with built-in encryption circuitry, or a processor capable of running an encryption method in which customizable and evolving cryptography is implemented. Aspects of the inventions herein further relate to an evolving encryptor system, device and method in which a specific encryption technique, mutation or parameters are synchronized between two or more devices for use in encrypted communications between the two or more devices.

BACKGROUND

Encryption is commonly used to secure stored data and to secure communications between devices. Encryption is standard in most cellular and broadband communications protocols today such as LTE, Wi-Fi, WiMAX, Bluetooth, virtual private networks (VPN), etc. and is expected to continue to be standard as other forms of communications, such as low earth orbit (LEO) satellites, gain more use. In addition to encryption of the protocol data units (PDUs) or service data units (SDUs) of the communication protocol, applications that require extra security often encrypt data end-to-end, commonly known as peer-to-peer encryption. For instance, a banking app on a smartphone on an LTE or a similar wired/wireless access network will not rely on the encryption performed by the LTE type networks, but will perform its own end-to-end encryption, as well. Using its own encryption allows the bank to guarantee a minimum cryptographic strength of the algorithm chosen. It also guarantees the communications are encrypted not just over the LTE type networks, but over the complete network segments of all networks between the user's smartphone and the bank's servers.

Encryption has been and continues to be used in military, commercial, and private communications systems. These systems may be wired, wireless, satellite, RF, optical, acoustic, etc. Participating devices may include but are not limited to laptop, personal computers, servers, cell phones, smartphones, satellite terminals and phones, satellites, ground stations, Internet of Things (IoT) devices, sensors, hard drives, external backup devices, cloud storage, communications network infrastructure, and any other device that may exchange or store data.

A number of strong encryption algorithms have been proposed in the prior art. A very popular encryption algorithm is the Advanced Encryption Standard (AES) algorithm published by the National Institute of Standards and Technology (NIST).

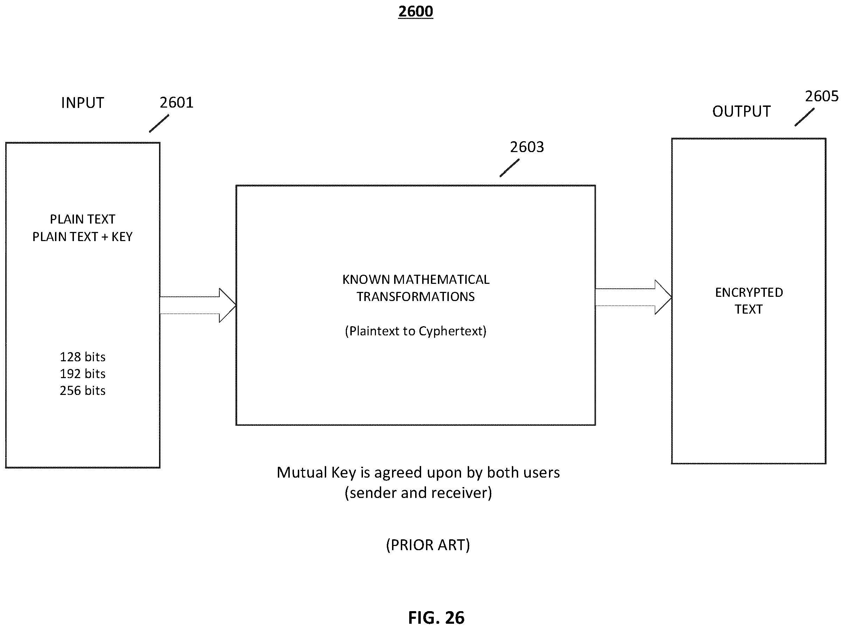

Most encryption algorithms, including AES, work as shown in Figure 26. The sender and receiver agree upon an encryption key of one of a few standard lengths. This encryption key is used with known or mutually agreed upon mathematical transformations (for example, AES is published by NIST) to create encrypted text that may be securely transmitted or stored. Some cryptographic algorithms require the same key to encrypt and decrypt and are known as symmetric key algorithms. Some cryptographic algorithms require two different keys to encrypt and decrypt and are known as asymmetric key algorithms.

Since the AES algorithm is published, when it is used the only unknown for an adversary trying to decrypt and steal information is the private key shared between sender and receiver through key exchange algorithms or some other appropriate secure method.

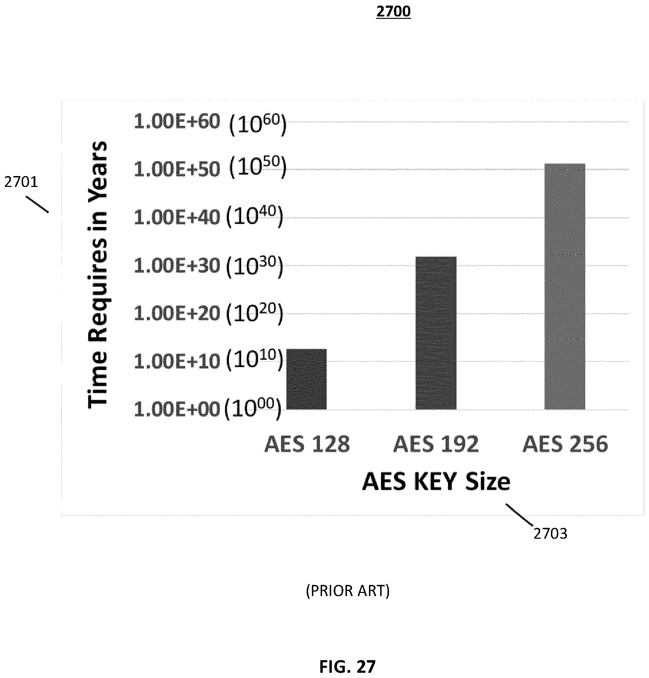

At 61.4 Petaflops, the NUDT Tianhe-2 remains among the world's most powerful supercomputers. As seen in Figure 27, this supercomputer would take many lifetimes of our universe to break the AES algorithm, by deploying the brute force method, and figure out the key used. However, as anyone who has been affronted by phishing, malware, or other online scams would know, an easier route for an adversary would be to attempt to steal the key rather than to figure it out by launching brute force or cryptanalysis attacks. As the military, banks, and other institutions that are seeking to secure their data and communications are aware, threats may also come from within the organization, commonly known as insider attacks or threats. It should therefore be appreciated that the private key can be a source of vulnerability to an encryption (or decryption) system.

## SUMMARY OF THE INVENTION

In an aspect, an evolving encryption circuit is provided for transforming a plain-text data stream into an encrypted data stream, the evolving encryption circuit comprising a confusion box population manager that generates a plurality of confusion boxes, a confusion box population agent that applies at least one evolutionary operator to each of the generated plurality of confusion boxes to create an evolved plurality of confusion boxes, a confusion box fitness evaluator that evaluates a cryptographic fitness of each of the evolved plurality of confusion boxes and assigns a cryptographic fitness measure to each of the evolved plurality of confusion boxes, a confusion box library that stores each one of the evolved plurality of confusion boxes that has an assigned cryptographic fitness measure above a fitness threshold value; and an encryptor block that implements one of the confusion boxes stored in the confusion box library to transform the plain-text data stream into the encrypted data stream.

In a further aspect, an evolving encryption method is provided for generating an evolved encryptor block to transform a plain-text data stream into an encrypted data stream, the evolving encryption method comprising the steps of generating, at a confusion box population manager, a plurality of confusion boxes, applying, at a confusion box population agent, at least one evolutionary operator to each of the generated plurality of confusion boxes to create an evolved plurality of confusion boxes, evaluating, at a confusion box fitness evaluator, a cryptographic fitness of each of the evolved plurality of confusion boxes and assigning a cryptographic fitness measure to each of the evolved plurality of confusion boxes, storing, at a confusion box library, each one of the evolved plurality of confusion boxes that has an assigned cryptographic fitness measure above a fitness threshold value, and implementing one of the confusion boxes stored in the confusion box library into an evolved encryptor block for use to transform the plain-text data stream into the encrypted data stream.

In an aspect, an evolving encryptor system is provided for generating at least one customized user-defined encryption block, the evolving encryptor system comprising an encryptor requirements agent that receives a plurality of encryption block design parameters and then generates a current set of encryption block design requirements based on the received plurality of encryption block design parameters, an encryptor algorithm engine that provides a plurality of different encryption module design templates based on the current set of encryption block design requirements, and an evolving encryptor processor that generates a current plurality of encryption block templates based on the plurality of different encryption module design templates and evaluates a cryptographic fitness of each of the current plurality of encryption block templates and assigns a cryptographic fitness measure to each of the current plurality of encryption block templates, and determines whether a current iteration count is below an iteration threshold value and, if the current iteration count is below the iteration threshold value, conducts a next iteration by generating a next plurality of encryption block templates until both said determined conditions are met, in which case the next plurality of encryption block templates is saved into an encryption block template database as a plurality of elite encryption block templates.

In another aspect, a method is provided for providing synchronized encrypted communication between at least two communication devices, the method comprising the steps of sending an encryption change request from a first communication device to a second communication device, determining a private time base value based on a private time base parameter, obtaining, by each of the first communication device and the second communication device, a matching encryption block based on the private time base value, and engaging in synchronized encrypted communication between the first communication device and the second communication device, each of which is using the matching encryption block for the encrypted communication.

The foregoing aspects, and other features and advantages of the invention, will be apparent from the following, more particular description of aspects of the invention, the accompanying drawings, and the claims.

## BRIEF DESCRIPTION OF THE DRAWINGS

Details of one or more implementations of the subject matter of the invention are set forth in the accompanying drawings briefly described below and the related description set forth herein. Other objects, features, aspects, and advantages will become apparent from the description, the drawings, and the claims. Note that the relative dimensions of the drawings may not be drawn to scale. Like reference numbers and designations in the various drawings indicate like elements.

**Figure 1** is a top-level diagram of a typical transceiver architecture for a broadband MIMO wireless radio and/or fiber optic communication system;
**Figure 2** is a functional diagram depicting a baseband processor with a randomness inspector according to aspects of the invention;
**Figure 3** is a functional diagram of a randomness inspector according to aspects of the invention;

**Figure 4** is a diagram depicting an input data stream generator according to aspects of the invention;

**Figure 5** is a top-level diagram of a randomness amplifier according to aspects of the invention;

**Figure 6** is a functional diagram of a randomness amplifier according to aspects of the invention;

**Figure 7** is a functional diagram of a randomness enhancer according to aspects of the invention;

**Figure 8** is a functional diagram of a randomness evaluator according to aspects of the invention;

**Figure 9** is a functional diagram of a randomness gain meter according to aspects of the invention;

**Figure 10** is a functional diagram of a randomness gain plot generator according to aspects of the invention;

**Figure 11** is a functional diagram of a randomness analyzer system according to aspects of the invention;

**Figure 12** is a top-level diagram of a randomness amplifier with correlated artifacts subtracted from the output stream according to aspects of the invention;

**Figure 13** is a functional diagram of a randomness comparator according to aspects of the invention;

**Figure 14** is a functional diagram of a benchmarked randomness inspector according to aspects of the invention;

**Figure 15** is a functional diagram depicting a baseband processor with a randomness inspector having switchable inputs according to aspects of the invention;

**Figure 16** is a functional diagram of a randomness inspector with switchable inputs according to aspects of the invention;

**Figure 17** is a is a top-level diagram of a differential randomness comparator with two randomness amplifiers according to aspects of the invention;

**Figure 18** is a top-level diagram of a differential randomness comparator with two randomness amplifiers having correlated artifacts subtracted from the output stream according to aspects of the invention;

**Figure 19** is a flowchart depicting a process for a randomness inspection of at least one data stream in a circuit according to aspects of the invention;

**Figure 20** is a flowchart depicting a process for a randomness amplifier according to aspects of the invention;

**Figure 21** is a flowchart depicting a process for a benchmarked randomness inspection of at least one data stream in a circuit according to aspects of the invention;

**Figure 22** is a flowchart depicting a process for a randomness amplifier with selectable inputs according to aspects of the invention;

**Figure 23** is a flowchart depicting a process for a randomness comparator according to aspects of the invention;

**Figure 24** is a flowchart depicting a process for a differential randomness comparator according to aspects of the invention;

**Figure 25** is a flowchart depicting a process for a randomness scope according to aspects of the invention;

**Figure 26** is a functional diagram of a typical encryption algorithm system;

**Figure** 27 is a chart depicting the time required to break AES algorithms having different key sizes;

**Figure 28** is a functional flow diagram of a known encryption algorithm, such as AES;

**Figure 29** is a functional diagram of an S-Box for AES that may be used as a confusion box according to aspects of the invention;

**Figure 30** is a functional diagram of an inverse S-Box for AES that may be used as a confusion box according to aspects of the invention;

**Figure 31** is a functional flow diagram of an evolutionary encryption method according to aspects of the invention;

**Figure 32** is a functional diagram of a customizable S-box according to aspects of the invention;

**Figure 33** is a functional diagram of an evolutionary S-Box according to aspects of the invention;

**Figure 34** is a functional diagram of an evolutionary inverse S-Box according to aspects of the invention;

**Figure 35** is a functional diagram of a customized inverse S-Box according to aspects of the invention;

**Figure 36** is a top-level diagram of a communication system implementing evolving cryptography according to aspects of the invention;

**Figure 37** is a top-level diagram of a communication system implementing evolving cryptography according to further aspects of the invention;

**Figure 38** is a top-level diagram of a communication system implementing evolving cryptography according to aspects of the invention;

**Figure 39** is a top-level diagram of a communication system implementing evolving cryptography according to further aspects of the invention;

**Figure 40** is a functional diagram of an evolving encryptor plant according to aspects of the invention;

**Figure 41** is a functional diagram of an encryptor requirements agent according to aspects of the invention;

**Figure 42** is a functional diagram of an encryptor algorithm engine according to aspects of the invention;

**Figure 43** is a top-level diagram of an encryptor evolving processor according to aspects of the invention;

**Figure 44** is a functional diagram depicting the design of a meta encryptor chromosome according to aspects of the invention;

**Figure 45** is a functional block diagram depicting a flexible wireless multiple antenna MMIMO transceiver architecture according to aspects of the invention;

**Figure 46** is a functional diagram of baseband processor implementing evolving encryption and decryption according to aspects of the invention;

**Figure 47** is a is a functional diagram of an evolving encryptor plant implemented in a baseband processor according to aspects of the invention;

**Figure 48** is a top-level functional diagram of a Low Earth Orbit (LEO) satellite system that implements evolving cryptography according to aspects of the invention;

**Figure 49** is a flowchart depicting a method of evolving encryption for transforming a plain-text data stream into an encrypted data stream according to aspects of the invention;

**Figure 50** is a flowchart depicting a method for generating, by an evolving encryptor system, at least one customized user-defined encryption block according to aspects of the invention;

**Figure 51** is a functional block diagram of a private time base module according to aspects of the invention;

**Figure 52** is a top-level diagram of a communication system implementing evolving cryptography with a private time base according to aspects of the invention;

**Figure 53** is a top-level diagram of a communication system implementing evolving cryptography with a private time base according to aspects of the invention;

**Figure 54** is a top-level diagram of a communication system implementing evolving cryptography with a private time base according to aspects of the invention; and

**Figure 55** is a top-level diagram of a communication system implementing evolving cryptography with a private time base and utilizing a centralized server according to aspects of the invention.

DETAILED DESCRIPTION

Aspects of the present invention and their advantages may be understood by referring to the figures and the following description. The descriptions and features disclosed herein can be applied to various devices, systems, software, and methods in encryption circuits and systems, such as for example in a baseband processor of a communication system device or in an application processor of a user equipment device or in any general-purpose processor having built in encryption circuitry or that is capable of executing or utilizing an encryption method, program, or process.

In an aspect of the present invention, an encryption circuit such as a baseband processor includes a randomness inspector that determines the randomness strength of an output data stream relative to the input data stream of one or more components of the circuit (baseband processor).

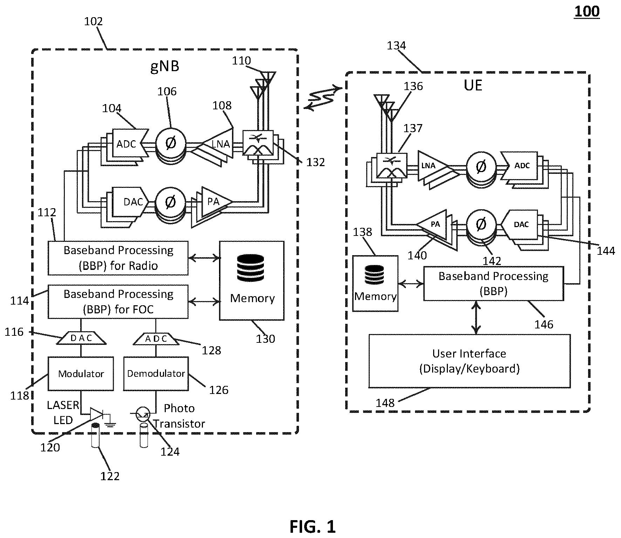

**Figure** 1 shows a top-level block diagram of a typical transceiver architecture of devices in a broadband MIMO wireless radio communication system 100, which also includes a fiber optic interface. As seen in **Figure 1,** a flexible wireless transceiver architecture is shown for devices gNB (NodeB, or base station) 102 and UE (user equipment) 134 that is typical for a 5G or high order MIMO (sub-6 GHz 5G NR) system, a 5G or higher mmWave system, an IEEE 802.11a/b/g/n/ac/ax system, an IEEE 802.11ad/ay system, a WiGig system, a Bluetooth system, a GNSS system, a 5G-CA system, a 5G-LAA system, etc. The gNB 102 of multiple antenna MMIMO system 100 consists of antenna 110, the LNA (Low Noise Amplifier) and PA (Power Amplifier) 108, the Duplexer and Time Switch (TS) 132, and Phase Shifter ($\phi$) 106 which are analog components working at GHz frequencies, and ADC and DAC 104 which are mixed signal components. In the case of the FDD (Frequency Division Duplex) system the duplexer is utilized but is replaced with the Time Switch (TS) in the case of a Time Division Duplexing (TDD) system. gNB 102 also includes baseband processor 112 for radio communication. The components of UE (User Equipment) 134 are similar to that of gNB 102, and include antenna 136, the LNA (Low Noise Amplifier) and PA (Power Amplifier) 140, the Duplexer and Time Switch (TS) 137, and Phase Shifter ($\phi$) 142 which are analog components working at GHz frequencies, and ADC and DAC 144. UE 134 can be an IoT machine or a human user device and has one or multiple Baseband Processors (BBP) 146 depending upon the chip architecture, necessary processing power, and schemes used for low power operation. On the gNB 102 (base station or BT) side, in addition to the above-mentioned hardware blocks, a Fiber Optic (FO) interface is also present in order to connect the base station with a cloud-based IT infrastructure (such as for backhaul). The FO interface has its own dedicated BBP 114, and in the transmission chain also includes DAC 116, modulator 118, and laser LED 120 (for outgoing fiber optic medium 122), The FO interface includes in its receive chain phototransistor 124 (for receiving signals from fiber optic medium), demodulator 126 and ADC 128. Memory 130 is also provided in gNB 102 to store data for BBPs 112 and 114. Similarly, UE 134 also includes memory 138 to store data for BBP 146. UE also includes user interface 148 which may be a display, keyboard, touchscreen, buttons, sensors, and or other known types of user interface devices.

From the functional point of view, the BBPs of the UE, the BS, and the FO are all similar. The BBPs have their own specific architecture and a dedicated operating system. All the digital functions are implemented in the BBP, which includes coding, interleaving, equalization, estimation, compression, sampling, rate conversion, transformation, pulse shaping and modulation etc. Encryption methods are utilized in gNB 102 and UE 134 and are implemented in the baseband processor(s) of each. Aspects of the invention as described herein may be implemented in or applied to the BBP of a UE, BS, or FO. In this regard, aspects of the invention as described as herein may be implemented in or applied to the BBP (communications link encryption) for communications with the UE, for the BS airlink, and also the BS backhaul. Aspects of the invention as described herein may also be implemented in or applied to an application processor, especially for example an application processor of a UE that supports UE end-to-end encryption.

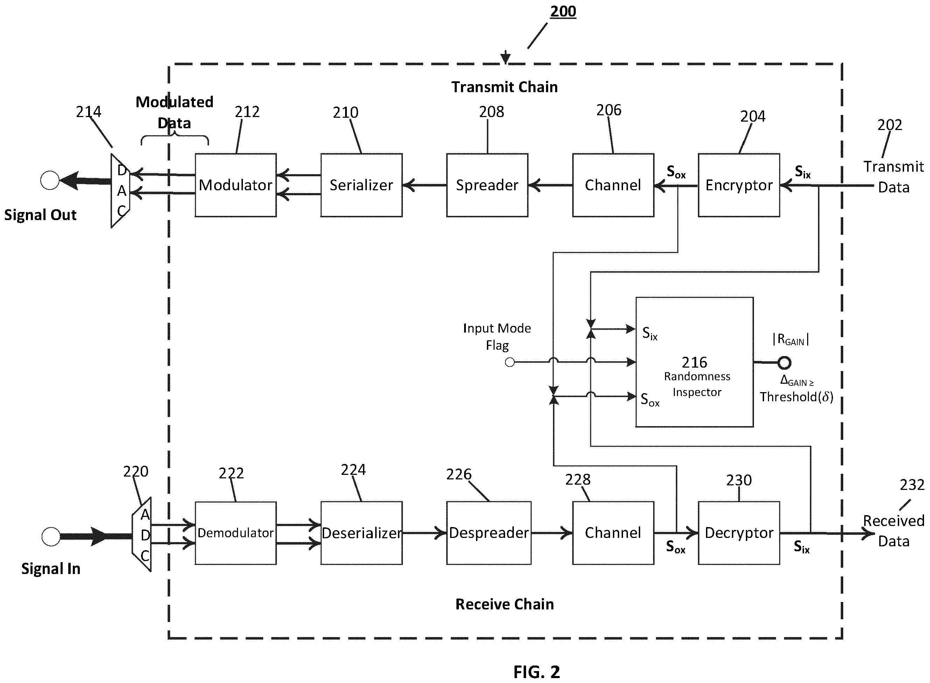

**Figure 2** is a functional diagram of a baseband processor 200, such as BPP 146 of **Figure 1,** wherein the baseband processor includes a randomness inspector 216 according to aspects of the invention. As seen in **Figure 2,** baseband processor (BBP) 200 is shown which is suitable for different types of radios and FOC systems. BBP 200 consists of, but is not limited to, Encryptor 204, Channel Selection 206, Spreader 208, Serializer 210, and Modulator 212 in the transmit chain. As seen in the transmit chain, Transmit Data 202 is input to BBP 200 which processes it by blocks 204 to 212 and outputs modulated data to DAC 214 to thereby result in an analog output signal, such as for transmission. In the receiver chain of BBP 200, the main blocks are Demodulator 222, Deserializer 224, Despreader 226, Channel Deselection 228, and Decryptor 230. As seen in the receiver chain, an analog signal-in (such as from an antenna) is input to ADC 220 which sends modulated data into BBP 200 in which it is processed by blocks 222 to 230 and outputs decrypted received data 232. These above-mentioned blocks make up the main part of any kind of BPP present in typical radio and fiber optic (FO) communication systems. BBP 200 also includes Randomness Inspector 216.

According to an aspect of the invention, Randomness Inspector 216 computes the randomness gain between two data streams and may also compute a randomness distance of two data streams. The randomness gain and/or the randomness distance can be used to find out whether the encryption method applied between the two data streams (such as input and output data streams) is defective or has been compromised or disabled by an adversary attack. In case of a problem or security breach of the encryption method, BPP 200 can alert the system (such as the operating system of a gNB or a UE) to take the mitigation countermeasures. Randomness Inspector 216 can be implemented using the existing resources in BPP 200 or a dedicated hardware and can be realized within the baseband processor chip or a separate security chip.

As seen in **Figure 2,** the data stream under investigation can be the tapped from the output of Encryptor block 204 to determine a problem or compromise in the encryption of that particular block, and the severity and the type of an adversary attack. This investigation can be applied on the whole band, a sub-band, or a complete channel of the sub channels of the TDMA and FDMA, CDMA or spread spectrum systems.

In order to detect the attack, the input Six and output $S_{ox}$ of Encryptor block 204 are tied to the two inputs Six and $S_{ox}$ of Randomness Inspector 216, respectively. $|R_{GAIN}|$ values computed inside the Randomness Inspector 216 measure the randomness distance between input and output data streams. $|R_{GAIN}|$ and both Six and output $S_{ox}$ can be used directly or stored in a memory (not shown) for a later use.

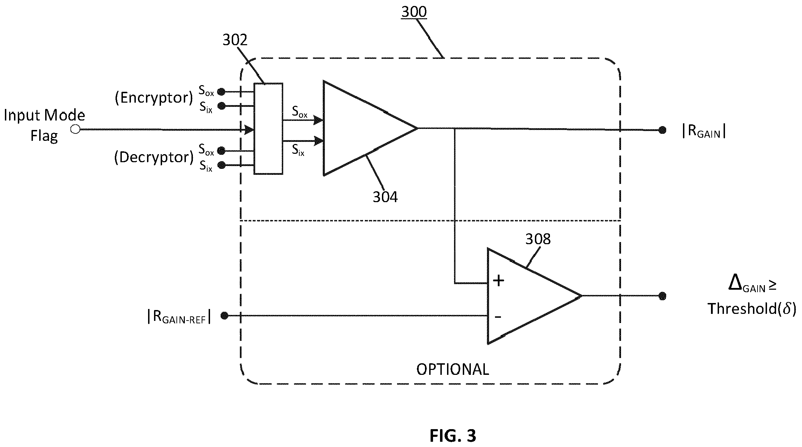

Randomness Inspector 216 can be comprised of comparator blocks as described further below with respect to **Figure 3.** In this manner, if Encryptor 204 is enabled then $|R_{GAIN}|$ of the top comparator block inside the Randomness Inspector 216 should correspond to a high randomness distance between the two data streams, and $\Delta_{GAIN}$ of the bottom comparator block inside the Randomness Inspector 216 should correspond to a difference between reference and measured randomness differences that is less than a threshold; otherwise, Encryptor 204 may have been turned off or degraded to a fake encryptor such as ILLUZIJA (a pseudo name for a fake encryptor that simply copies an input stream to the output stream) and hence this compromise could be easily detected. An undetected ILLUZIJA attack could significantly reduce the cryptographic strength of the output ciphered data stream $S_{ox}$ and accordingly would lead to a security breach of the information in that data stream.

The outputs of Randomness Inspector 216 are a randomness distance measure $|R_{GAIN}|$ between the reference stream (Six) and the data stream under investigation ($S_{ox}$) and the difference ($\Delta$) between reference and measured randomness differences $|R_{GAIN-REF}|$ and $|R_{GAIN}|$. If the difference ($\Delta$) between reference randomness difference $|R_{GAIN-REF}|$ and the measured randomness difference $|R_{GAIN}|$ for the two data streams is more than a threshold ($\delta$), then the system is determined to have been compromised; and thus, may enable the system controller to take appropriate steps to mitigate the adverse effects of this type of encryption defect or security attack. Reference randomness difference $|R_{GAIN-REF}|$ may be, for instance, a calculation of the long-term randomness gain of a well-known encryption scheme such as AES. As seen in **Figure 2,** Randomness Inspector 216 can also perform the same functions as described above with regard to the receive chain of BBP 200. Specifically, input $S_{ox}$ (an encrypted data stream) and output Six (a decrypted data stream) of Decryptor block 230 are also provided to the two inputs Six and $S_{ox}$ of Randomness Inspector 216, respectively. Randomness Inspector 216 can determine whether to inspect the data streams from the transmit chain or the receive chain based on an Input Mode Flag which is input to Randomness Inspector 216 from a user interface or from memory. Similar to the above description regarding the inspection of data streams from encryptor 204, when Randomness Inspector 216 determines to inspect the data streams from the receive chain based on the Input Mode Flag, $|R_{GAIN}|$ values are computed inside Randomness Inspector 216 which measure the randomness distance between input and output data streams of Decryptor 230. $|R_{GAIN}|$ and both Six and output $S_{ox}$ in this instance can be used directly or stored in a memory (not shown) for a later use. For example, in the case that Randomness Inspector 216 operates as shown in Figure 3 and as discussed in more detail below, if Decryptor 230 is enabled then $|R_{GAIN}|$ of the top comparator block (such as randomness comparator 304 of Figure 3) inside the Randomness Inspector 216 should correspond to a high randomness distance between the two data streams, and the $\Delta_{GAIN}$ of the bottom comparator block (such as randomness comparator 308 of Figure 3) inside the Randomness Inspector 216 should correspond to a difference between reference and measured randomness differences that is more than a threshold; otherwise, Decryptor 230 may have been turned off or degraded to a fake decryptor such as ILLUZIJA (a pseudo name for a fake decryptor that simply copies an input stream to the output stream) and hence this compromise could be easily detected.

**Figure 3** is a functional diagram of a randomness inspector according to aspects of the invention, such as for example Randomness Inspector 216 of Figure 2. In **Figure 3,** Randomness Inspector 300 is shown in which two data streams Six and $S_{ox}$ are input from one of two sets of inputs (for example, inputs from either a transmit chain or a receive chain of a BPP). **Figure 3** shows two data streams Six and $S_{ox}$ from an encryptor block and two data streams Six and $S_{ox}$ from a decryptor block being provided to switch 302. In this regard, switch 302 can be located in Randomness Inspector 300 or can be located outside of Randomness Inspector 300, such as in a separate component or function of a circuit in which Randomness Inspector 300 resides, such as for example the BBP 200 shown in Figure 2. Switch 302 can be implemented in a circuit, logic, or other known means. Alternatively, switch 302 may be optional in the case that Randomness Inspector 300 is configured to only accept inputs from an encryptor block (such as in the transmit chain of BBP 200) or to only accept inputs from a decryptor block (such as in the receive chain of BBP 200). An Input Mode Flag is also provided to switch 302 which instructs switch 302 whether to use the data streams Six and $S_{ox}$ from the encryptor block or from the decryptor block and then output them as selected data streams Six and $S_{ox}$ to the Comparator 304. In the case of using data streams from the encryptor block, Six is an input data stream before encryption, and $S_{ox}$ is an output data stream after encryption. In the case of using data streams from the decryptor block, $S_{ox}$ is an input data stream before decryption, and Six is an output data stream after decryption. These two data streams may represent the initial input data stream and final output data stream of an entire encryption chain or circuit (or decryption chain or circuit, as the case may be), or may represent different data streams from any different respective points, stages or components in an encryption chain or circuit (or decryption chain or circuit), such as a BPP for example. Comparator 304 of Randomness Inspector 300 determines a randomness gain $|R_{GAIN}|$ between input data streams Six and $S_{ox}$ and may also optionally include a difference calculator 308 which calculates the difference between the $|R_{GAIN}|$ output of Randomness Comparator 304 and a reference $|R_{GAIN}|$. If the difference calculator 308 determines a difference ($\Delta$) in the two $|R_{GAIN}|$ values that is more than a predetermined threshold ($\delta$), then it is determined that the two data streams are not very close in randomness space and therefore may indicate an encryption or decryption problem, whichever the case may be.

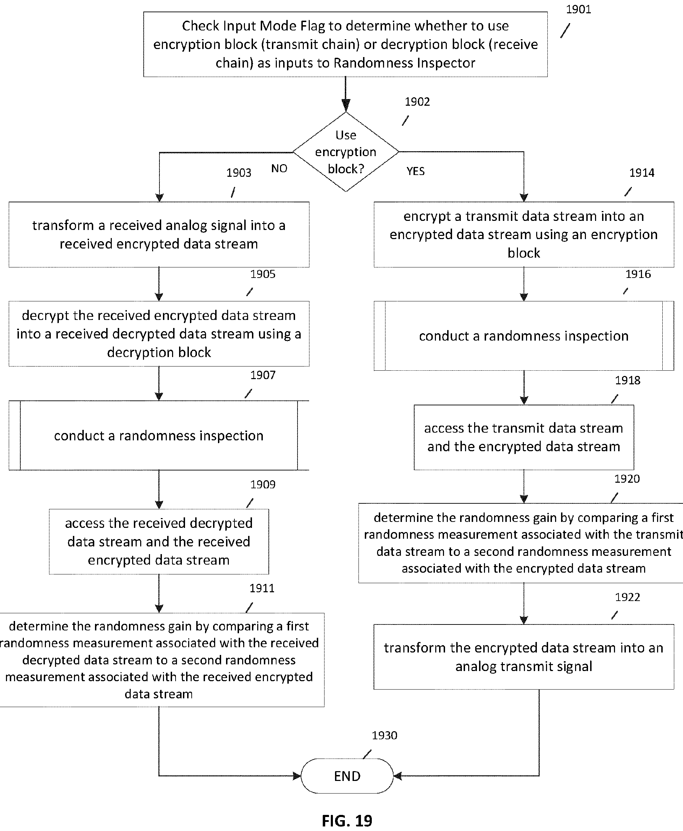

**Figure 19** is a flowchart depicting a process for a randomness inspection of at least one data stream in a circuit according to an aspect. The process of **Figure 19** may apply to any circuit that includes an encryption or scrambling block, model, or process such as in a baseband processor circuit, an application processor circuit, or any other encryption or scrambling circuit. As seen in **Figure 19,** the process begins at step 1901 in which the randomness inspector checks the input mode flag to determine whether to use input data streams from a block in the transmit chain (such as the encryption block) or from a block in the receive chain (such as the decryption block). In step 1902, the decision is made based on the input mode flag to use the encryption block (transmit chain) or the receive block (such as the decryption block) for inputs. If, in step 1902, it is decided to use the encryption block (or any other block in the transmit chain) the process moves to step 1914 which encrypts a transmit data stream into the encrypted data stream using the encryption block. Next, in step 1916, a randomness inspection is conducted that includes the step 1918 of accessing the transmit data stream and the encrypted data stream and the step 1920 of determining a randomness gain by comparing a first randomness measurement associated with the transmit data stream to a second randomness measurement associated with the encrypted data stream. Then in step 1922 the encrypted data stream is transformed into an analog transmit signal. The process then ends at step 1930.

If, in step 1902, it is decided not to use the encryption block (or any other block in the transmit chain) and instead to use the decryption block (or any other block in the receive chain) the process moves to step 1903 in which a received analog signal is transformed into the received encrypted data stream. Next, the process moves to step 1905 of decrypting the received encrypted data stream into a received decrypted data stream. In step 1907, a randomness inspection is conducted that includes step 1909 of accessing the received decrypted data stream and the received encrypted data stream and step 1911 of determining a randomness gain by comparing a first randomness measurement associated with the received decrypted data stream to a second randomness measurement associated with the received encrypted data stream. The process then ends at step 1930.

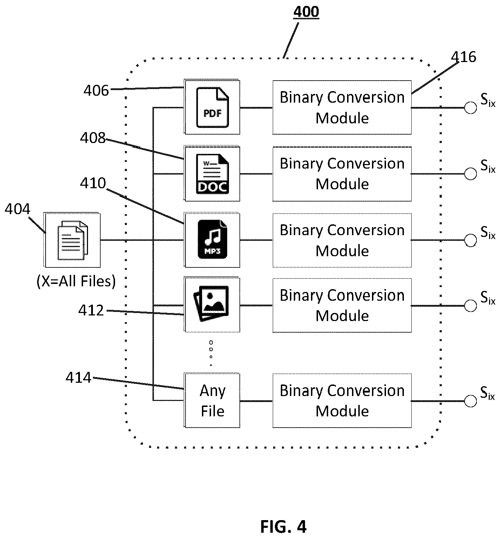

**Figure 4** is a diagram of an input data stream generator 400 according to aspects of the invention. As seen in **Figure 4,** there is input data files 404 which represent various types of files or data that can be used to create digital data streams. Such files/data may be, for example, a pdf file 406, a word processing document 408, a music file (e.g., MP3, etc.) 410, and image file 412, or any other type of file 414. Each type of file is processed by a binary conversion module 416 to provide a corresponding binary data stream $S_{ix}$ where i denotes that this is an input stream and x denotes the original file type i.e., pdf, word document, audio, image, or any other correlated data file or pseudorandom generated file. The data stream Six can be, for example, the input data stream Six of encryptor 204 of **Figure 2,** or input data stream Six of comparator 304 in randomness inspector 300 of **Figure 3.**

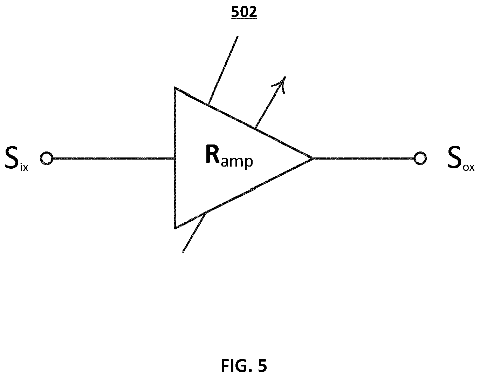

**Figure 5** is a top-level diagram of a randomness amplifier according to aspects of the invention. Randomness amplifier 502 in **Figure 5** is a symbolic representation of an encryption testing system in which an input data stream $S_{ix}$ is provided to randomness amplifier 502 which applies an encryption method or technique thereby generating a randomness enhanced output data stream $S_{ox}$ and in which randomness amplifier 502 conducts a randomness comparison between the input data stream Six and the output data stream $S_{ox}$ to obtain a randomness gain ($|R_{GAIN}|$) value (represented by the arrow in **Figure 5).** The $|R_{GAIN}|$ value is a measure of the randomness applied by the encryption method or technique to the input data stream Six to generate the output data stream $S_{ox}$.

The randomness amplifier 502 may be used to test component level cryptographic security of an encryption method, circuit, or scrambling system. In an aspect, randomness amplifier (Ramp ) 502 is a representation of a system, device, or method that does encryption or scrambling of any form of digitized data at any communication layer of a network protocol stack and determines an $|R_{GAIN}|$ value related to the encryption or scrambling. Randomness amplifier 502, therefore, takes an input digitized signal or data stream (such as data stream Six generated by input data stream generator 400 of **Figure 4)** as an input having a randomness value of Ri and amplifies or enhances its randomness value by doing encryption or scrambling on the input data stream and produces a randomized output stream with a randomness value of $R_o$. The $|R_{GAIN}|$ value of a randomness amplifier defines the amount of randomness that is applied, by a Randomness Amplifier, of to an input data stream.

The encryption and/or scrambling methods used in randomness amplifier 502, could take various forms ("instances") in different methods and embodiments such as, but not limited to, an S-box, a mangling function, a rounds-logic and a key expansion module or any other information scrambling system at any layer of a network protocol stack. In each of these forms, the randomness amplifier takes an input stream and applies its encryption and/or scrambling method to produce a cipher stream by enhancing the randomness value of input stream by a measure defined as the randomness gain $|R_{GAIN}|$. The higher the value of $|R_{GAIN}|$ of a randomness amplifier, the more cryptographically strong cipher (encrypted output data stream) it can produce.

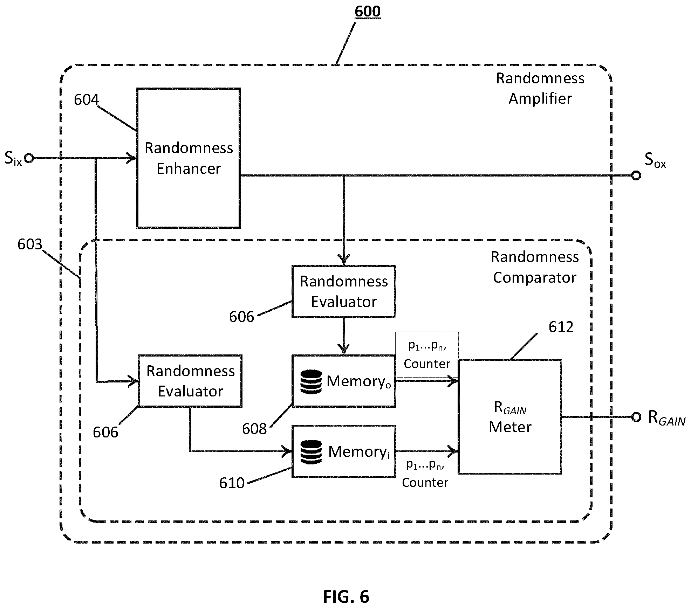

**Figure 6** is a functional block diagram of randomness amplifier 600 (such as randomness amplifier 502 of **Figure 5).** As seen in **Figure 6,** randomness amplifier 600 includes randomness enhancer 604 and randomness comparator 603. Randomness comparator 603 includes randomness evaluator 606 (two instances), memory 608, memory 610 and $R_{GAIN}$ meter 612. In an aspect, the randomness enhancer 604 takes an input digital data stream (Six) and encrypts it using an encryption method and produces a cipher output data stream ($S_{ox}$). The output of randomness enhancer 604 is given to a first instance of randomness evaluator 606, and the input data stream (Six) is also provided to a second instance of randomness evaluator 606. In an aspect, randomness evaluator 606 applies one or more different randomness test suites (like the NIST Test suite), or one or more component randomness tests thereof, and stores the results of the randomness tests (for example a p-value for each test) of the input stream (Six) in Memoryi 610. Similarly, randomness evaluator 606 applies one or more different randomness test suites (like the NIST Test suite), or one or more component randomness tests thereof, and stores the results of the randomness tests (for example a p-value for each test) of the output stream ($S_{ox}$) in Memory$_o$ 608. In both instances, randomness evaluator 606 also stores a representation of a count of how many tests have failed into the respective memory. $R_{GAIN}$ meter 612 reads the randomness test results stored in Memoryi 610 and Memory$_o$ 608 and computes a randomness gain ($R_{GAIN}$) applied by randomness enhancer 604.

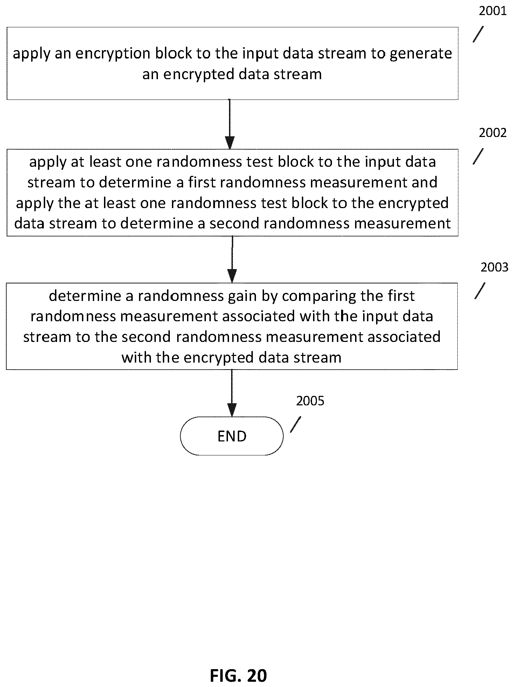

**Figure 20** is a flowchart depicting a process for a randomness amplifier according to an aspect. As seen in **Figure 20,** the process begins at step 2001 in which an encryption block is applied to an input data stream to generate an encrypted data stream. In step 2002, at least one randomness evaluator applies at least one randomness test block to the input data stream to determine a first randomness measurement and applies the at least one randomness test block to the encrypted data stream to determine a second randomness measurement. In step 2003, a gain meter determines a randomness gain by comparing the first randomness measurement associated with the input data stream to the second randomness measurement associated with the encrypted data stream. The process then ends at step 2005.

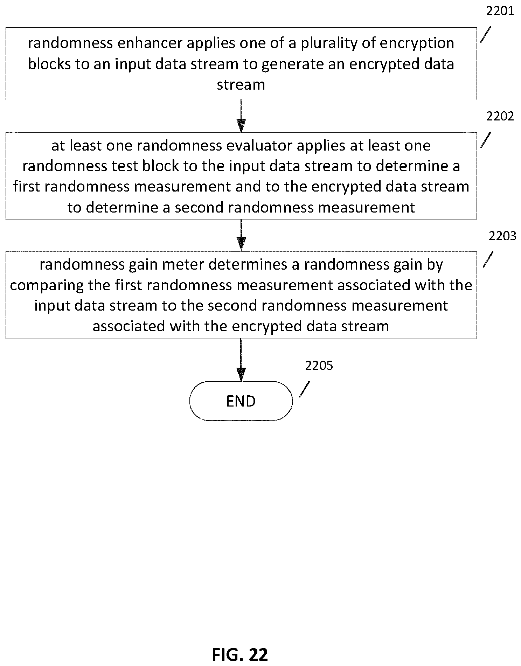

**Figure 22** is a flowchart depicting a process for a randomness amplifier that can accept inputs for determining a randomness gain for data streams associated with any one of a plurality of encryption blocks (or decryption blocks) in a network stack according to an aspect. As seen in **Figure 22,** the process begins at step 2201 in which a randomness enhancer (such as randomness enhancer 604 of **Figure 6)** applies one of a plurality of encryption blocks to an input data stream to generate an encrypted data stream. As mentioned above, the applied encryption block can be, for example, any encryption block in a circuit (such as BBP 200 of Figure 2) or a network stack. Next, in step 2202, at least one randomness evaluator applies at least one randomness test block to the input data stream to determine a first randomness measurement and also applies the at least one randomness test block to the encrypted data stream to determine a second randomness measurement. In step 2203, a randomness gain meter determines a randomness gain by comparing the first randomness measurement associated with the input data stream to the second randomness measurement associated with the encrypted data stream. The process then ends at step 2205.

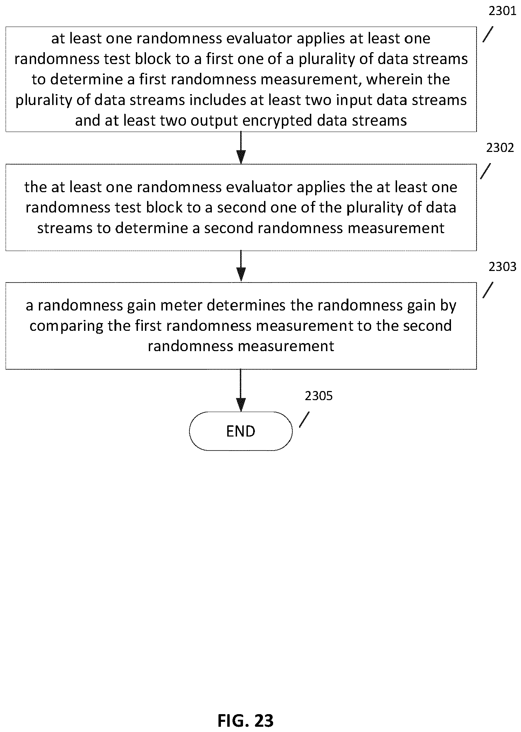

**Figure 23** is a flowchart depicting a process for a randomness comparator that determines a randomness gain based on any two of a plurality of data streams according to an aspect. For example, the plurality of data streams can include at least two input data streams and at least two output encrypted data streams from any location in an encryption or scrambling circuit, such as for example in a baseband processor. As seen in **Figure 23,** the process begins at step 2301 in which at least one randomness evaluator applies at least one randomness test block to a first one of the plurality of data streams to determine a first randomness measurement. In step 2302, the at least one randomness evaluator applies the at least one randomness test block to a second one of the plurality of data streams to determine a second randomness measurement. Next, in step 2303, a randomness gain meter that determines a randomness gain by comparing the first randomness measurement to the second randomness measurement. The process then ends at step 2305.

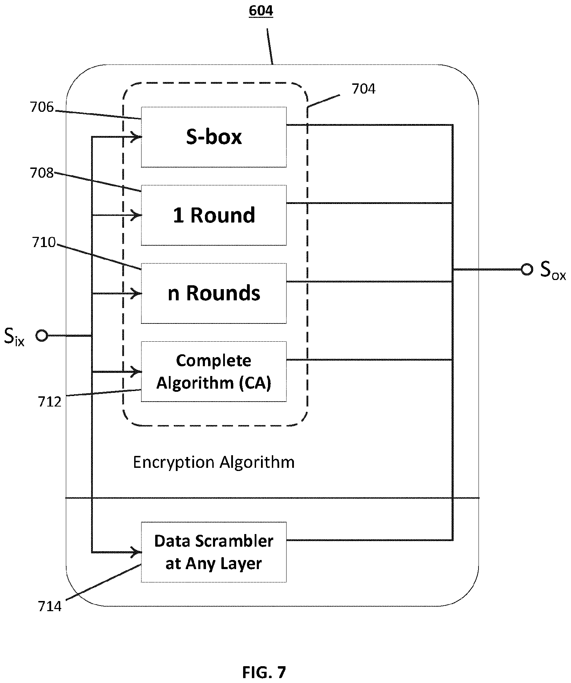

**Figure 7** is a functional block diagram of randomness enhancer 604 of **Figure 6.** In **Figure 7,** randomness enhancer 604 is shown to have the capability to include one or more types of encryption or scrambling methods which can be applied to an input data stream Six at any granularity level on any communication layer of a network protocol stack, or at any stage or block of an encryption circuit. For example, if an instance of randomness enhancer 604 utilizes only the S-box 706 of an encryption method then the randomness gain in the generated output data stream $S_{ox}$ is representative of the strength of S-box 706. If instead an instance of randomness enhancer 604 utilizes a mangling function with a round logic around it, such as 1 Round 708 or n Rounds 710, then the randomness gain in the generated output data stream $S_{ox}$ is representative of the cryptographic strength of 1 Round 708 (or n Rounds 710) of an encryption method. Similarly, if an instance of randomness enhancer 604 utilizes a complete encryption method (CA) with the key scheduling module 712 then the randomness gain in the generated output data stream $S_{ox}$ is representative of the strength of the complete method (CA) 712. Another instance of randomness enhancer 604 may utilize data scrambler 714 at the physical layer. The randomness gain applied by data scrambler 714 is not only representative of its cryptographic strength but also benchmarks its strength against other known strong encryption methods such as like the Advanced Encryption Standard (AES). It should be appreciated that encryption components 706 to 714 of randomness enhancer 604 are examples, and that randomness enhancer 604 can include one or more components of any known encryption methods or techniques. Randomness enhancer 604 can also assign a sensitivity level to a particular instance of the type of encryption component(s) utilized that depicts the catastrophic level of information security compromise if it should fail one or more randomness tests in the NIST suite. For example, the lowest sensitivity level may be assigned to S-box 706 and the highest sensitivity level may be assigned to the complete encryption method (CA) 712. The penalty value ($T_{Value}$) output by randomness evaluator 606 in **Figure 6** may be proportional to the assigned sensitivity level of the particular instance of randomness enhancer 604.

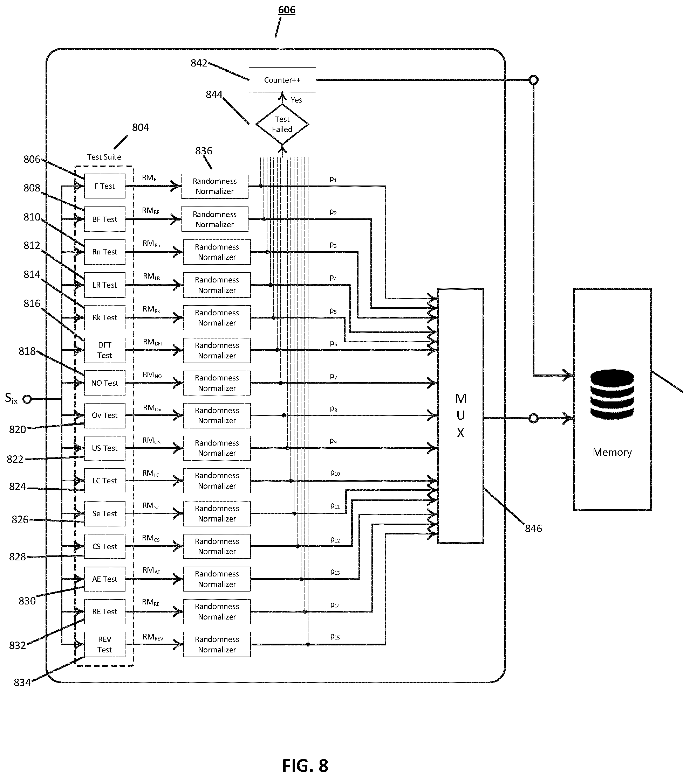

**Figure 8** shows a functional block diagram of randomness evaluator 606 of **Figure 6.** As seen in **Figure 8,** randomness evaluator 606 includes a randomness test suite 804 of various randomness tests 806 to 834, which may be similar to the proposed NIST test suite, or any other known randomness test suites, or components thereof. It should be appreciated that randomness test suite 804 can be generalized to any randomness test suite by extending or reducing the number of randomness tests contained therein. The generalized test suite can be enhanced by adding any new randomness test or any new randomness test suites. Moreover, randomness evaluator 606 could use any other known randomness test that is deemed useful in any applied instance of randomness evaluator 606. In randomness test suite 804, the NIST test suite is used as an example and is composed of 15 randomness test modules 806 to 834. Randomness evaluator 606 applies each randomness test to input data stream $S_{ix}$ and computes a normalized statistical value (p-value) of each randomness test result on the basis of its corresponding randomness measure. In this example, the statistical p-value of a randomness test is used as the normalized statistical value. The p-value varies between 0.0 and 1.0 where 0.0 shows a perfectly correlated data stream and 1.0 shows a perfect pseudo random cipher stream. This calculation method is presented as an example only and it should be appreciated that randomness evaluator 606 could also use any known suitable normalized method to determine the randomness test result. A brief description of the 15 randomness tests of randomness test suite 804 is provided below.

1. Frequency Test (F) 806. The purpose of this test is to determine whether a randomness enhancer is able to ensure that the number of ones and zeros in the substituted cipher stream are approximately the same as would be expected in a random cipher. Its randomness measure is denoted by $RM_F$. Its normalized statistical value is denoted by $p_1$.

2. Block Frequency Test (BF) 808. The aim of this test is to ensure that a randomness enhancer is able to maintain the notion of randomness - equal number of ones and zeros - even in small, substituted blocks of a given length M. Its randomness measure is denoted by $RM_B$. Its normalized statistical value is denoted by $p_2$.

3. Runs Test (Rn) 810. The purpose of this test is to determine whether a randomness enhancer is able to maintain the required oscillation speed between variable length k continuous ones and zeros. The test identifies whether the transitions between such zeros or ones is too slow or too fast. Its randomness measure is denoted by $RM_R$. Its normalized statistical value is denoted by $p_3$.

4. Longest Run of Ones in a Block Test (LR) 812. The purpose of this test is to determine whether a randomness enhancer is able to limit the longest run of ones within M block bits in such a fashion as expected in a random bit stream. Consequently, if the longest run of ones is irregular, the same would hold for zeros. Its randomness measure is denoted by $RM_L$. Its normalized statistical value is denoted by $p_4$.

5. Binary Matrix Rank Test (Rk) 814. The purpose of this test is to ensure that whether a randomness enhancer should not introduce a linear dependence among fixed length disjoint sub matrices of the entire cipher bit stream. Its randomness measure is denoted by $RM_K$. Its normalized statistical value is denoted by $p_5$.

6. Discrete Fourier Transform Test (DFT) 816. The purpose of this test is to identify whether a randomness enhancer has introduced periodic features in the cipher bit stream that would indicate a deviation from assumed randomness. The intention is to detect whether the number of peaks, in the Discrete Fourier Transform (DFT) of the cipher bit stream, exceeding the 95% threshold differs significantly by 5%. Its randomness measure is denoted by RMo. Its normalized statistical value is denoted by $p_6$.

7. Non-Overlapping Test (NO) 818. The purpose of this test is to detect whether a randomness enhancer has generated too many occurrences of a given non-periodic patterns of an m-bit window. For p-value < 0.01, it indicates that the cipher stream has irregular occurrences of the possible template patterns. Its randomness measure is denoted by $RM_N$. Its normalized statistical value is denoted by $p_7$.

8. Overlapping Test (Ov) 820. The purpose of this test is same as for NO test, but the difference is that in NO test, if the pattern is not found, the window slides one-bit position. But in this test, if the pattern is found, window slides on bit position before resuming the search. Its randomness measure is denoted by RMo. Its normalized statistical value is denoted by $p_8$.

9. Universal Statistical Test (US) 822. The purpose of the test is to detect whether or not the cipher stream can be compressed without loss of information. A significantly compressible sequence is considered to be non-random. Its randomness measure is denoted by $RM_U$. Its normalized statistical value is denoted by $p_9$.

10. Linear Complexity Test (LC) 824. The purpose of this test is to determine randomness, introduced by a randomness enhancer, in the cipher stream by computing the length of Linear Feedback Shift Register (LFSR). Longer LFSR characterizes a random sequence. Its randomness measure is denoted by RMc. Its normalized statistical value is denoted by pio.

11. Serial Test (SE) 826. The purpose of this test is to determine whether the number of occurrences of the 2m m-bit overlapping patterns is approximately the same as would be expected for a random sequence. The random sequence is expected to have uniformity; all m-bit patterns have equal chances to appear in the cipher. Its randomness measure is denoted by $RM_T$. Its normalized statistical value is denoted by $p_{11}$.

12. Cumulative Sum Test (CS) 828. The purpose of this test to check whether the cumulative sum of partial sequences is too small or large. For a random sequence, the CS should be near zero. For nonrandom sequence, the CS will be large. Its randomness measure is denoted by RMs. Its normalized statistical value is denoted by $p_{12}$.

13. Approximate Entropy Test (AE) 830. The purpose of this test is to determine whether a randomness enhancer has introduced overlapping m-bits patterns in the substituted cipher stream. A large frequency of consecutive m and m+1 length block represents a deviation from the notion of randomness. Its randomness measure is denoted by $RM_A$. Its normalized statistical value is denoted by $p_{13}$.

14. Random Excursion Test (RE) 832. The purpose of this test is to determine if the number of visits to a particular state within a cycle - consisting of a sequence of steps of unit length taken at random in such a fashion that one returns to the origin - deviates from what one would expect for a random sequence. In this test, (0,1) is transformed to (-1, +1) and then the number of visits to -4, -3, -2, -1, and +1, +2, +3 and +4 are calculated; as a result, we get 8 randomness measure values corresponding to each state. To simplify analysis, the module selects the minimum among them. Its randomness measure is denoted by $RM_E$. Its normalized statistical value is denoted by $p_{14}$.

15. Random Excursion Variant Test (REV) 834. The purpose of this test is to determine the number of times a particular state is visited in cumulative sum random walk and then conclude whether it deviates from the random walk. This test consists of a series of 18 tests and produces 18 randomness values. The module again picks up the minimum one among them to simplify the analysis. Its randomness measure is denoted by $RM_V$. Its normalized statistical value is denoted by $p_{15}$.

Randomness evaluator 606 also determines whether a randomness test has failed at decision block 844 and maintains a dynamic counter 842 that is initialized to zero for each data stream and is incremented by 1 whenever any individual randomness test of randomness test suite 804 fails. In this regard, if an entire encryption algorithm is currently being tested and the counter is non-zero it means that the entire encryption algorithm has failed at least one test of the randomness test suite and therefore the entire encryption algorithm is compromised or inadequate. Alternatively, if only a component of an entire encryption algorithm is being tested and the counter is non-zero it means that the encryption component currently being tested has failed at least one test of the randomness test suite, but it does not necessarily mean that the entire encryption algorithm is compromised or inadequate. In the latter case, further testing of the components of the entire encryption algorithm is necessary to determine whether the entire encryption algorithm is compromised or inadequate. Counter 842 outputs the counter value for subsequent use in a penalty function. Finally, the 15 normalized statistical values (p-values) and the counter 842 value corresponding to an input data stream $S_{ix}$ are stored through MUX 846 in Memory 850. Referring to **Figure 6,** the normalized statistical values (p-values) and the counter value corresponding to an input data stream $S_{ix}$ given to randomness enhancer 604 are stored in memory 610, and the normalized statistical values (p-values) and the counter value corresponding to output data stream $S_{ox}$ of randomness enhancer 604 are stored in memory 608.

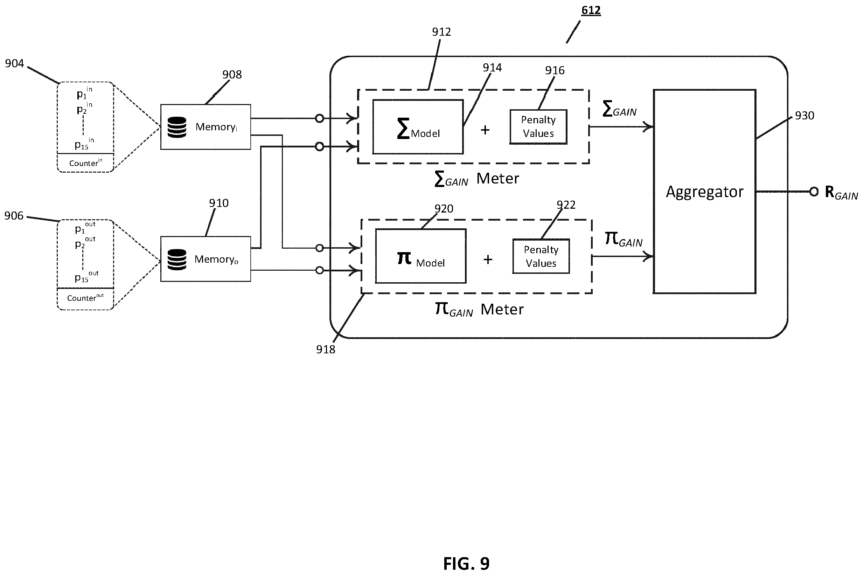

**Figure 9** is a functional block diagram of $R_{GAIN}$ Meter 612 of **Figure 6** in which. $R_{GAIN}$ meter 612 computes the $R_{GAIN}$ of randomness enhancer 604 where its input data stream is Six and its cipher output data stream is Sox.

As seen in **Figure 9,** $R_{GAIN}$ meter 612 is composed of $\Sigma_{GAIN}$ meter 912, $\pi_{GAIN}$ meter 918 and aggregator module 930. Both meters 912 and 918 read the p-values and counter values 904 and 906 stored by randomness evaluator 606 both for input and output data streams in memories 908 and 910, respectively. $\Sigma_{GAIN}$ meter 912 includes $\Sigma_{Model}$ 914 and also a penalty value block 916 that applies a penalty function to the counter value to generate a penalty value ($T_{Value}$) corresponding to the sensitivity level of the instance of randomness enhancer 604 and then finally computes $\Sigma_{GAIN}$ based on the output of $\Sigma_{Model}$ 914 and penalty value block 916. With regard to penalty value block 916, in case that an instance of randomness enhancer 604 utilizes S-box 706, it is highly likely that some tests of randomness test suite 804 might fail and therefore only a smaller penalty value $T_{value}$ is generated. On the other hand, in case that an instance of randomness enhancer 604 utilizes 1-round 708 or n rounds 710 of an encryption method and they still fail a randomness test, then a higher penalty value $T_{value}$ is generated because after n rounds an encryption method may not be expected to still fail any randomness test of randomness test suite 804. Both meters 912 and 918 take $\log_2$ of determined randomness gain ($R_{GAIN}$) and then scale it by multiplying with k to result in scale values that provide better insights into randomness gain behavior of a randomness enhancer 604. In one instance, k is set to a value of 8 in order to provide differentiating behavior analyses. In other instances, k might take a value of 16 or 32 or any power of 2 that provides better insight into randomness gain behavior.

An example embodiment of $\Sigma_{Model}$ 914 is the following mathematical model, but it could generalize to be any other appropriate mathematical or heuristic model or method.

$$\sum\nolimits_{MODEL} = k \times \log_2 \left( \frac{1}{N} \sum_{j=1}^{N} \frac{p_j{}^{out}}{p_j{}^{in} + 0.01} \right)$$

$$\text{Penalty Value} = T_{\text{value}}$$

$$\sum\nolimits_{GAIN} = \sum\nolimits_{MODEL} + \text{Penalty Value}$$

$$\sum\nolimits_{GAIN} = k \times \log_2 \left( \frac{1}{N} \sum_{j=1}^{N} \frac{p_j{}^{out}}{p_j{}^{in} + 0.01} \right) + T_{\text{value}}$$

where N is the number of tests in randomness test suite 804, $p_j{}^{out}$ is the p-value of the test j applied on output data cipher stream produced by an instance of randomness enhancer 604 and $p_j{}^{in}$ is the p-value of the test j applied on an input data stream given to a randomness enhancer 604 and $T_{value}$ is a penalty value computed by penalty value block 916 by applying a penalty function of the form $[k \times \log_2(\lambda_p) \times counter]$ where counter 842 is the number of tests failed and $\lambda_p$ is chosen such that a penalty value proportional to the sensitivity level of randomness enhancer 604 is computed. In this regard, $\lambda_p$ is constrained to a value between 0 and 1, which results in the penalty value $T_{value}$ always being a negative value. $\Sigma_{GAIN}$ meter 912 adds 0.01 value to $p_j{}^{in}$ to avoid divide-by-zero exception and to cap the upper limit of scaled values where $p_j{}^{in}$ are very small. $\Sigma_{GAIN}$ computed by $\Sigma_{GAIN}$ meter 912 provides an upper limit on $R_{GAIN}$ (randomness gain) because it takes an arithmetic average of component gains of all test results of tests 806 to 834 of randomness test suite 804. Another example embodiment of $\Sigma_{Meter}$ 912 is:

$$\Sigma_{GAIN} = k \times \left( \frac{1}{N} \sum_{j=1}^{N} \frac{p_j{}^{out}}{p_j{}^{in} + 0.01} \right) + T_{\text{value}}$$

Another example embodiment is:

$$\Sigma_{GAIN} = k \times \left( \frac{1}{N} \sum_{j=1}^{N} p_j{}^{out} - p_j{}^{in} \right) + T_{\text{value}}$$

$\pi_{GAIN}$ meter 918 uses a $\pi_{Model}$ 920 and penalty value block 922 (similar to penalty value block 916 described above) that applies a penalty function to the counter value to generate a penalty value ($T_{Value}$) corresponding to the sensitivity level of the embodiment of randomness enhancer 604 in order to compute $\pi_{GAIN}$. An example embodiment of the $\pi_{Model}$ 920 is the following mathematical model, but it could generalize to any other appropriate mathematical or heuristic model or method.

$$\pi_{GAIN} = k \times \log_2 \left[ \prod_{j=1}^{N} \frac{p_j{}^{out} + 0.1}{p_j{}^{in} + 0.1} \right]^{\frac{1}{N}} + T_{\text{value}}$$

where N is the number of tests in randomness test suite 804, $p_j^{out}$ is the p-value of the test j applied on output data cipher stream produced by an instance of randomness enhancer 604, and $p_j^{in}$ is the p-value of the test j applied on input data stream given to an instance of randomness enhancer 604 and $T_{\text{value}}$ is a penalty value computed by penalty values block 922 by applying an appropriate penalty function of the form [$k \times \log_2(\lambda_p) \times counter$] where counter 842 is the number of tests failed and $\lambda_p$ is chosen such that a penalty value proportional to the sensitivity level of randomness enhancer 604 is computed. In this regard, $\lambda_p$ is constrained to a value between 0 and 1, which results in the penalty value $T_{\text{value}}$ always being a negative value. $\pi_{GAIN}$ meter 918 adds 0.1 (or any small constant) to $p_j^{in}$ and $p_j^{out}$ to avoid divide-by-zero exception and to cap the upper limit of scaled values where $p_j^{in}$ are very small. $\pi_{GAIN}$ computed by $\pi_{GAIN}$ meter 918 provides a lower limit on $R_{GAIN}$ (randomness gain) because it takes a geometric average of component gains of the results of all randomness tests 806 to 834 of randomness test suite 804.

Another example embodiment of $\pi_{Model}$ 920 is:

$$\pi_{GAIN} = k \times \left[ \prod_{j=1}^{N} \frac{p_j{}^{out} + 0.1}{p_j{}^{in} + 0.1} \right]^{\frac{1}{N}} + T_{\text{value}}$$

Finally, aggregator 930 uses the definition of Arithmetic-Geometric mean (AGM) in one embodiment as an example to provide a representative randomness gain value between $\Sigma_{GAIN}$ and $\pi_{GAIN}$. The output value of $R_{GAIN}$ from aggregator 930 using the AGM method is:

$$R_{GAIN} = AGM(\Sigma_{GAIN}, \pi_{GAIN})$$

When $R_{GAIN}$ is computed on a logarithm 2 scale and measures the randomness gain ($R_{GAIN}$) of an instance of randomness enhancer 604 in units of Octa Bells (octaB) i.e., an increase of 8 octaB represents a twofold enhancement in randomness of a Randomness amplifier. In other embodiments, $\Sigma_{GAIN}$ and $\pi_{GAIN}$ can be aggregated using arithmetic mean, geometric mean, or any known suitable aggregation method.

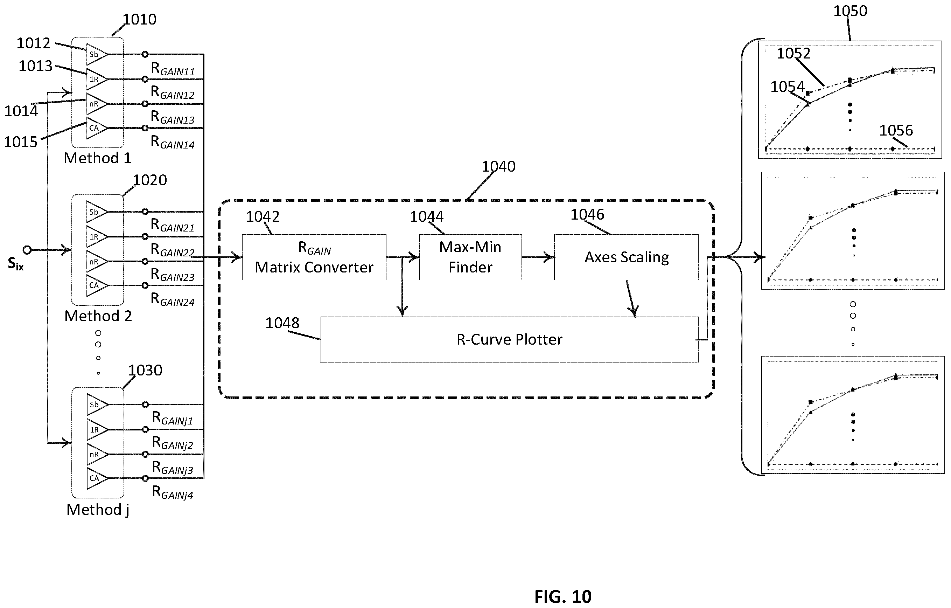

Figure 10 is a functional block diagram of randomness scope 1040 that generates plots of $R_{GAIN}$ test results of randomness amplifier 600 test system of Figure 6, for example. Randomness scope 1040 plots R-Curves for different instances (706 to 714 of **Figure** 7) of randomness enhancer 604 which is comprised of an encryption method or its subcomponents. The testing of each encryption component of an encryption method is shown in **Figure 10** as randomness amplifiers 1012 to 1015, respectively, of Method 1 1010, which generate outputs $R_{GAIN11}$, $R_{GAIN12}$, $R_{GAIN13}$, And $R_{GAIN14}$. Testing of other Methods 2 to j are represented by other sets (1020, 1030) of randomness amplifiers with their associated output $R_{GAIN}$ values. Randomness scope 1040 includes $R_{GAIN}$ matrix convertor 1042 which creates a matrix of 1* n * m dimension, where I shows the number of input data streams provided at the input of randomness amplifier 600, n shows the number of encryption methods to be compared and benchmarked, and m shows the number of granularity levels at which an instance of randomness enhancer 604 within randomness amplifier 600 test system is to be tested. The matrix elements for each input data stream is a 2-dimensional submatrix that stores randomness gain ($R_{GAIN}$) values for each instance (706 to 714 of **Figure 7**) of randomness enhancer 604. Max-Min finder 1044 finds the maximum and minimum values of the randomness gains and provides them to Axes Scaling module 1046. R-curve plotter 1048 then generates R-Curve plots 1050 for each different encryption method by using linear splicing of randomness gains corresponding to each different encryption method (706 to 714 of **Figure 7**). The plotted line 1052 of R-Curve 1050 shows the plot of the determined randomness gain ($R_{GAIN}$) corresponding to (referring to **Figure 7**) S-box 706, 1 Round 708, n Rounds 710, and Complete Method (CA) 712 of encryption method 1. Similarly, line 1054 of R-Curve 1050 shows the plot of the determined randomness gain ($R_{GAIN}$) corresponding to (referring to **Figure 7**) S-box 706, 1 Round 708, n Rounds 710, and Complete Method (CA) 712 of encryption method 2, etc.

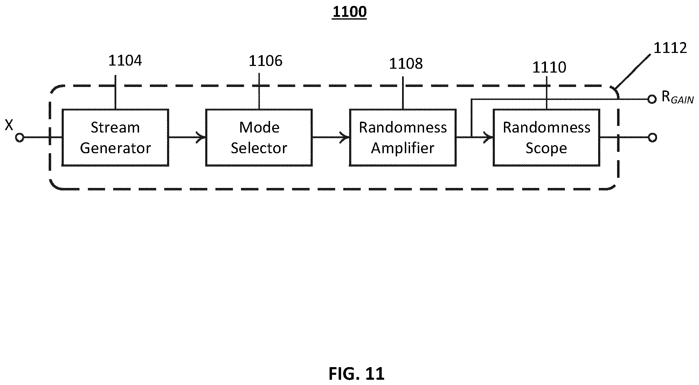

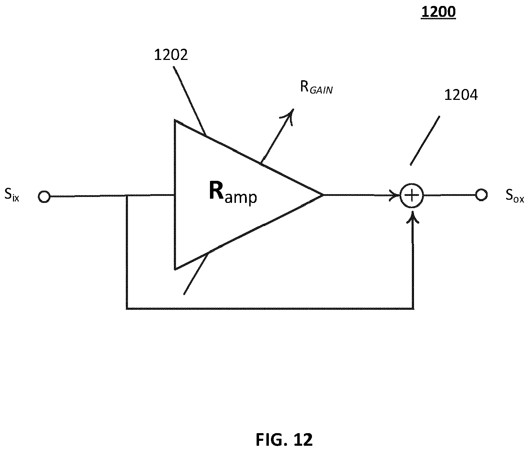

**Figure 11** is a functional block diagram of a randomness test system (RTS) 1100 for end-to-end testing of encryption methods comprised of different encryption components and determining $R_{GAIN}$ values for the components and outputting plots of the test results. RTS 1100 includes stream generator 1104, mode selector 1106, randomness amplifier 1108 and randomness scope 1110. Stream generator 1104 generates input digital data streams in a manner as described above with respect to **Figure 4** and its associated description. Randomness amplifier 1108 applies randomness to the input digital data stream and tests the output data stream to determine a randomness gain in a manner as described above with respect to **Figures 6 to 9** and their associated description. Randomness scope 1110 generates plots of the randomness gain test results in a manner as described above with respect to **Figure 10** and its associated description. RTS 1100 provides the ability to conduct randomness testing in different operational modes by utilizing mode selector 1106. Example embodiments of two operational modes are provided in Figure 5 (correlated randomness amplifier - CRA mode) and in Figure 12 (uncorrelated randomness amplifier - URA mode). Turning to **Figure 5,** an $R_{GAIN}$ meter (such as $R_{GAIN}$ meter 612) of randomness amplifier 502 (CRA mode) computes its randomness gain ($R_{GAIN}$) based on results from a randomness evaluator (such as randomness evaluator 606) of randomness amplifier 502 by application of randomness test suite 804 on its output cipher data stream ($S_{ox}$) and input data stream ($S_{ix}$). Randomness amplifier 502 (CRA mode) provides a lower limit on the randomness gain for a correlated input data stream because correlated artifacts of the input data stream are not subtracted from the output cipher stream. Turning to **Figure 12,** randomness amplifier (URA mode) 1202 shows that the correlated artifacts of the input data stream are subtracted from the output data stream at junction 1204. As a result, the correlated artifacts of the input data stream are suppressed and so the cipher output data stream ($S_{ox}$) now contains only pseudo randomness data stream. This URA mode provides an upper limit on the randomness gain. An $R_{GAIN}$ meter (such as $R_{GAIN}$ meter 612) of URA randomness amplifier 1202 computes a randomness gain ($R_{GAIN}$) based on results from a randomness evaluator (such as randomness evaluator 606) of randomness amplifier 1202 by application of randomness test suite 804 on its cipher output data stream ($S_{ox}$) and input data stream (Six).

RTS 1100 empowers users and designers of encryption methods to test components of encryption methods by treating components of an encryption method as an instance of a randomness enhancer in randomness amplifier 1108 and testing their cryptographic strength by computing an associated randomness gain ($R_{GAIN}$). This unique and novel testing process is referred to herein as Deep Cipher Investigation (DCI).

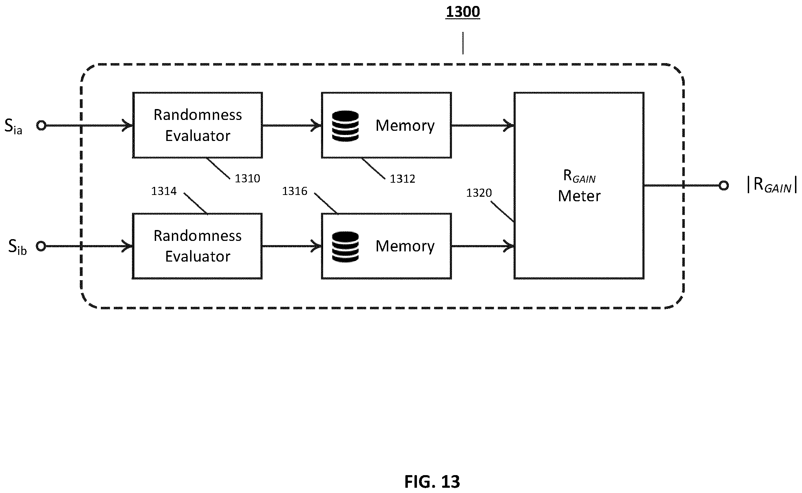

In another aspect of the invention, **Figure 13** shows a randomness comparator 1300 that is a simplified version of randomness comparator 603 of randomness amplifier 600 shown in **Figure 6.** In **Figure 13,** randomness comparator 1300 has two input data streams Sia and Sib, respectively and provides them to randomness evaluators 1310 and 1314, respectively. The functionality of randomness evaluators 1310 and 1314 is the same as that described above with respect to randomness evaluator 606 of **Figures 6 and 8.** In randomness comparator 1300, once $R_{GAIN}$ meter 1320 computes the randomness gain ($R_{GAIN}$) by considering one of the streams as an input stream and the other as an output stream, then due to logarithm scale, it is actually computing the randomness distance which effectively models the difference in their randomness values. Finally, $R_{GAIN}$ meter 1320 takes the modulus to show randomness distance measure between the two streams. Accordingly, randomness comparator 1300 makes it possible to measure the closeness of two streams in the randomness space. The smaller the randomness distance, the closer are two streams in the randomness space and vice versa.

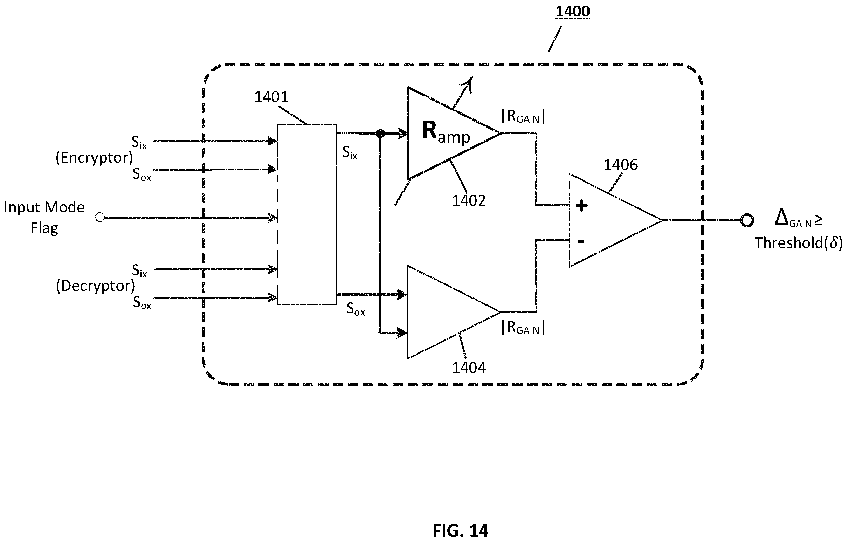

In another aspect, **Figure 14** is a block diagram of randomness inspector 1400 which benchmarks the $R_{GAIN}$ of an instance of a randomness comparator 1404 against a standard randomness amplifier 1402, such as an AES model instance of a randomness amplifier. Randomness inspector 1400 uses difference calculator 1406 to benchmark the output $R_{GAIN}$ of the randomness comparator 1404, which may be coupled to an encryptor block in a BPP for example, against the output $R_{GAIN}$ of the AES model amplifier 1402. Randomness inspector 1400 selects from two sets of inputs (for example, inputs from either a transmit chain or a receive chain of a BPP). In **Figure 14,** two data streams Six and $S_{ox}$ from an encryptor block and two data streams Six and $S_{ox}$ from a decryptor block are provided to switch 1401. Similar to switch 302 of Figure 3, switch 1401 can be located in Randomness Inspector 1400 or can be located outside of Randomness Inspector 1400, such as in a separate component or function of a circuit in which Randomness Inspector 1400 resides, such as for example in BBP 200 shown in Figure 2. Switch 1401 can be implemented in a circuit, logic, or other known means. Alternatively, switch 1401 may be optional in the case that Randomness Inspector 1400 is configured to only accept inputs from an encryptor block (such as in the transmit chain of BBP 200) or to only accept inputs from a decryptor block (such as in the receive chain of BBP 200). An Input Mode Flag is also provided to switch 1401 which instructs switch 1401 whether to use the data streams Six and $S_{ox}$ from the encryptor block or from the decryptor block and then output them as selected data streams Six and $S_{ox}$ to randomness comparator 1404 and AES model amplifier 1402. If the difference ($\Delta$) determined by difference calculator 1406 between the randomness gains of the two randomness amplifiers (the first amplifier being randomness comparator 1404 coupled to an encryptor, and the second amplifier being the AES model amplifier) is more than a threshold ($\delta$), then it is determined that the encryptor associated with randomness comparator 1404 is either disabled or severely compromised. In such a state of disablement or compromise, a system controller could be enabled to take appropriate steps to mitigate the adverse effects of this type of security problem with the compromised encryptor.

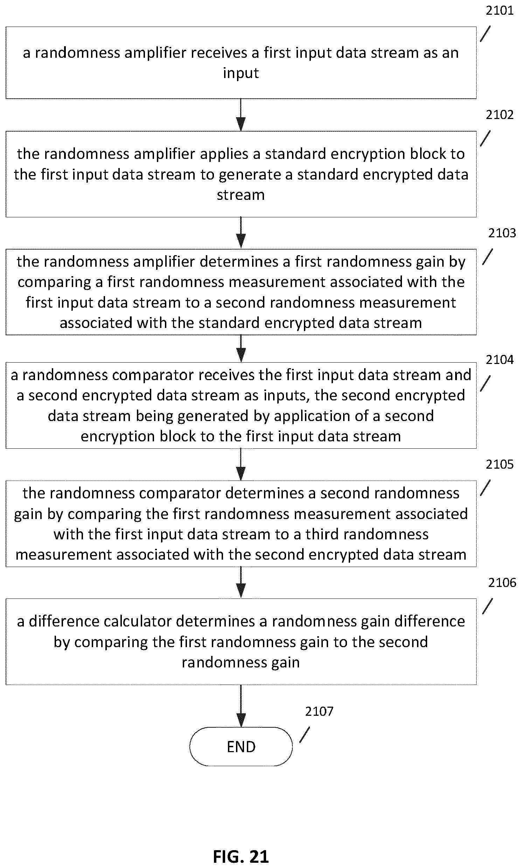

**Figure 21** is a flowchart depicting a process for a benchmarked randomness amplifier according to an aspect. As seen in **Figure 21,** the process begins at step 2101 in which a randomness amplifier receives a first input data stream as an input. Next, in step 2102, the randomness amplifier applies a standard encryption block to the first input data stream to generate a standard encrypted data stream. In step 2103, the randomness amplifier determines a first randomness gain by comparing a first randomness measurement associated with the first input data stream to a second randomness measurement associated with the standard encrypted data stream. The process then moves to step 2104 in which a randomness comparator receives the first input data stream and a second encrypted data stream as inputs, the second encrypted data stream being generated by application of a second encryption block to the first input data stream. In step 2105, the randomness comparator determines a second randomness gain by comparing the first randomness measurement associated with the first input data stream to a third randomness measurement associated with the second encrypted data stream. In step 2106, a difference calculator determines a randomness gain difference by comparing the first randomness gain to the second randomness gain. The process then ends at step 2107.

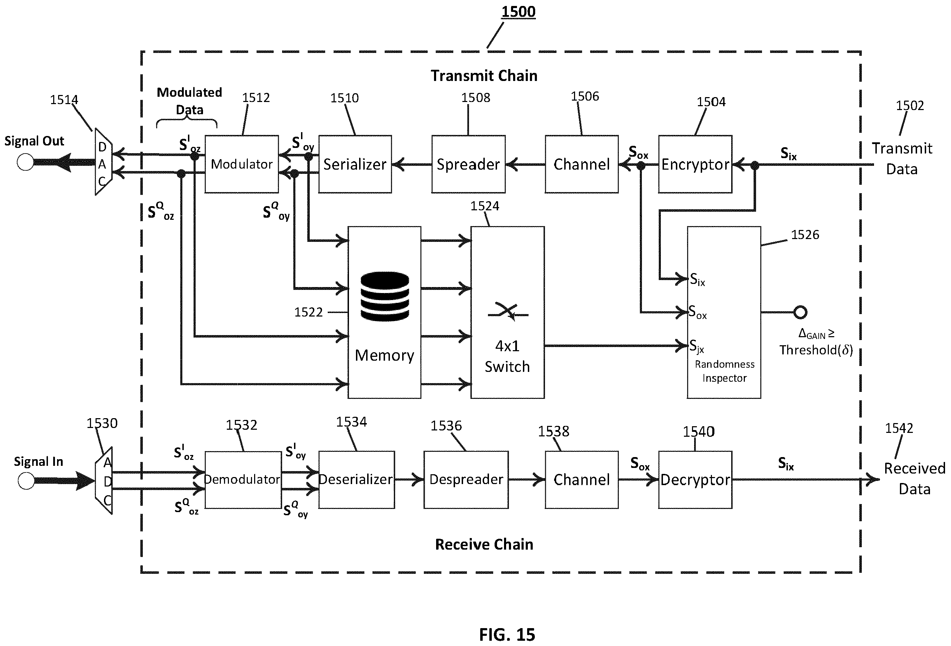

**Figure 15** depicts a block diagram of a baseband processor (BBP) 1500 suitable for different types of radios and FOC systems, wherein the BBP includes a randomness inspector 1526 having switchable inputs according to an aspect of the invention. BBP 1500 is similar to BBP 200 of **Figure 2,** except that randomness inspector 1526 of BBP 1500 has the capability to switch inputs in order to test the encryption strength of different blocks in the chain of BBP 1500. BBP 1500 includes, but is not limited to, encryptor 1504, channel selection 1506, spreader 1508, serializer 1510, and modulator 1512 in the transmit chain. As seen in **Figure 15,** transmit data 1502 is input into BBP 1500 and is processed by blocks 1504 to 1512 to output modulated data to DAC 1514 to create an analog output signal. The receiver chain includes demodulator 1532, deserializer 1534, despreader 1536, channel selection 1538 and decryptor 1540. In the receiver chain of Figure 15, an analog signal-in is input to ADC 1530 which outputs modulated data to BBP 1500 which processes it in blocks 1532 to 1540 to generate decrypted received data 1542.

According to an aspect of the invention, randomness inspector 1526 computes the randomness distance of any two serial or parallel data bit data streams at any time and at various locations in BPP 1500 to find out whether the encryption method has been compromised or disabled, such as by an adversary attack on the channel. In case of a security breach, BPP 1500 can alert the system to take appropriate security mitigation countermeasures. Randomness inspector 1526 can be implemented using existing resources in BPP 1500 or in a dedicated hardware and can be realized within the baseband processor chip or a separate dedicated chip.

As seen in **Figure 15,** the data stream for investigation can be the tapped from the input or output of blocks 1504, 1510 or 1512 to determine a problem or compromise in the encryption provided by that particular block (the location), and the severity and the type of an adversary attack. An encryption investigation can be applied on the whole band, a sub-band, a complete channel of the sub channels of the TDMA and FDMA, CDMA or spread spectrum systems.

In the case that the gNB or the UE is under attack and the cryptographic strength of an encryption method is compromised or the encryption module is bypassed, such an attack can be detected by connecting the input Six and output $S_{ox}$ of encryptor 1504 to the two of the inputs Six and $S_{ox}$ of randomness inspector 1526, respectively. The $S_{jx}$ input of randomness inspector 1526 may be tied to the data stream which is under investigation though memory 1522 and switch 1524. As discussed above, $|R_{GAIN}|$ values computed inside the randomness inspector 1526 determine the randomness distance between input and output data streams. The determined $|R_{GAIN}|$ and both the input Six and the output $S_{ox}$ can be used directly or stored in memory 1522 for a later use.

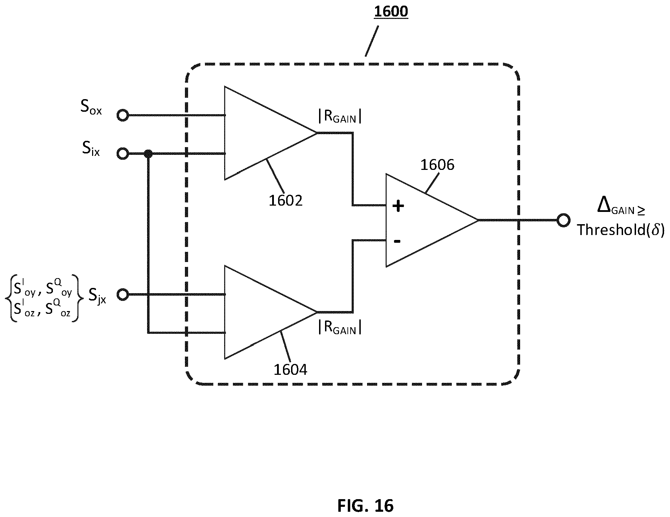

**Figure 16** depicts a functional block diagram of randomness inspector 1600, such as randomness inspector 1526 of **Figure 15,** having switchable inputs. The switchable inputs can be from, for example, any block in the transmit chain or any block in the receive chain of BPP 1500 shown in **Figure 15** (or BBP 200 of **Figure 2).** Randomness inspector 1600 includes two randomness comparators 1602 and 1604 and a difference calculator 1606 which calculates the difference ($\Delta$) in the $|R_{GAIN}|$ determined by each of the randomness comparators 1602 and 1604. If the difference ($\Delta$) in the two $|R_{GAIN}|$ values is less than a predetermined threshold ($\delta$), it is determined that the two data streams are very close in randomness space. In Figure 16, randomness comparator 1602 has inputs Six which is an input data stream before encryption and $S_{ox}$ which is an output data stream after encryption. Randomness comparator 1602 determines the randomness gain $|R_{GAIN}|$ between the Six and $S_{ox}$ data streams which is an indication of the strength of the encryption applied to Six to thereby result in $S_{ox}$. Randomness comparator 1604 has inputs Six which is the input data stream before encryption and $S_{jx}$ which is a data stream after a subsequent level of encryption at another block location in an encryption circuit, such as BPP 1500. Randomness comparator 1604 determines the randomness gain $|R_{GAIN}|$ between Six and $S_{jx}$ which is an indication of the strength of the subsequent level of encryption applied to thereby result in $S_{jx}$. As seen in **Figure 16,** data stream $S_{jx}$ may be selected, such as by a switch, from a variety of data streams in an encryption chain or circuit such as, for example, data streams $S^I_{oy}$, $S^Q_{oy}$, $S^I_{oz}$, and $S^Q_{oz}$, which represent output data streams from different locations in an encryption chain or circuit. In an aspect, randomness comparators 1602 and 1604 determine the randomness gain $|R_{GAIN}|$ by applying a randomness evaluator to each of the input data streams to the comparator as described above with respect to randomness evaluator 606 in **Figures 6 and 8.**

Returning to **Figure 15,** if encryptor 1504 is enabled, then $|R_{GAIN}|$ of randomness comparator 1602 inside the randomness inspector 1526 should correspond to a high randomness distance between the two data streams; otherwise, encryptor 1504 degrades to ILLUZIJA (a fake encryptor) and such a compromise is easily detected by randomness inspector 1526. An undetected ILLUZIJA attack could significantly reduce the cryptographic strength of cipher output data stream $S_{ox}$ and therefore lead to a security breach of the information in output data stream $S_{ox}$.

If encryptor 1504 is not disabled, there is still a possibility that serializer 1510 or modulator 1512 might have been the target of an attack to degrade the cryptographic strength of cipher output stream $S_{ox}$. In order to detect that blocks 1510 or 1512 are under attack, any suspected compromised data stream from the I or Q channel before or after modulation ($S^I_{oy}$, $S^Q_{oy}$ $S^I_{oz}$, and $S^Q_{oz}$) is fed to the $S_{jx}$ input of the randomness inspector 1526 along with the input data stream Six and the output data stream $S_{ox}$ of encryptor 1504 to their respective inputs $S_{ix}$ and $S_{ox}$ of randomness inspector 1526. The output of randomness inspector 1526 is a randomness distance measure ($\Delta$) between the reference stream ($S_{ix}$) and the data stream $S_{jx}$ under investigation ($S^I_{oy}$, $S^Q_{oy}$, $S^I_{oz}$, $S^Q_{oz}$). If the difference ($\Delta$) between the two data streams is more than a threshold ($\delta$), then it is determined that the block in the system under investigation is has been compromised. In such a compromised situation, the system controller may be enabled to take the appropriate steps to mitigate the adverse effects of the detected type of security attack or compromise.

According to certain above-described aspects and the accompanying figures, a randomness inspector is provided in an encryption circuit, such as a BPP for example, which can test data streams at different locations in the circuit to determine the encryption strength of one or more components of the encryption circuit, and also to thereby determine if one or more of the components is disabled or compromised.

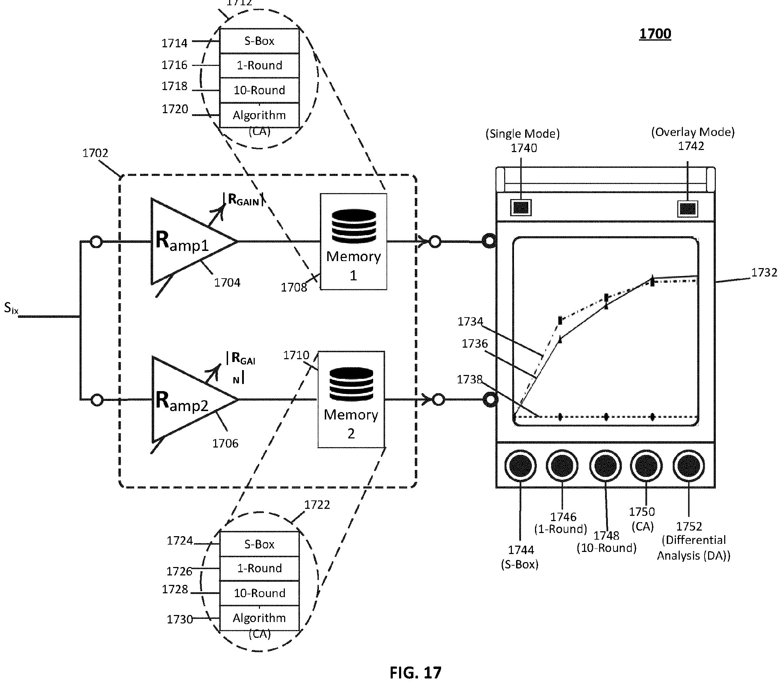

In another aspect, **Figure 17** is a block diagram of differential randomness comparator 1702 which benchmarks the $R_{GAIN}$ of an instance of one standard randomness amplifier 1704, such as an AES model, a MARS model (a known shared-key (symmetric) block cipher), or other known standard encryption or scrambling model instance of a randomness amplifier, against a second randomness amplifier 1706, such as a selectable or programmable encryption model instance of a randomness amplifier, thereby determining whether a pattern of differential behavior exists between standard randomness amplifier 1704 and selected/programmed randomness amplifier 1706, and also to thereby determine whether differential attacks are possible on either of randomness amplifiers 1704 and 1706. In this manner, selected/programmed randomness amplifier 1706 (which may apply an encryption model or algorithm under investigation or analysis) can be benchmarked against standard randomness amplifier 1704. Differential randomness comparator 1702 stores $R_{GAIN}$ values of S-box 1714, 1 Round 1716, n Rounds 1718 and Complete Method 1720 variants of Randomness Amplifier 1704 in Memory 1708, and similarly, Differential randomness comparator 1702 stores $R_{GAIN}$ values of S-box 1724, 1 Round 1726, n Rounds 1728 and Complete Method 1730 variants of Randomness Amplifier 1706 in Memory 1710. An apparatus Randomness Scope 1732 reads the plurality of randomness gain values of the different variants of the two compared randomness amplifiers from Memories 1708 and 1710, respectively, and then plots R-Curves (1734, 1736 and 1738) of the two benchmarked randomness amplifiers and ILLUIZJA (a fake encryptor) on its randomness distance screen (with a logarithm display). A designer or analyst of an encryption circuit can select between Single Mode 1740 and Overlay Mode 1742 to choose between seeing the R-Curve of only one randomness amplifier or a plurality of more than one R-Curves, respectively. The designer or analyst of an encryption circuit or system or method can also choose to benchmark S-box only, 1 Round only, n Rounds only or Complete Method variants of two randomness amplifiers by pressing S-box button 1744, 1 Round button 1746, n Rounds button 1748 or Complete Algorithm button 1750, respectively. If the randomness gain difference ($\Delta$) between the randomness gains of the two randomness amplifiers (for example, the first amplifier 1704 being coupled to an encryptor, and the second amplifier 1706 being coupled to an encryptor) is more than a threshold ($\delta$), then it is determined that one or more of the encryptor circuits or systems or algorithms are in a compromised state and may be vulnerable and susceptible to differential attacks that eventually may be exploited by adversaries. R-Curves 1734, 1736 and 1738 represent the results of three different randomness amplifiers, respectively, where 1738 is an R-Curve of ILLUZIJA. R-Curves 1734 and 1736 on Randomness Scope 1732 show that both randomness amplifiers 1704 and 1706 are vulnerable to differential analysis attacks once their randomness gains are analyzed using this unique and novel process of Deep Cipher Investigation (DCI). In such a state of compromise, encryption circuit designers could be enabled to take appropriate steps to mitigate the adverse effects of this type of security problem with the encryptor associated with each compromised randomness amplifier.

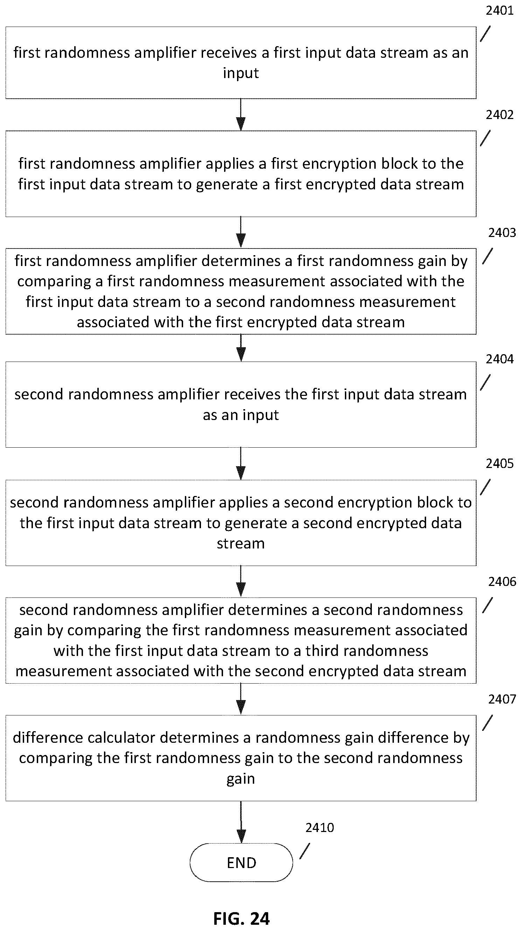

**Figure 24** is a flowchart depicting a process for a differential randomness comparator according to an aspect. For example, the differential randomness comparator can determine a randomness gain difference between a first randomness gain associated with a first randomness amplifier and a second randomness gain associated with a second randomness amplifier. As seen in **Figure 24,** the process begins at step 2401 in which a first randomness amplifier receives a first input data stream as an input. In step 2402, the first randomness amplifier applies a first encryption block to the first input data stream to generate a first encrypted data stream. Next, in step 2403, the first randomness amplifier determines a first randomness gain by comparing a first randomness measurement associated with the first input data stream to a second randomness measurement associated with the first encrypted data stream. The process then proceeds to step 2404 in which a second randomness amplifier receives a first input data stream as an input. In step 2405, the second randomness amplifier applies a second encryption block to the first input data stream to generate a second encrypted data stream. Next, in step 2406, the second randomness amplifier determines a second randomness gain by comparing the first randomness measurement associated with the first input data stream to a third randomness measurement associated with the second encrypted data stream. In step 2407, a difference calculator determines a randomness gain difference by comparing the first randomness gain to the second randomness gain. The process then ends at step 2410.

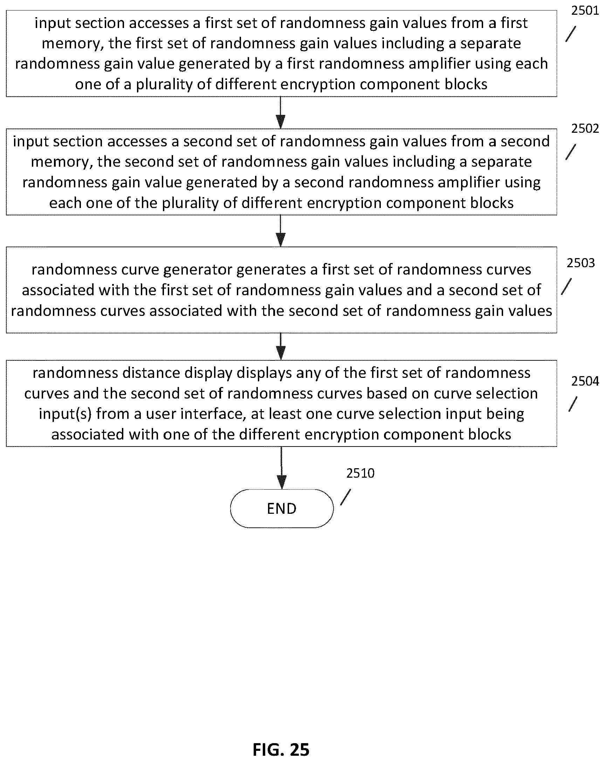

**Figure 25** is a flowchart depicting a process for a randomness scope according to an aspect. For example, the randomness scope can compare a first set of randomness gain values associated with a first randomness amplifier to a second set of randomness gain values associated with a second randomness amplifier. As seen in **Figure 25,** the process begins at step 2501 in which an input section accesses the first set of randomness gain values from a first memory, the first set of randomness gain values including a separate randomness gain value generated by the first randomness amplifier using each one of a plurality of different encryption component blocks. Next, in step 2502, the input section accesses the second set of randomness gain values from a second memory, the second set of randomness gain values including a separate randomness gain value generated by the second randomness amplifier using each one of the plurality of different encryption component blocks. In step 2503, a randomness curve generator generates a first set of randomness curves associated with the first set of randomness gain values and a second set of randomness curves associated with the second set of randomness gain values. In step 2504, a randomness distance display is used to display any of the first set of randomness curves and any of the first set of randomness curves based on one or more randomness curve selection inputs from a user interface, wherein at least one randomness curve selection input is associated with one of the plurality of different encryption component blocks. The process then ends at step 2510.

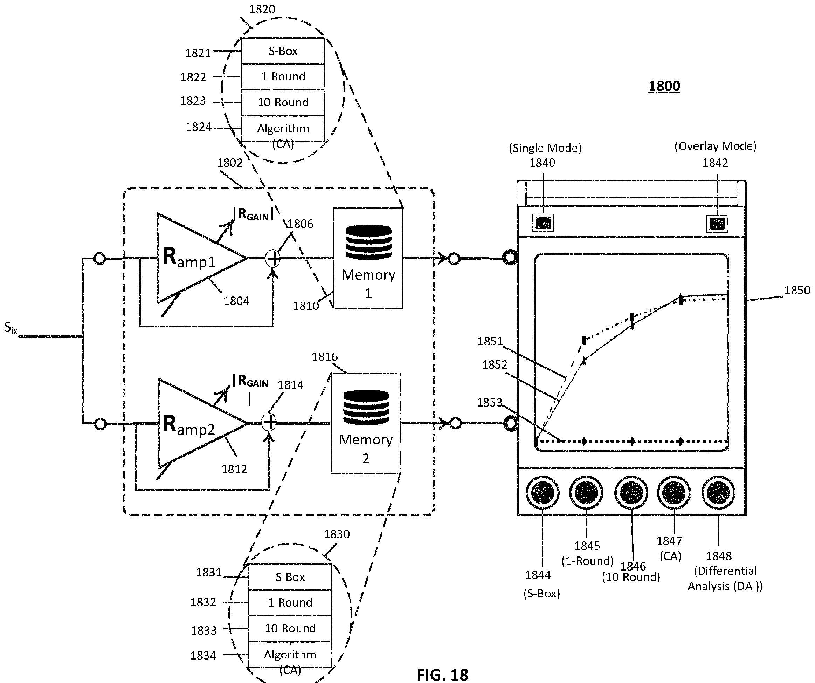

**Figure 18** is top-level diagram of a differential randomness comparator with two randomness amplifiers in which correlated artifacts are subtracted from the output stream. As seen in **Figure 18,** a differential randomness comparator 1802 is provided which benchmarks the $R_{GAIN}$ of an instance of one standard randomness amplifier 1804, such as an AES model, a MARS model (a known shared-key (symmetric) block cipher), or other known standard encryption or scrambling model instance of a randomness amplifier, against a second randomness amplifier 1812, such as a selectable or programmable encryption model instance of a randomness amplifier, thereby determining whether a pattern of differential behavior exists between randomness amplifier 1804 and selected/programmed randomness amplifier 1812, and also to thereby determine whether differential attacks are possible on either of randomness amplifiers 1804 and 1812. In this manner, selected/programmed randomness amplifier 1812 (which may apply an encryption model or method under investigation or analysis) can be benchmarked against standard randomness amplifier 1804. In differential randomness comparator 1802, correlated artifacts are subtracted from the output streams of randomness amplifier 1804 and randomness amplifier 1812 at junctions 1806 and 1814, respectively. Differential randomness comparator 1802 stores $R_{GAIN}$ values of S-box 1821, 1 Round 1822, n Rounds 1823 and Complete Method 1824 variants of Randomness Amplifier 1804 in Memory 1810, and similarly, Differential randomness comparator 1802 stores $R_{GAIN}$ values of S-box 1831, 1 Round 1832, n Rounds 1833 and Complete Method 1834 variants of Randomness Amplifier 1812 in Memory 1816. Randomness Scope 1850 reads the plurality of randomness gain values of the different variants of the two compared randomness amplifiers from Memories 1810 and 1816, respectively, and then plots R-Curves (1851, 1852 and 1853) of the two benchmarked randomness amplifiers and ILLUIZJA (a fake encryptor) on its randomness distance screen. A designer or analyst of an encryption circuit can select between Single Mode 1840 and Overlay Mode 1842 to choose between seeing the R-Curve of only one randomness amplifier or a plurality of more than one R-Curves, respectively. The designer or analyst of an encryption circuit or system or method can choose to benchmark S-box only, 1 Round only, n Rounds only or Complete Method variants of two randomness amplifiers by pressing S-box button 1844, 1 Round button 1845, n Rounds button 1846 or Complete Method button 1847, respectively. If the (Δ) between the randomness gains of the two randomness amplifiers (for example, the first amplifier 1804 being coupled to an encryptor, and the second amplifier 1812 being coupled to an encryptor) is more than a threshold (δ), then it is determined that one or more of the encryptor circuits or systems or algorithms are susceptible to differential attacks that eventually may be exploited by adversaries. R-Curves 1851, 1852 and 1853 represent the results of three different randomness amplifiers, respectively, where 1853 is an R-Curve of ILLUZIJA. R-Curves 1851 and 1852 on Randomness Scope 1850 show that both randomness amplifiers 1804 and 1812 are vulnerable to differential analysis attacks once their randomness gains are analyzed using the process invention of Deep Cipher Investigation (DCI). In such a state of compromise, encryption circuit designers could be enabled to take appropriate steps to mitigate the adverse effects of this type of security problem with the encryptor associated with each randomness compromised amplifier.

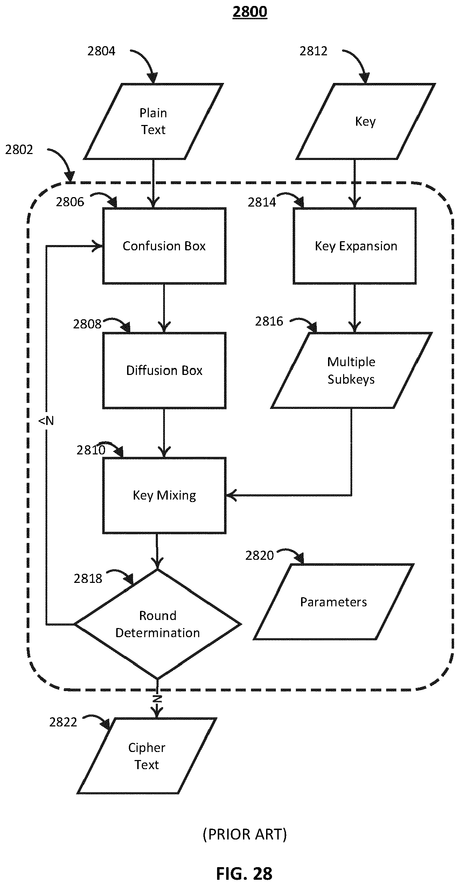

Turning to another aspect, a system and method for evolving encryption is provided. **Figure 28** shows a flow diagram 2800 of a known encryption algorithm 2802 such as AES. Encryption algorithm 2802 has Parameters 2820 such as the number of rounds, or times the input data is cycled through the algorithm before it is output as cipher text.

Key 2812 is the encryption key that is shared between the sender and the receiver. Typically, the large (i.e., the more bits) the encryption key used, the more difficult an encryption algorithm is to break. Popular key lengths are 128, 192, and 256 bits but they can be easily enhanced if more computing power is available.

Key 2812 is transformed by Key Expansion 2814 into Multiple Subkeys 2816. When transforming Key 2812 into Multiple Subkeys 2816, Key Expansion 2814 allows confusion to be added to the keys as well as to the data. For instance, in AES the transformation of Key 2812 into Multiple Subkeys 2816 includes byte-swapping, byte-combining, and application of a nonlinear function. It is common to produce a separate subkey for each of the N rounds of the encryption algorithm. It is also common to produce an additional key to be applied to Plain Text 2804 in a process called key whitening before other transformations have been applied to Plain Text 2804.

Plain text 2804 is the input data to be encrypted. While it is common to use the term "text" or "plain text", one skilled in the art would understand that plain text 2804 could be any digital data. For instance, plain text 2804 could be communications protocol messages, digital documents, banking information, photos or images, videos, music, sensor data, text, a satellite's control and data packets, etc.

Plain text 2804 is transformed by Confusion box 2806. Confusion box 2806 is a nonlinear component that adds confusion to its outputs by performing a non-linear transformation on its inputs in what is commonly called a substitution box or S-box. Well know S-boxes include, but are not limited to those of well-known encryption algorithms including but not limited to Camellia, AES, Clefia, SMS, Skipjack, MARS, Blowfish, Twofish, Serpent, and Lucifer etc. Confusion box 2806 may be comprised of a single S-box (for example AES) or may be multiple smaller S-boxes operating in parallel (for example Twofish). For instance, in AES, Plain text 2804 is 128 bits representing 16 8-bit bytes, each of which is transformed by an identical S-box in the confusion box layer of AES. In some algorithms, a confusion box is used as a nonlinear component to design a mangling function for each round. In some encryption algorithms, such as IDEA, a mangling function does not explicitly use an S-box; rather, it uses a combination of primitive operations like XOR to achieve confusion.

The output of Confusion box 2806 is transformed by Diffusion box 2808. Diffusion box 2808 adds randomness to its outputs by performing a linear transformation on its inputs. This linear transformation may include logic such as shift and rotation, etc. This transformation may occur at the bit or the byte level. For instance, the diffusion box in AES shifts rows and columns in a 4x4 byte array of data handed to it by the confusion box layer. Sometimes, a mangling function is designed in such a way that uses cascades of confusion and diffusion boxes to design 1-round of an encryption algorithm.

The output of Diffusion box 2808 is transformed by Key Mixing 2810 using a subkey from Multiple subkeys 2816. For instance, the subkey may be XORed with the output of Diffusion box 2808. Additionally, while not shown in Figure 28, Key Mixing 2810 may also be applied to the original Plain Text 2804 in a process called key whitening before other transformations have been applied to Plain Text 2804.

At step 2818 Round Determination, if the current round is less than the Nth time the algorithm has cycled the transformed Plain text 2804, the output of Key Mixing 2810 is used as the input of Confusion box 2806 and encryption algorithm 2802 goes through another round of transforming the data. If at Round Determination 2818, the current round is the Nth round, the output of Key Mixing 2810 is output from encryption algorithm 302 as Cypher text 2822.

As can be seen from the performance of the AES encryption engine, encryption algorithm 2802 can be very secure even if its design is published, as long as well performing component transformations are used and Key 2812 is kept secure. However, if an attacker obtains Key 2812, the security is eliminated and may stay compromised for a long time until the user or system detects this breach and then changes it. However, assuming an insider threat scenario, a person skilled in the art could understand that even the new key could also be easily compromised by an adversary by using his original method or some of its adapted versions or by exploiting insider threats.

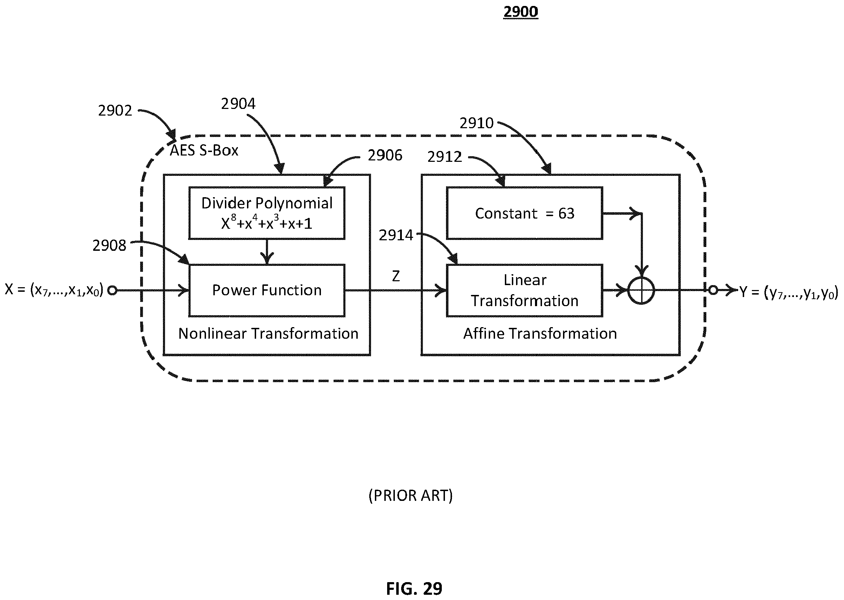

**Figure 29** shows the detailed structure of an S-Box 2902 for AES, that may be used as an embodiment of Confusion Box 2806 of **Figure** 28. AES S-Box 2902 accepts 8-bit bytes $X=(x_7,...,x_1,x_0)$ of clear text and outputs 8-bit

bytes $Y=(y_7,...,y_1,y_0)$ of cipher text. It is considered to be an 16x16 S-box because it may be implemented as a substitution table which uses the upper 4 bits (16 possible values) and the lower 4 bits (16 possible values) to index into a 16x16 substitution table (256 possible values) to obtain the one-to-one mapping of the input byte to the output byte (256 possible values). To create the substitution table or to perform the transformation in real-time, the AES S-box 2902 has two main stages that transform the data. First, Nonlinear Transformation 2904 creates the multiplicative inverse, Z, of the input byte X. Since there is a need to have the output have the same number of bits as the input, Z is the multiplicative inverse in the Galois Field $GF(2^8)$ as would be known to one skilled in the art of finite field mathematics. This is accomplished by applying the Divider Polynomial 2906 in Power Function 2908. For AES, Divider Polynomial 2906 is the irreducible polynomial $x^8+x^4+x^3+x+1$.

The second stage of AES S-Box 2902 is Affine Transformation 2910. Affine transformation 2910 is comprised of Linear Transformation 2914 and Constant Addition 2912. In AES, the constant provided in Constant Addition 2912 is 63 and is added in Galois Field $GF(2^8)$ which is simply a bitwise XOR operation. This stage can be denoted as $A(z)=L(z)+63$ where $L(z)$ is shown in equation (1) below.

$$\text{Eq(1): } L(z) = \begin{bmatrix} 1 & 0 & 0 & 0 & 1 & 1 & 1 & 1 \\ 1 & 1 & 0 & 0 & 0 & 1 & 1 & 1 \\ 1 & 1 & 1 & 0 & 0 & 0 & 1 & 1 \\ 1 & 1 & 1 & 1 & 0 & 0 & 0 & 1 \\ 1 & 1 & 1 & 1 & 1 & 0 & 0 & 0 \\ 0 & 1 & 1 & 1 & 1 & 1 & 0 & 0 \\ 0 & 0 & 1 & 1 & 1 & 1 & 1 & 0 \\ 0 & 0 & 0 & 1 & 1 & 1 & 1 & 1 \end{bmatrix} \begin{bmatrix} Z_0 \\ Z_1 \\ Z_2 \\ Z_3 \\ Z_4 \\ Z_5 \\ Z_6 \\ Z_7 \end{bmatrix}$$

Equation 1

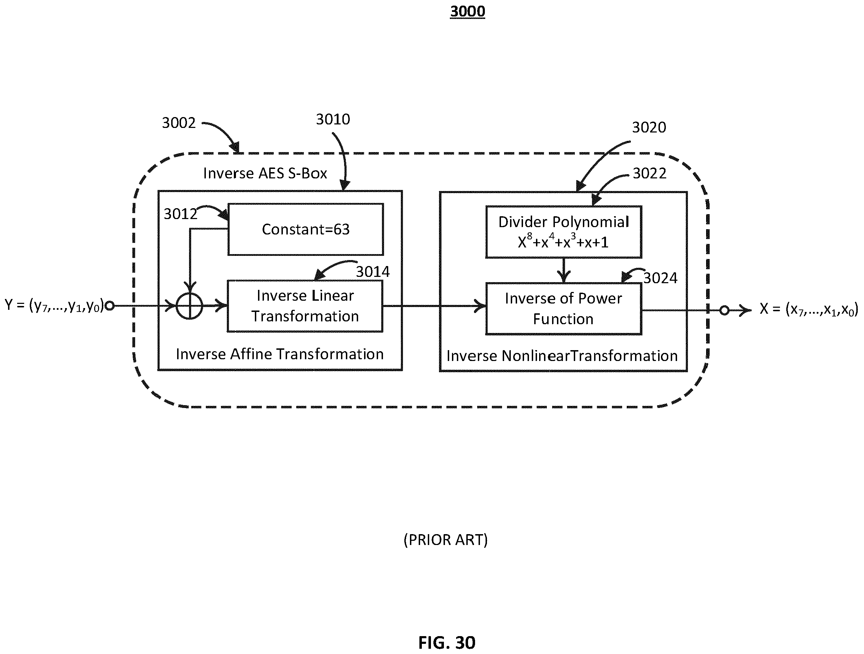

Figure 30 shows the inverse S-Box 3002 of AES S-Box 2902 of Figure 29. During the decryption operation, it reverses the non-linear substitutions done by S-Box 2902. One skilled in the art could easily determine the Inverse Affine Transformation 3010 and Inverse Non-linear transformation 3020 are reversing the operations of Affine Transformation 2910 and Non-linear transformation 2904, respectively.

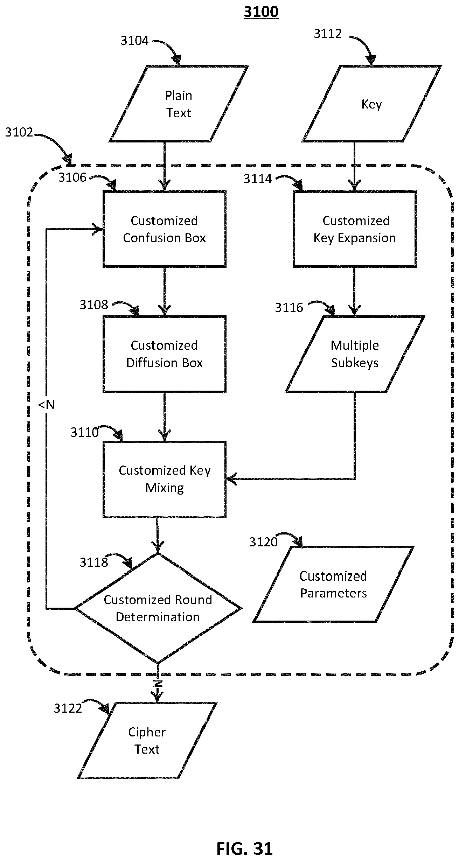

**Figure 31** shows the flow 3100 of an evolutionary encryption method 3102, according to aspects of the invention, for use in a system that still maintains the security even after the encryption key has been compromised. It may also be used in a system that retains security even though the encryption key has been compromised. At least one of parameters 3120 or a transformation (3106, 3108, 3110, 3114, 3116, 3118) may be modified from time to time in encryption algorithm 3102 to reduce an attacker's awareness of the structure and operation of encryption algorithm 3102, adding security in the behavior dimension independent of the key 3112. Modifications may be event based, for instance, at the start of a new communication session, periodic, every so many milliseconds, or based on a counter of every so many bytes of data passed.

Key 3112 is the encryption key that is shared between the sender and the receiver. The attributes and exchange methods would be the same as described above for Key 2812 of **Figure** 28. Key 3112 is transformed by Customized Key Expansion 3114 into Multiple Subkeys 3116. Customized Key Expansion 3114 may be modified from one usage to the next, for instance, by modifying the number of Multiple Subkeys 3116 generated in support of changing the number of rounds parameter. Customized Key Expansion 3114 may be modified by changing the byte-swapping, the byte-combining, and the application of other linear and nonlinear transformations to the Key 3112.

Plain text 3104 is the input data to be encrypted and can be any digital data as was described for Plain text 2804 of **Figure** 28. Plain text 3104 is transformed by Customized Confusion box 3106. Customized Confusion box 3106 adds confusion to its outputs by performing a non-linear transformation on its inputs, for instance in what is commonly called a substitution box or S-box. Customized Confusion box 3106 may use one of the same well know S-boxes described for Confusion box 2806 of **Figure** 28. Customized Confusion box 3106 may be modified from one usage to the next or from one round to the next, for instance, by changing which S-box is used for the transformation in a round or changing the parameters of the S-box currently in use.

The output of Customized Confusion box 3106 is transformed by Customized Diffusion box 3108. Customized Diffusion box 3108 adds randomness to its outputs by performing a linear transformation on its inputs. This linear transformation may include logic such as shift or rotation or a combination of both. The transformation may occur at the bit or the byte level. The logic of the linear transformation or the parameters governing its operation may be modified from one usage to the next or from one round to the next.

The output of Customized Diffusion box 3108 is transformed by Customized Key Mixing 3110 using a subkey from Multiple Subkeys 3116. Customized Key Mixing 3110 may be modified from one usage to the next by, for instance, rotating a subkey before XORing it with the data.

At Customized Round Determination 3118, if the current round is less than the Nth time the algorithm has cycled the transformed Plain text 3104, the output of Customized Key Mixing 3110 is used as the input of Customized Confusion box 3106 and evolutionary encryption algorithm 3102 goes through another round of transforming the data. If at Customized Round Determination 3118, the current round is the Nth round, the output of Customized Key Mixing 3110 is output from evolutionary encryption algorithm 3102 as Cypher text 3122.

In an aspect, only one parameter 3120 may be modifiable. Also, in an aspect only one transformation 3106, 3108, 3110, 3114, or 3116 may be modifiable. In another aspect, at least one parameter 3120 and at least one transformation 3106, 3108, 3110, 3114, or 3116 may be modifiable.

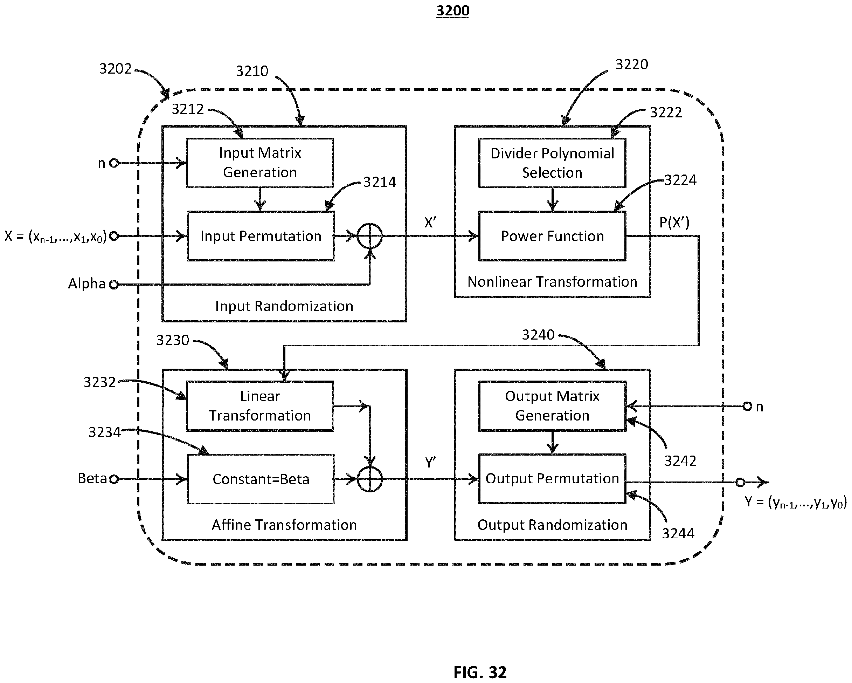

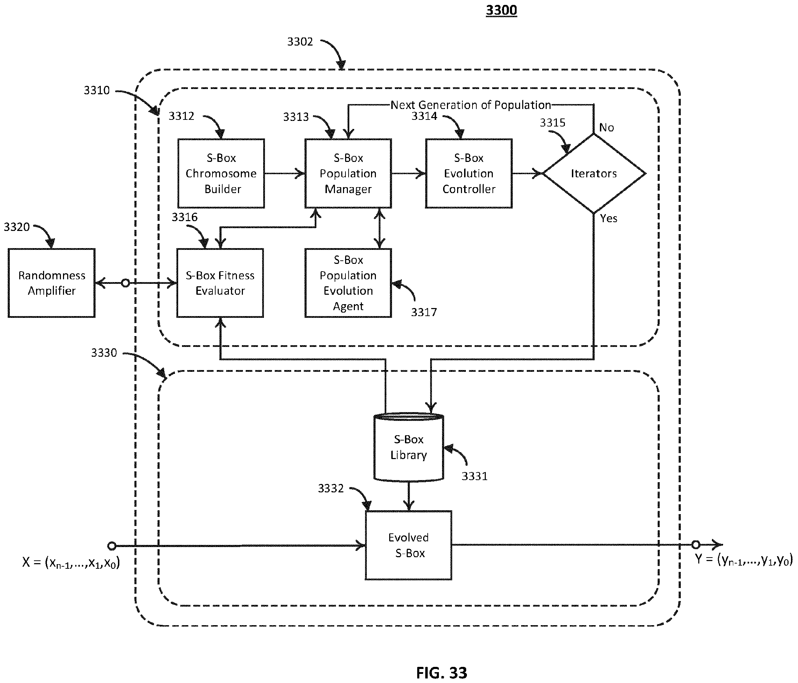

Customizable S-box in Customized Confusion box 3106 can be generated using Controlled Evolution, as depicted in embodiment 3202 of **Figure 32,** or through Genetic-Evolution as depicted in embodiment 3302 of **Figure** 33.

**Figure 32** shows an example 3202 of a Customizable S-box, such as Customized Confusion box 3106 of **Figure 31,** according to an aspect. The example 3202 shows both input text (or clear text) X and output text (or cipher text) Y having n-bits, or a byte, of text. One skilled in the art would understand that if n=8, Customed Confusion Box 3106 of **Figure 31** could replace an AES S-Box. One skilled in the art would understand that other values for n are possible to replace confusion boxes (S-boxes) in other encryption algorithms.

In the embodiment shown, Customizable S-Box 3202 is comprised of up to 4 stages that may transform the input text X into the substituted output text Y. In this embodiment calculations are performed in a finite field. In optional Input Randomization 3210 input text X is transformed into an intermediate result X'. This transformation happens by performing Input Matrix Generation 3212 and applying the resultant input matrix on X in Input Permutation 3214. The input matrix produced by Input Matrix Generation 3212 may be, for example, a nxn upper or lower triangular matrix comprised of 1's and 0's. Such a matrix is invertible and its application in Input Permutation 3214 performs a linear transformation. A person skilled in the art understands that applying a linear transformation keeps the cryptographic properties of an S-Box intact. Let M be the set of all nxn upper or lower triangular matrices. For n=8, there are |M| = 229 different matrices that can, therefore, be chosen from. Adding the constant Alpha, a number between 0 and $2^8$-1, through a bitwise XOR operation further randomizes the input clear text X and multiplies by $2^8$ the possibly number of S-boxes produced.

Ifn=8 and the divider polynomial is the irreducible polynomial $x^8+x^4+x^3+x+1$, then Nonlinear Transformation 3220 is identical to Nonlinear Transformation 2904 of Figure 29 of Confusion Box 2806 (AES S-Box) of **Figure** 28. However, if optional Input Randomization 3210 is performed, it is applied to different data. Additionally, a different divider polynomial may be chosen by Divider Polynomial Selection 3222 for use by Power Function 3224, producing intermediate result P(X'). In particular, a polynomial from the subset of irreducible polynomials that are also primitive polynomials of the finite field may be chosen. Let R be the set of all primitive polynomials of degree n. For n = 8, |R| = 16, the following Table 1 lists all primitive polynomials available to be divider polynomials for n=8.

Table 1

| Hexadecimal Representation | Primitive Polynomial |
|---|---|
| 0x11D | $x^8+x^4+x^3+x^2+1$ |
| 0x12B | $x^8+x^5+x^3+x+1$ |
| 0x12D | $x^8+x^5+x^3+x^2+1$ |
| Oxl4D | $x^8+x^6+x^3+x^2+1$ |
| 0x15F | $x^8+x^6+x^4+x^3+x^2+x+1$ |
| 0x163 | $x^8+x^6+x^5+x+1$ |
| 0x165 | $x^8+x^6+x^5+x^2+1$ |
| 0x169 | $x^8+x^6+x^5+x^3+1$ |
| 0x171 | $x^8+x^6+x^5+x^4+1$ |
| 0x187 | $x^8+x^7+x^2+x+1$ |
| 0x1A9 | $x^8+x^7+x^5+x^3+1$ |
| 0x1CF | $x^8+x^7+x^6+x^3+x^2+x+1$ |
| 0x1E7 | $x^8+x^7+x^6+x^5+x^2+x+1$ |

(continued)

| Hexadecimal Representation | Primitive Polynomial |
|---|---|
| OxlF5 | $x^8+x^7+x^6+x^5+x^4+x^2+1$ |

One skilled in the art would understand that irreducible polynomials that are not primitive polynomials may also be used as the divider polynomial for the finite field.

If n = 8, Constant 3224 = Beta = 63, and Linear Transformation 3232 = L(z) from Equation 1 above then Affine Transformation 3230 is the same as the Affine Transformation 2910 (Figure 29) of Confusion Box 2806 (AES S-Box) of Figure 28. However, in Customizable S-Box 3202 of Figure 32, the Constant 3234 may be replaced during any round with a different constant Beta where Beta satisfies:

$$\text{Equation 2: Beta} \in \{0,\ldots,2^{\wedge}n\text{-}1\}$$

One skilled in the art would understand that the Linear Transformation 3232 in Affine Transformation 3230 may also be changed.

The output of Affine Transformation 3230 is denoted by Y'.

In optional Output Randomization 3240 intermediate result Y' is transformed into the output ciphertext Y. If optional Output Randomization 3240 is not implemented, ciphertext Y equals the output Y' of Affine Transformation 3230. The transformation of intermediate result Y' into output cipher text Y occurs by performing Output Matrix Generation 3242 and applying the resultant output matrix on Y' in Output Permutation 3244. The output matrix produced by Output Matrix Generation 3242 may be, for example, an nxn upper or lower triangular matrix comprised of 1's and 0's. Such a matrix is invertible and its application in Output Permutation 3244 performs a linear transformation.

The binary n*n upper triangular matrix used by Customizable S-Box 3202 can be generated by fixing the value of the diagonal bits to 1, to 0 when $i < j$ and randomly choosing the value when $i > j$, where $i,j$ are the row and column indices, respectively. Therefore, the number of unique n*n upper triangular matrix is $|M| = 2^{\frac{n*(n-1)}{2}}$. Likewise, the binary n*n lower triangular matrix used by Customizable S-Box 3202 can be generated by fixing the value of the diagonal bits to 1, to 0 when $i > j$ and randomly choosing the value when $i < j$, where $i,j$ are the row and column indices, respectively. Therefore, the number of unique n*n lower triangular matrix is $|M| = 2^{\frac{n*(n-1)}{2}}$.

The total number of unique input matrices created by Input Matrix Generation 3212, depend on input n and Alpha. For n-bits number of unique upper/lower triangular matrices is $|M| = 2^{\frac{n*(n-1)}{2}+1}$, for n=8, $|M| = 2^{29}$; while Alpha has $2^n$ possible values. Thus, an embodiment of Input Matrix Generation 3212 can generate $2^{\frac{n*(n-1)}{2}+1} * 2^n$ possible permutations. For n=8, the number of unique permutations is $2^{29} * 2^8$.

In an embodiment, Divider Polynomial Selection 3222 takes a divisor polynomial as input. For n=8, there are $|R| = 16$ different possible divisor polynomials as listed above. Thus, the embodiment of Divider Polynomial Selection 3222 can map input X', to a further $|R| = 2^4$ different possible values.

Similar to Input Matrix Generation 3212, Output Randomization 3240 can create $|M| = 2^{\frac{n*(n-1)}{2}+1} * 2^n$, unique permutations. For n=8, the number of unique permutations is $2^{29} * 2^8$.

Therefore, the total number of unique S-Boxes generated by Customizable S-Box 3202 is $2^{29} * 2^8 * 2^4 * 2^{29} * 2^8 = 2^{78}$.

When Customized Confusion Box 3106 of Figure 31 is expanded as Customizable S-Box 3202, the Customized Parameters 3120, may consist of n the number of input bits, Alpha, Beta, and a divider polynomial.

In an aspect, Customized Confusion Box 3106 of Figure 31 can also be expanded as an Evolutionary S-Box 3302 as shown in Figure 33, by encoding it in a chromosome as defined in S-Box chromosome builder 3312. The embodiment shows both input text X and output text Y having n-bits. One skilled in the art would understand that if n=8, Genetic Evolutionary S-Box 3302 may replace an AES S-Box.

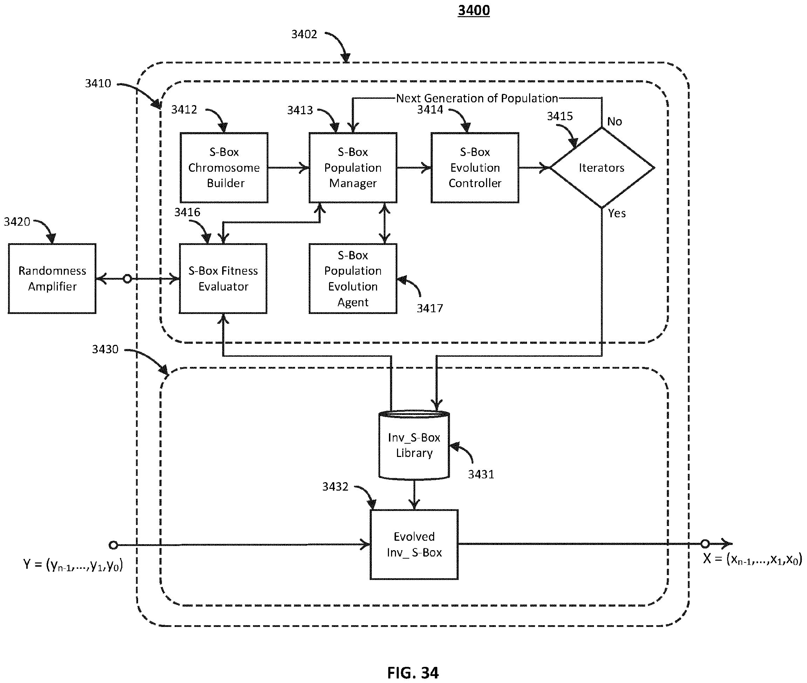

S-Box Population Manager 3313 creates first generation of S-Box population either randomly in case of pure evolutionary mode or through guided evolution, where a few S-Boxes of an S-Box population are created through mathematical models (for example those presented in Figure 32). The population is then processed by Population Evolution Agent 3317 that applies evolutionary operators of selection, mutation and crossover and then provides the evolved generation to S-Box Population Manager 3313 that in turn utilizes S-Box Fitness Evaluator 3316 to assign fitness to each S-Box in the evolved population. S-Box Fitness Evaluator 3316 utilizes Randomness Amplifier 3320 to evaluate fitness of S-boxes. The descriptions provided above for various aspects of a randomness amplifier can be used as Randomness Amplifier 3320. S-Box Population Manager 3313 creates all S-box individuals of a population and passes them to S-Box Evolution Controller 3314. The evolved population, with an assigned fitness measure to each S-Box, is passed to S-Box Evolution Controller 3314 that determines whether the average fitness of the evolved population is above a threshold value and the number of evolutionary iterations 3315 are above a predefined minimum iterator threshold. If yes, then the evolutionary process is terminated, otherwise it requests S-Box Population Manager 3313 to generate the next population of S-Boxes by applying evolutionary operators on the current population of S-Boxes. Moreover, S-box Evolution Controller 3314 also identifies elite S-boxes in the population and stores them in S-Box Library 3331 to quickly bootstrap the evolutionary process in the future. Similarly, as depicted in Figure 34, the inverse of these S-boxes are also stored as a pair <S-Box, Inv_S-Box> in the S-Box Library 3331 or a separate inverse Inv_S-Box Library 3431 (Figure 34). The inverse S-boxes are needed to inverse the operations of an S-box during the substitution process of decryption.

In an aspect, Evolved S-Box 3332 is an S-Box with high fitness from S-Box Library 3331 and may transform input text into the substituted output text. In order to maintain a high throughput, the functions of 3330 could be implemented in real-time in hardware or kernel of an encryption processor; while the genetic evolution process and functions of 3310 could be allowed to run offline (or when the encryption processor is idle) for efficiency concerns and the high fitness S-Boxes may be stored in S-Box library 3331.

In an aspect, Inverse S-Box 3432 of Figure 34 is an S-Box with high fitness from S-Box Library 3331 (Figure 33) or from a separate inverse Inv_S-Box Library 3431 (Figure 34) and may reverse the transformation of substituted output text Y and produce cleat text X. In order to maintain a high throughput, the functions of 3430 in Figure 34 could be implemented in real-time in hardware or kernel of an encryption processor; while the genetic evolution process and functions of 3410 could be allowed to run offline (or when the encryption processor is idle) for efficiency concerns and the inverse S-boxes corresponding to high fitness S-Boxes may be stored in S-Box library 3331 (Figure 33) or a separate inverse Inv_S-Box Library 3431 (Figure 34) as the case may be.

S-Box Population Manager 3413 can create S-Box population either randomly or by inducting some high fitness S-Boxes of known strength. The high fitness S-Boxes can be generated through Customizable S-Box 3202 of Figure 32.

These can also be generated by swapping few rows of high fitness S-Boxes. For instance, for n=8, *let i* and *j* be two independent integer-valued random 8-bit bytes of input text that satisfy Equation 3 below.

$$\text{Equation 3:} \, i, j \in \{0, \dots, 2^8 - 1\}, i \neq j.$$

Whenever the input text is *i* or j, the transformation of Customized Confusion Box 3106 of Figure 31 equates to swapping the results of the AES S-box when the input text is *i or j*. This results in a conditional permutation in Input Randomization 4004. If Sc(X) denotes customized confusion box (or S-box) 3106 operating on input text X, and $S_{AES}(X)$ denotes the AES S-box operating on the input X, the S-Box swapping is described by Equation 4 below.

$$\text{Equation 4:} \quad \begin{aligned} S_C(X) &= S_{AES}(X), X \neq i, X \neq j \\ S_C(i) &= S_{AES}(j) \\ S_C(j) &= S_{AES}(i) \end{aligned}$$

One skilled in the art would understand that more than two input text or input bytes could be swapped.

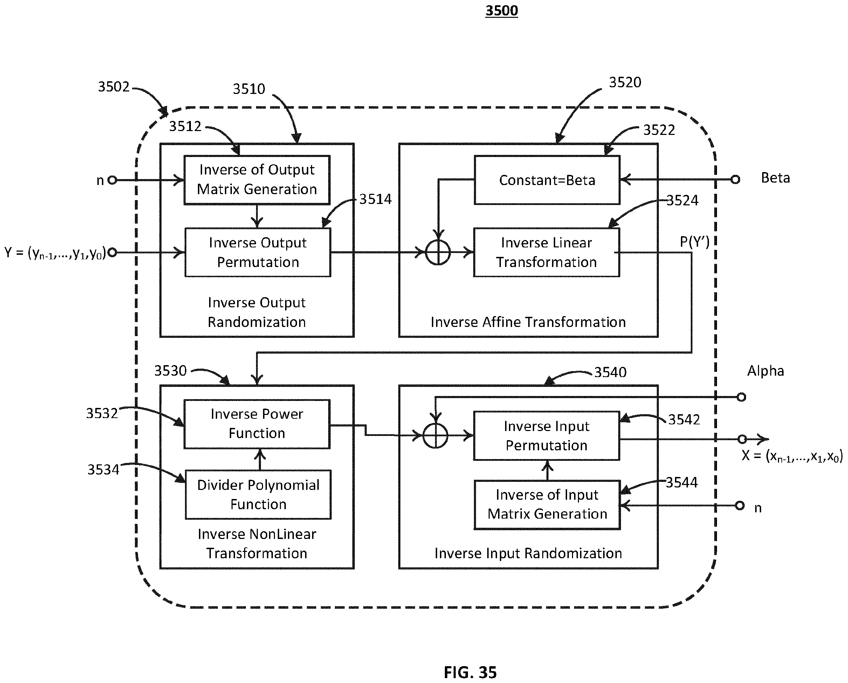

**Figure 35** is an aspect of a Customized Inverse S-Box 3502 that reverses the substitutions and operations of Customized S-Box 3202 of Figure 32. More specifically, as seen in Figure 35, Inverse Output Randomization 3510, Inverse Affine Transformation 3520, Inverse Non-linear Transformation 3530, and Inverse Input Randomization 3540 reverses the operations of Output Randomization 3240, Affine Transformation 3230, Non-linear Transformation 3220, and Input Randomization 3210 of Figure 32, respectively.

One skilled in the art would know that there are other encryption algorithms with other structures and other parameters that may be modified to add security in the behavior dimension, as described above, and to complement the security provided by the encryption key or to compensate for weakness in key exchange security or when the encryption key is compromised.

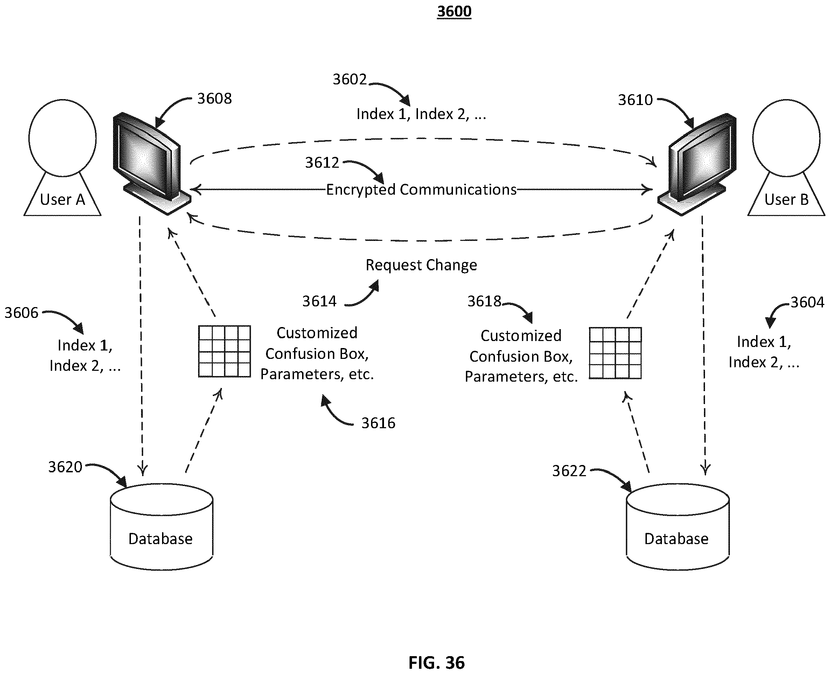

**Figures 36,** 37, **38 and 39** show different levels of information that may be exchanged between users or end point user terminals or systems to customize the cryptography algorithm.

In **Figure 36,** User A and User B communicate via devices 3608 and 3610, respectively. Control data is shown with dashed line while user data is shown with solid lines. Devices 3608 and 3610 may be personal computers, smartphones, terminals connected to mainframe computers. The combination of a user and a device may be representative of a logically user-less device such as an IoT sensor or a satellite mesh. One skilled in the art would understand that devises 3608 and 3610 could be any devices that communicate using Encrypted Communications 3612.

At a point in time device 3610 requests a change 3614 in the encryption algorithm. This may be a change of one or more parameters, a change of one or more customized components of the algorithm, or both. The change may be prompted by the start of a new Encrypted Communications session 3612, it may be prompted by a timer, or it may be prompted by an event such as the exchange of a certain number of messages or bytes of data. One skilled in the art would understand that there could be many more prompts.

In an embodiment, device 3608 responds by communicating to device 3610 one or more exchanged indices 3602 into a database of cryptography algorithm change information. One skilled in the art would understand that the exchanged indices 3602 could have been embedded in request for change 3614 made by device 3610, in which case device 3610 would preferably send an acknowledgement. One skilled in the art would understand that the change my be driven by device 3608 rather than requested by device 3610. One skilled in the art would understand that in an embodiment the timing of the change, what to change, and how to change it may be triggered by information, such as a time of day, known to both device 3608 and device 3610. In such an embodiment, control messages 3602 (indices) and 3614 (request for change) need not be exchanged.

Device 3608 uses a copy 3606 of the exchanged indices 3602 to index into a copy of a database 3620 of cryptography algorithm change information to retrieve a copy of cryptography algorithm changes 3616 which may include one or more parameters, a change of one or more customized components of the algorithm, or both. Device 3610 uses a copy 3604 of the exchanged indices 3602 to index into a copy of a database 3622 of cryptography algorithm change information to retrieve a copy of cryptography algorithm changes 3618 which may include one or more parameters, a change of one or more customized components of the algorithm, or both. Device 3608 uses the copy of cryptography algorithm changes 3616 to change how it encrypts and decrypts Encrypted Communications 3612. Similarly, Device 3610 uses the copy of cryptography algorithm changes 3618 to change how it encrypts and decrypts Encrypted Communications 3612.

Changing the encryption algorithms and parameters makes Encrypted Communications 3612 more robust against attackers because the database acts as an additional set of shared secrets that add protection if the key is compromised.

One skilled in the art would understand that databases 3620 and 3622 may be local or accessed over a network. Databases 3620 and 3622 may be the same database. Databases 3620 and 3622 may be stored on hard drives, read-only memory, internal RAM or any other form known to one skilled in the art.

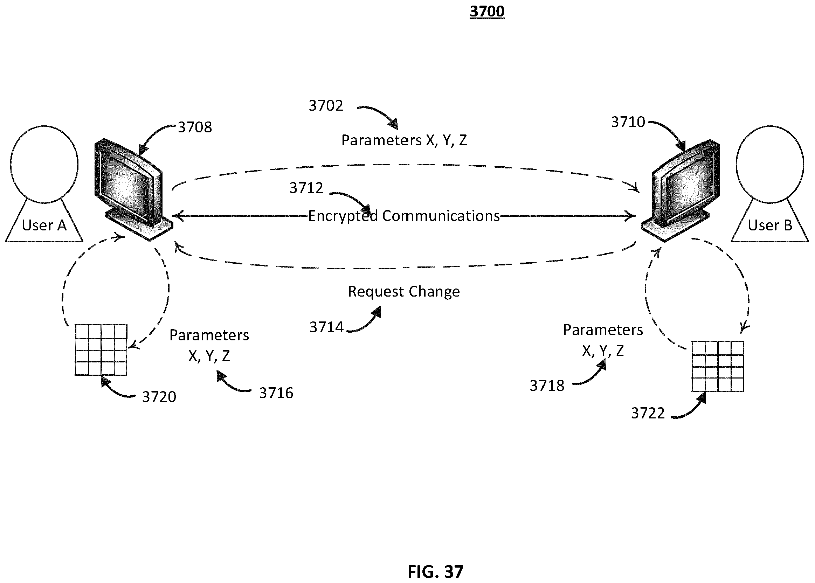

**Figure** 37 shows another aspect of information that may be exchanged between users or end point user terminals or systems to customize the cryptography algorithm. The aspect shown in **Figure** 37 is similar to that of **Figure 36** except that device 3708 responds to the request for change 3714 with the parameters to be changed 3702 rather than with indices into a database. In the aspect of **Figure** 37, device 3708 uses a copy of the parameters 3716 to modify its implementation of the cryptography algorithms 3720 and device 3710 uses a copy of the parameters 3718 to modify its implementation of the cryptography algorithms 3722.

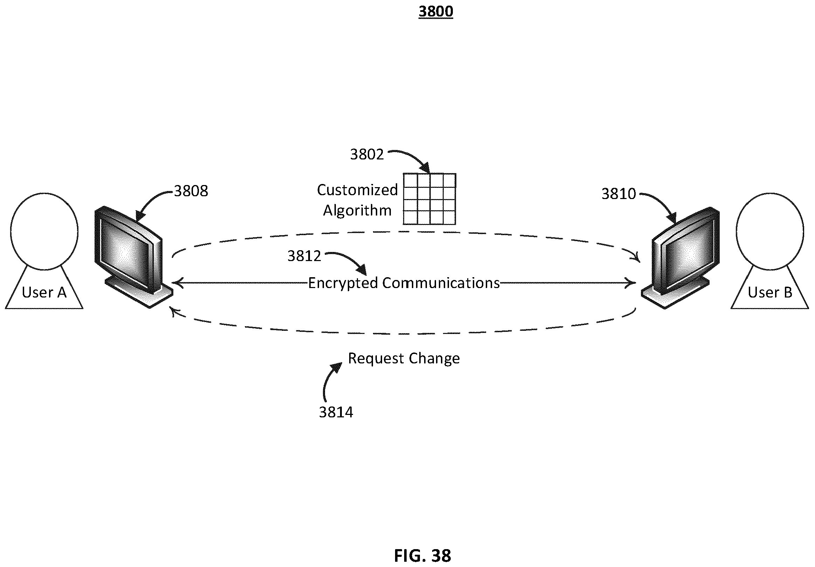

One skilled in the art would understand that in addition to changing individual parameters, instead or in addition, the logic for the cryptography algorithm itself can be changed. With respect to **Figure 36** this was performed by indicating different components such as a different Confusion box via a database index. With respect to **Figure** 37 this was performed by indicating different components such as a different Confusion box via a parameter. In an aspect shown in **Figure 38,** device 3808 and device 3810 communicate via encrypted communications 3812. At some point in time, prompted as described above, device 3810 requests a change 3814 to the cryptography algorithm. In response, device 3806 responds with customized algorithm 3802. Customized algorithm 3802 may be a pluggable version of the software for the customized cryptography algorithm along with necessary parameters. For example, it may be binary executable code, source code to be compiled, source code to be interpreted, or other forms known to one skilled in the art.

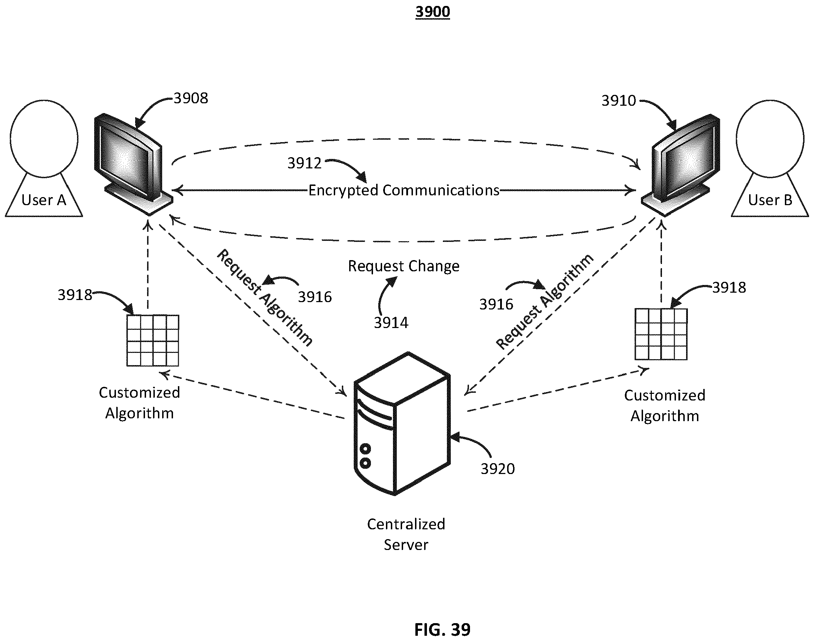

In an aspect shown in **Figure 39,** device 3908 and device 3910 communicate via Encrypted Communications 3912. At some point in time, prompted as described above, device 3910 requests a change 3914 to the cryptography algorithm. In response, device 3908 and device 3910 send coordinated algorithm requests 3916 to centralized cryptography algorithm server 3920 which responds to each with customized algorithm 3918. Customized algorithm 3918 may be a pluggable version of the software for the customized cryptography algorithm along with necessary parameters. For example, it may be binary executable code, source code to be compiled, source code to be interpreted, or other forms known to one skilled in the art.

In an aspect, Evolving Cryptography is an embodiment of cryptographic apparatus, methods, and systems that can evolve or adapt their structure or behavior (or both) either offline or dynamically in real time during information scrambling operations or information encryption operations. The system evolution can be guided either by specific user requirements (herein referred to as "User Defined Encryption"), or it could be made autonomous by employing Evolutionary Computing or similar computational intelligence techniques. Consequently, the structure or behavior of an encryption system (herein called "Encryptor") can be modified from one invocation of Encryptor to another or during the same invocation if desired by a user. A user or the autonomous system controls the frequency of evolution by choosing between two modes: (1) temporal or (2) spatial. In the Temporal mode, a user can choose to invoke evolution after every T amount of time where T could be in seconds, mins, hours, days, months or even years. In the case of the Spatial mode, however, a user can decide to invoke evolution after D data bits have been transmitted where D could be Bits, Bytes, Mega Bytes or the number of sessions or the number of packets.

In an aspect, a primary goal of Evolving Cryptography is to iteratively apply the process of evolution to all submodules mentioned in **Figure 28** that include but are not limited to Confusion Box, Diffusion Box, 1-Round, N-Rounds and Key Scheduling. The process of evolution, mentioned in the above, is leveraged to invent an S-box Apparatus, shown in **Figure 32,** of an Encryptor that evolves the Confusion Box module in a controlled fashion to generate a large population of mutants (mutations) of AES S-box i.e., $2^{78}$ S-boxes that have the same strength as that of the original AES S-Box. It means that if a user decides to apply evolution by selecting a different mutant after every minute of communication, approximately more than half a billion years would have to have been passed before the user is forced to repeat a mutant. Consequently, one can conclude that even if an adversary is able to know the private key of a communication session, he may not be able to decrypt the message successfully because he has to also crack the mutant identity of an S-box that was used by an Encryptor during the session. It means the user needs to try on average $2^{78}$ S-boxes if the user wants to apply the brute force technique.

One skilled in the art would understand that the time required to determine the exact identity of a S-box mutant is significantly higher compared with the time to guess a key because the adversary has to replace an AES S-box with the new S-box and then compile (or at least link) the code and then execute. This is unlike trying random keys where no such difficulty exists. But if a user decides to change S-box mutant in each round, and assuming 10 rounds, the difficulty to crack 10 mutants of an AES S-box, one used in each of the 10 rounds, is $2^{780}$ and this might require an amount of time that is manyfold as that of the life of the universe even when the most powerful supercomputers are at the disposal of an adversary. This is, however, important to emphasize that this security has been added in another dimension, referred to as the behavioral dimension, and it is not mutually exclusive with the techniques that require changing the private key periodically at chosen intervals by invoking key exchange algorithms or enhancing the private key lengths. For example, if the private key is unknown and the AES 256 uses the "Evolving S-Box" apparatus of **Figure 32,** then this algorithm provides $2^{(780+256)}$ security. A person skilled in the art would understand if AES 128 is equipped with the Evolving S-Box apparatus of **Figure 32,** one can get $2^{(780+128)}$ security level at a fraction of the processing power required to run a computationally heavy AES 256 and that only provides $2^{256}$ security. Consequently, the evolving apparatus not only provides the additional security in a different dimension but also in an energy efficient manner that is lightweight. As a result, this Evolving S-Box apparatus and method is ideally suited for power constrained cellular, wireless, mobile devices, and satellites.

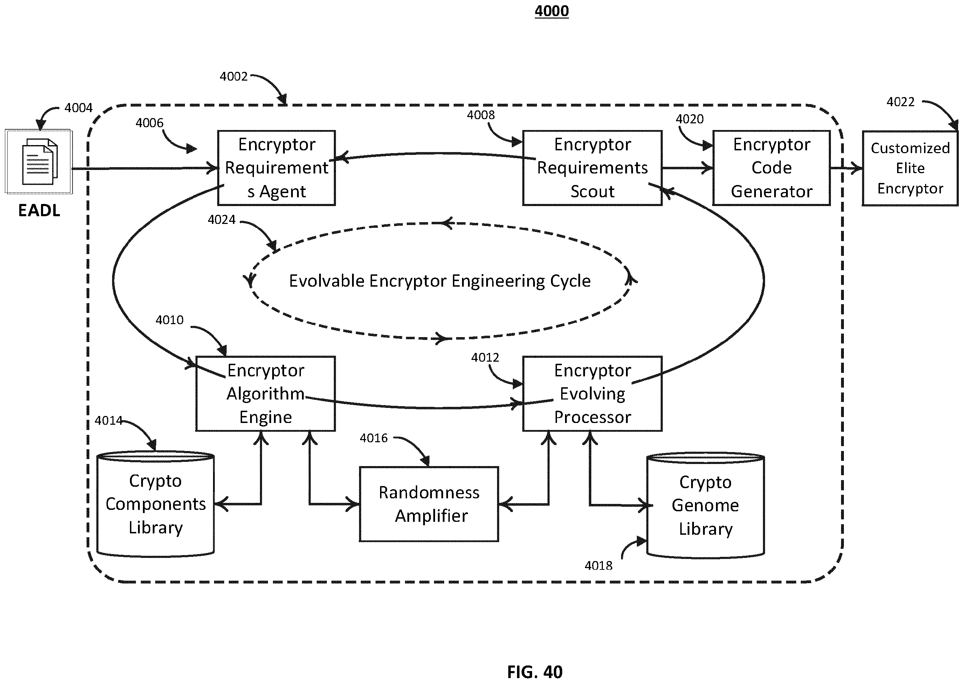

The Evolving S-box apparatus 3402 of **Figure 34** is only one incarnation of Encryptor Evolving Processor 4012 of Evolving Encryptor Plant 4002 in **Figure** 40. The Evolving Encryptor Plant 4002 is a method and apparatus that implements the complete process of generating a customized User Defined Encryption System according to the user specified requirements. EADL 4004 is a program or script written in Encryption Algorithm Description language that is a meta language to describe an encryption algorithm along with the user requirements. A user may like to specify preferred design options for confusion box, diffusion box, mangling function, and key scheduling modules of an Encryptor in an EADL file. A sample description and one sample incarnation of EADL 4004 is shown in **Table** 2 (below) for AES. EADL description is given as an input to Encryptor Requirements Agent 4006. Encryptor Requirements Agent 4006 parses an EADL file and applies a requirement engineering process to generate requirements for different modules composing an encryption apparatus. For example, it may put constraints either on the structure of a confusion S-Box i.e., the number of rows and columns or its strength, such as in terms of non-linearity etc.

```
<Algorithm name="Evolving Encryptor Algorithm">
    <Module name='CustomizedKeyExpansion'>
        <IF case="KeyExpansionMethod=UserDefined">
        <!--Custom KeyExpansion will be defined here-->
        </IF>
        <IF case="KeyExpansion=AES-KeyExpansion or Already Defined In Crypto Components Library">
            CryptoComponentsLibrary.KeyExpansion()
        </IF>

    </Module>
    [$ foreach my $i (1..n_Rounds) $]
        <Round name='i'>

        <Module name='Costumized Confusion Box'>
            <IF case="DiffusionBox=UserDefined">
                <!--Custom DiffusionBox will be defined here-->
            </IF>
            <IF case="DiffusionBox=AES-DiffusionBox or Already Defined In Crypto Components Library">
                CryptoComponentsLibrary.DiffusionBox()
            </IF>

        </Module>


        <Module name='CustomizedDiffusionBox'>
            <IF case="DiffusionBox=UserDefined">
            <!--Custom DiffusionBox will be defined here-->
            </IF>
            <IF case="DiffusionBox=AES-DiffusionBox or Already Defined In Crypto Components Library">
                CryptoComponentsLibrary.DiffusionBox()
            </IF>

        </Module>



        <Module name='CustomizedKeyMixing'>
            <IF case="KeyMixing=UserDefined">
            <!--Custom KeyMixing will be defined here-->
            </IF>
            <IF case="DiffusionBox=AES-DiffusionBox or Already Defined In Crypto Components Library">
                CryptoComponentsLibrary.KeyMixing()
            </IF>

        </Module>
        </Round>
        [$ endforeach $]
</Algorithm>
```

Table 2

The requirements are then passed to Encryptor Algorithm Engine 4010. Encryptor Algorithm Engine 4010 searches in Crypto Components Library 4014 to identify template modules - confusion box, diffusion box, mangling function, and key scheduling -- that may satisfy the user specified requirements. However, if a user has provided design preferences for any or all of the above-mentioned modules then Encryptor Algorithm Engine 4010 generates templates for them and stores them into Crypto Components Library 4014. The other important function of Encryptor Algorithm Engine 4010 is to measure the Randomness strength of different components of an Encryption System by applying Randomness Amplifier 4016. If some components do not meet the threshold for Randomness strength, then their templates are purged from Crypto Components Library 4014; as a consequence, only the components with a Randomness strength above a threshold are stored in Crypto Components Library 4014. Encryptor Algorithm Engine 4010 finalizes the design options of different modules of an Encryptor. The preliminary design is then passed to Encryptor Evolving Processor 4012.

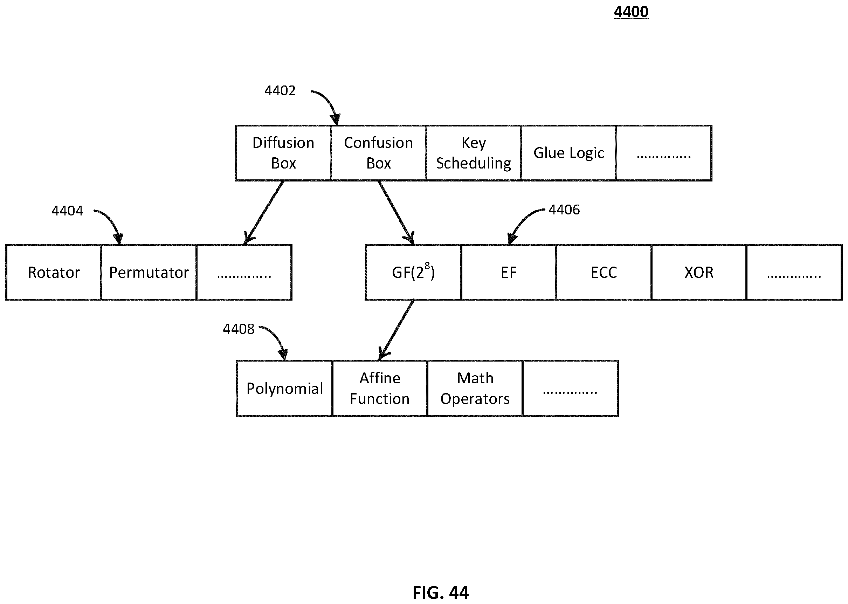

Encryptor Evolving Processor 4012 translates the preliminary design into an Encryptor Chromosome as shown below in **Figure** 44. It also generates the first population of Encryptors and then either applies controlled evolution process - rooted in well-defined mathematical models like that of **Figure 32** - or pure evolutionary processes (rooted in evolutionary algorithms consisting of crossover, mutation, or selection operators) depending on the user's requirements. After each step of evolution, a new population of Encryptors is produced. The fitness, depicting Randomness strength of an Encryptor, is computed by apparatus Randomness Amplifier 4016. The Encryptors, having a fitness above a threshold, are stored in Crypto Genome Library 4018 for quickly bootstrapping the evolution process in future iterations. Once the desired generations of Encryptors have been evolved, then Encryptor Evolving Processor 4012 passes a population of Elite Encryptors to Encryptor Requirements Scout 4008. Encryptor Requirements Scout 4008 validates whether one or more encryptors among the population of Elite Encryptors, produced by Encryptor Evolving Processor 4012, have met requirements set by a user. If not, then it again requests Encryptor Requirements Agent 4006 to start the second round of Evolvable Encryptor Engineering Cycle 4024 by analyzing the randomness strength of Elite Encryptors produced in the current iteration by Encryptor Evolving Processor 4012. The Evolving Encryptor Plant 4002 may keep on iterating over Evolvable Encryptor Engineering Cycle 4024 until an Elite Encryptor or set of Elite Encryptors, meeting the user requirements, is generated or a predefined number of iterations are completed. In the latter case, an elite encryptor with the highest fitness value is selected. At this point, the Evolving Encryptor Plant 4002 terminates the Evolvable Encryptor Engineering Cycle 4024 and provides the template of an elite encryptor to Encryptor Code Generator 4020. Encryptor Code Generator 4020 may generate the source code of the Customized Elite Encryptor (or Encryptors) 4022 in a user specified language like C++, C, or j ava, etc.

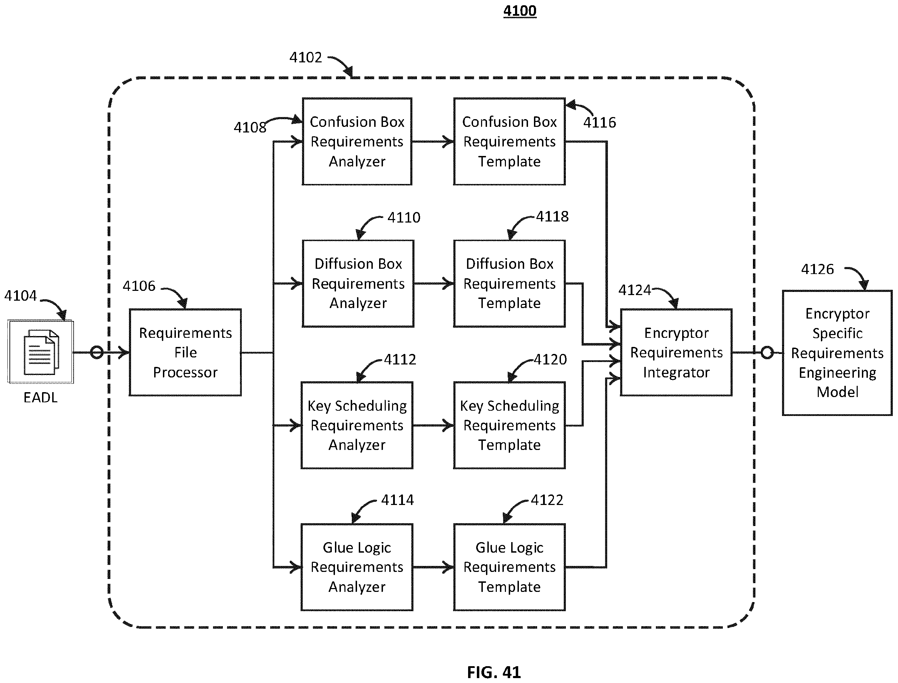

The apparatus and method of Encryptor Requirements Agent 4006 is shown in further detail in **Figure 41.** Requirements File Processor 4106 parses an EADL file 4104 and separates the tags for different modules of an Encryptor. Requirements File Processor 4106 provides Confusion Box Requirements Analyzer 4108 all parameters of evolution, design options for building Encryptor chromosomes and generates requirements to identify known confusion box templates corresponding to the requirements in Crypto Components Library 4014 of **Figure 40.** If a user has specified innovative base level design template, then he must also provide an abstract description in EADL from which a Confusion Box Requirements Template 4116 is generated if one does not exist in Crypto Components Library 4014. Similarly, Diffusion Box Requirements Analyzer 4110 and Key Scheduling Requirements Analyzer 4112 analyze requirements for Diffusion box and Key Scheduler modules and generate requirement templates to search for well-known designs in Crypto Components Library 4014 for these modules; otherwise, the user has to specify his innovative design for Diffusion Box and Key Scheduler in EADL and Diffusion Box Requirements Template 4118 and Key Scheduling Requirements Template 4120 will then generate template requirements for these designs. Finally, Encryptor Requirements Integrator 4124 integrates requirements of different modules of an Encryptor corresponding to the description in EADL 4104. Once the process is complete, Encryptor Requirements Agent 4006 of **Figure 40** builds a EADL specified Encryptor Specific Requirements Engineering Model 4126 for the customized encryptor that a user wants to design and build. Encryptor Specific Requirements Engineering Model 4126 should also contain Glue Logic Requirements Template 4122 extracted by Glue Logic Requirements Analyzer 4114.

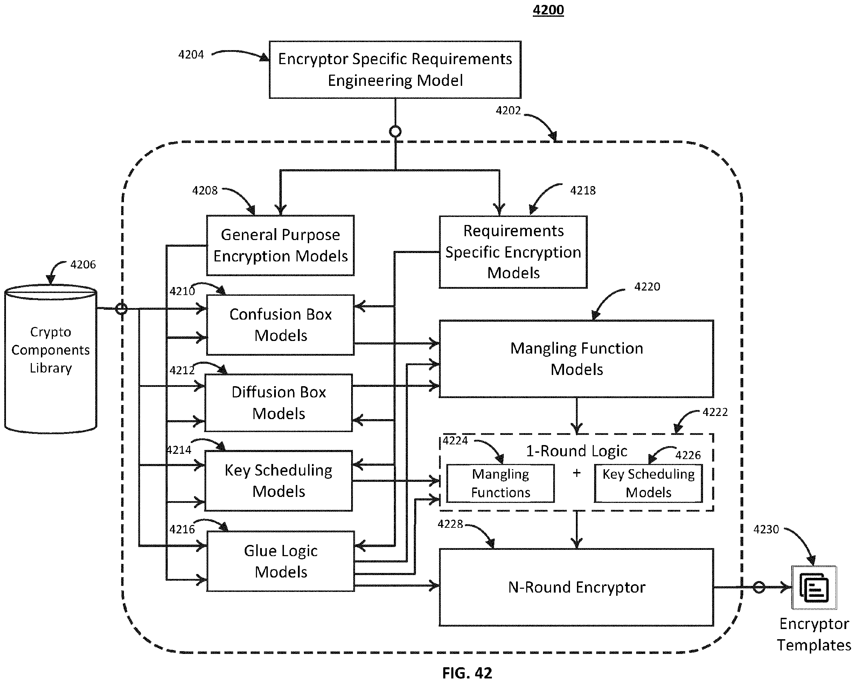

Encryptor Algorithm Engine 4010 of **Figure 40** is shown in more detail in functional diagram 4200 of **Figure** 42. It takes Encryptor Specific Requirements Engineering Model 4204 generated by Encryptor Requirements Agent 4006 of **Figure** 40. The major task of Encryptor Algorithm Engine 4010 is to identify well-known General Purpose Encryption Models 4208 for a specified Encryptor in Crypto Components Library 4206 that may meet the design requirements of an Encryptor as specified by a user. Consequently, it retrieves the most suitable one of Confusion Box Models 4210, Diffusion Box Models 4212, Key Scheduling Models 4214, and Glue Logic Models 4216. If these models need to be adapted or refined according to Requirements Specific Encryption Models 4218, then it uses the requirement specific templates provided by a user to refine general purpose models. Afterwards, suitable Mangling Function Models 4220 are generated by combining Confusion Box Model 4210 and Diffusion Box Model 4212. Subsequently, the Mangling Function Model 4220 composed of Confusion Box Model 4210 and Diffusion Box Model 4212 is wrapped with the Glue Logic Model 4216 and combined with the Key Scheduling Model 4226 to have a 1-Round template 4222 of an Encryptor. Finally, either the same 1-Round logic is iterated over the N rounds to have N-Round Encryptor 4228 or if the user has specified that 1-Round Model 4222 should have minor changes according to the round number, then N-Round Encryptor 4228 is generated by incorporating those minor modifications in different rounds. Finally, the Encryptor Template 4230 is passed to Encryptor Evolving Processor 4012 of Figure 40.

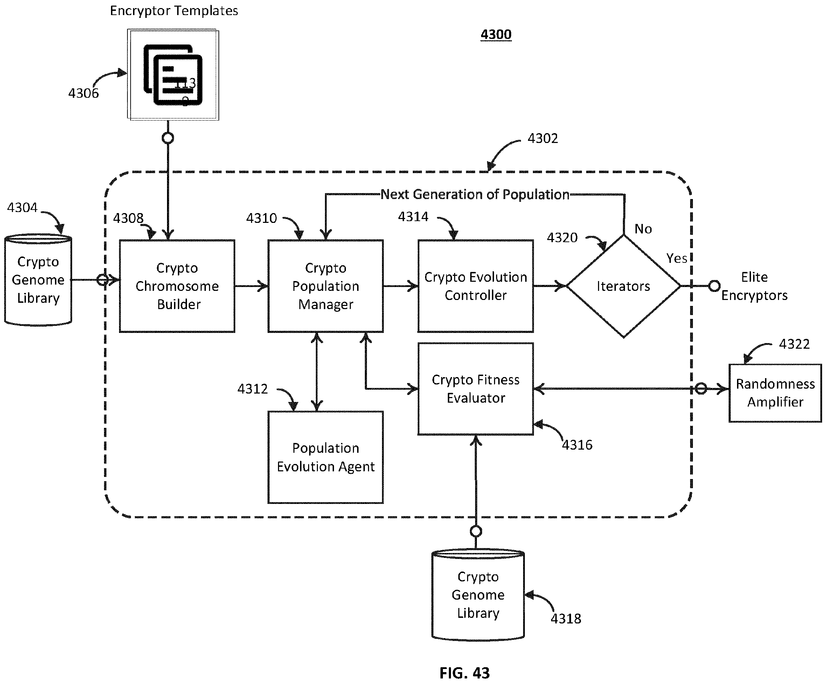

**Figure 43** is a top-level diagram of an Encryptor Evolving Processor (such as Encryptor Evolving Processor 4012 of **Figure 40)** according to aspects of the invention. As seen in **Figure 43,** an Encryptor Template 4306, for instance Encryptor Template 4230 created by Encryptor Algorithm Engine 4202 of **Figure 42** (or 4010 of **Figure 40),** is provided to Crypto Chromosome Builder 4308 of Encryptor Evolving Processor 4302. Crypto Chromosome Builder 4308 uses the template and looks for relevant crypto components in the Crypto Genome Library 4304 that might be used as parameters of evolution and user specified models. Crypto Chromosome Builder 4308 builds Encryptor chromosome by analyzing encryptor templates 4306 that are produced by Encryptor Algorithm Engine 4202 after analyzing user specified requirements in Encryptor Specific Requirements Engineering Model 4204 of **Figure** 42. Once the Encryptor's chromosome is created and relevant crypto components are identified, then Crypto Population Manager 4310 creates first generation of Encryptor population either randomly in case of evolutionary mode or by applying mathematical models in case of controlled evolution mode. The population is then processed by Population Evolution Agent 4312 that applies evolutionary operators of selection, mutation, and crossover in case of evolutionary mode and then provides the evolved generation to Crypto Population Manager 4310 that in turn utilizes Crypto Fitness Evaluator 4316 to assign a fitness value to each Encryptor in the Evolved population. Crypto Fitness Evaluator 4316 takes help from Randomness Amplifier 4322. The chromosomes that have good fitness are stored in Crypto Genome Library 4318 to quickly bootstrap the evolutionary process in future. The evolved population with assigned fitness measure to each Encryptor is then passed to Crypto Evolution Controller 4314 that determines whether the average fitness of the evolved population is above a threshold value and the number of iterations are below an iterator threshold value of 4320. If yes, then the evolutionary process is terminated, otherwise it requests Crypto Population Manager 4310 to generate the next population of Encryptors by applying evolutionary operators on the current population of encryptors. In case of controlled evolution, further iterations are not needed as all Encryptors are above a threshold value. Once the predefined number of iterations are done or the desired fitness level of Encryptor population is achieved in Iterators 4320 then certain percentage of highest fitness Encryptors are marked as Elite Encryptors and they are passed to Encryptor Requirements Scout 4008 of **Figure 40.** The Encryptor Requirements Scout 4008 validates whether one or more Encryptors among the population of Elite Encryptors, produced by Encryptor Evolving Processor 4012 of **Figure 40,** has met requirements set by a user. If yes, the best elite encryptor is passed to Encryptor Code Generator 4020 of **Figure 40** to generate its final code in a targeted language like C, C++, java, or any other user specified high level language. Otherwise, the next round of Evolvable Encryptor Engineering Cycle 4024 of **Figure 40** starts to find desired elite encryptor or set of elite encryptors.

**Figure 44** shows one incarnation of a meta encryptor chromosome 4402 which is composed of component chromosomes like Diffusion Box, Confusion Box etc. Chromosome 4404 and 4406 consists of sub chromosomes that provide different structures and methods to create Diffusion or Confusion Box. Chromosome 4408 is the chromosome that shows how a Confusion Box could be created using Galois Field mathematical model. In this way an Encryptor is viewed as consisting of a hierarchy of component chromosomes and as we traverse the depth of the three, the chromosome options get more specific until a leaf node with a specific option is reached; this leaf node may be called gene. An example of a chromosome hierarchy for a Controlled Evolution Mode is shown below in Table 3A, and an example of a chromosome hierarchy for a Genetic Evolutionary Mode is shown below in Table 3B.

```
<Module name = 'Costumized Confusion Box' >
              <SubModule name = 'Customizable S-box' >
              <Arguments>(InputByte x, OutputByte Y, Alpha a, Beta b, sizeofMatrix n)
                   </Arguments>


              <behaviour name = 'MatrixGeneration' >
                 <Arguments> (Inputbits n, output A) </Arguments>
                     A=0
                     <!--A is a matrix of size nxn -->
                     I = IdentityMatrix(n)
                     [$ foreach my $i (1 .. n) $]
                        j = RandomNumber (1, n)
                        A[i] = I[j]
                     [$ endforeach $]
              </behaviour>
              <behaviour name = 'Permutation Matrix'>
                     <Arguments> (Inputbits n, output S1) </Arguments>
                        Inverse=0
                        [$ foreach my $i (1 .. 2^n) $]
                              Inv[i] = MultiplicativeInverse(i)
                              <!-- Multiplicative Inverse of i in GF(2^8) where
                              Irreducible Polynomial is x^8 + x^4 + x^3 + x+1-->
                        [$ endforeach $]
                        [$ foreach my $i (1 .. 2^n) $]
                              S[i] = AffineTransformation(Inv[i])
                        [$ endforeach $]
                        A=MatrixGeneration(n)
                        S1=S*A
              </behaviour>


              <behaviour name = 'InputRandomization'>
                 <Arguments>(InputByte x, OutputByte x', Alpha a, sizeofMatrix
                 n)</Arguments>
                        A = MatrixGeneration(n)
                        S = PermutationMatrix(x,A)
                        x' = a(xor)S
              </behaviour>


              <behaviour name = 'NonlinearTransformation'>
                     <Arguments>(InputByte x', OutputByte p(x'))</Arguments>
                        P=DividerPolynomialSelection()
                        P(x' )=PowerFunction(x', p)
                        <! --Power function is just the calculation of Multiplicative
                        Inverse-->
              </behaviour>
```

```
<behaviour name = 'PowerFunction'>
    <!--Power Function calculates the inverse of Input byte using
    Expended Euclidean Algorithm-->
    <Arguments>(InputByte r0, PrimitivePolynomial r1, Inverse
        t)</Arguments>
    r[0] = r0
    r[1] = r1
    s[0] = 1
    t[0] = 0
    s[1] = 0
    t[1] = 1
    i = 1
    j = 10
    [$ foreach my $i (1 . . j) $]
        <IF case = "ri=0">
            i = j
        </IF>
        <IF case = "r1!=0">
            j = j+1
        </IF>
        i = i+1
        r[i] = r[i-2](mod)r[i-1]
        q[i-1] = (r[i-2] – r[i]) / r[i-1]
        s[i] = s[i-2] – q[i-1]*t[i-1]
    [$ endforeach $)
    gcd(r0, r1) = r[i-1]
    s = s[i-1]
    t = t[i-1]
    Inverse = t
</behaviour>

<behaviour name = 'Affine Transformation'>
<Arguments>(InputByte p(x'), InputConstant = b, OutputByte = Y')
 </Arguments>
    l = LinearTransformation (P(x'))
    Y' = b(xor)l
</behaviour>

<behaviour name = 'OutputRandomization'>
    <Arguments>(InputByte Y', OutputByte Y, sizeofMatrix n)
     </Arguments>
        s = MatrixGeneration(n)
        Y=PermutationMatrix(Y', s)

</behaviour>
```

</SubModule>

</Module>

Table 3A (Controlled Evolution Mode)

```
<Module name = 'Costumized Confusion Box' >
          <SubModule name = 'Genetic S-box' >
                    <Arguments> ( InputByte x, OutputByte Y, Alpha a, Beta b, sizeofMatrix
                        n) </Arguments>
                    <behaviour name = "Genetic Algorithm">
                              <Arguments>(CryptoComponentslibrary L, No_of_S-boxBits n,
                                  MaxGeneration m, S_Boxlist list, output out) </Arguments>
                              CurrentGenearation = RandomPermutation(2pow(n))< ! –
                                  pow is a power operation-->
                              PopulationSize = L.No_of_S-boxes < !-- Returns No of
                                  S-boxes from CryptoComponentslibrary-->
                              [$ foreach my $j (1.. temp) $]
                                    [$ foreach my $i (1.. PopulationSize) $]
                                          Rand1, rand2 = Roulette-WheelSelection
                                              (CurrentGeneration) < !--Selects two individuals
                                              from CurrentGeneration-->
                                          NewGeneration[i] = CrossOver(Rand1, Rand2)
                                    [ $ endforeach $]
                              Mutated = Mutation(CurrentGenearation, s-box.length,
                                  s-box)
                              NewGenearation = CurrentGeneration[1,
                                  PopulationSize/2]
                              Fitness = EncryptorAlgorithmEngine(NewGeneration)
                                  <!—Measure the randomness of the Geneated
                                  S-boxes -->
                              <IF case = "Fitness[GT]L.Threshold">
                                    j = temp
                                    out = CurrentGenearation
                              </IF>
                              <IF case = "Fitness[LT]L.Threshold">
                                    temp = temp + 1
                              </IF>
                              [ $ endforeach $]

                    </behaviour>
```

```
<behaviour name = "Mutation" >
    <Arguments> ( S-box S, S-box-length len, output MutatedS-box,
    MaxGeneration MaxGen, CurrentGeneration CurGen)
        </Arguments>
            r = RandomNumberGenerator(0, 1)
            Pm = r*( (MaxGen-CurGen) /MaxGen)
            Ind1 = [1: len]
            [$ foreach my $index1 (1. .len ) $]
                <IF case = 'index1 = ind1[index1]' >
                    r1 = RandomNumberGenerator(0, 1)
                        <IF case = "r1 (LT) Pm"> <!--LT denotes Less Than->
                            r2 = RandomNumberGenerator(1, len )
                            index2 = r2
                            <IF case = 'index2 = r2'>
                                Swap(S-box[index1], S-box[index2])
                            </IF>
                        </IF>


                </IF>
            [$ endforeach $]
        MutatedS-box = s-box
</behaviour>


<behaviour name = 'Cross_Over'>
    <Arguments>(S-box SBoxParent1, S-box SBox_Parent2, output
        SBoxOffSpring, SBox_Length len) </Arguments>
    SBox_Offspring = SBoxParent1
    InverseSBox = Getinverse(SBox_Offspring)
    ind = [1:len]
    [$ foreach my $index (1 .. len) $]
        <IF case = 'index = ind[index]'>
            r = RandomNumberGenerator(0,1)
                <IF case = 'r[GT]0.4' > <!--GT is used for Greater than
                        operation-->
                    Inverse_Index = InverseSBox[SBoxParent2[Index]]
                    <IF case = 'SBoxParent1[i]==InverseSBox[i]' >
                        Swap(SBox_Offspring[Index]
                        SBox_Offspring[Inverse_Index])
                    </IF>
                </IF>
        </IF>

    [$ endforeach $]
    output = SBox_Offspring
</behaviour>
```

</SubModule>

</Module>|

Table 3B (Genetic Evolutionary Mode)

**Applications of an Evolving Encryptor Plant in 5G/6G Systems**

International Telecommunication Union (ITU) defined several principal usage scenarios for 5G: Enhanced Mobile Broadband (eMBB), Ultra Reliable Low Latency Communications (uRLLC), and Massive Machine Type Communications (mMTC) and IoT applications. These services put the constraint to have low latency but with a high degree of both mobility and security. Its applications and usage can be found in areas such as, autonomous vehicles that have high safety dependency on reliability and latency; Industry 4.0 which facilitates the wireless control of industrial manufacturing; e-Health such as remote medical care and surgery, rescue support robots, public security, aviation, and other mission critical applications. The 5G/6G eMBB can be extended from conventional terrestrial communications to aerial communications, e.g., unmanned aerial vehicle (UAV), cellular mmWave communications and low earth orbit (LEO) satellite communications like the Space-X LEO type satellite constellation.

Cloud virtualization technologies such as software-defined networking (SDN) and network functions virtualization (NFV) are new directions for 5G/6G networks. However, due to their open, flexible, and programmable nature they bring new and unique security concerns. The end-to-end user defined Evolving Encryptor Plant along with time bared encryption are novel apparatus and methods which can be used to mitigate the enormous security risks resulting due to Massive Machine Type Communications (mMTC) and IoT applications.

5G/6G requires end-to-end (or peer to peer) security that mitigates all types of security breaches including information security breaches. In an aspect, a next generation of encryptors is provided to empower users to define and take control of their privacy and information security through User Defined Personalized Encryptors that are difficult to break by eavesdroppers and hackers by using brute force techniques. These personalized encryptors could be easily generated with the help of the Evolving Encryptor Plant; as a result, a user would have access to a large population of Adaptable, Key-loss Resilient, Hybrid, Flexible Encryption Methods to choose from.

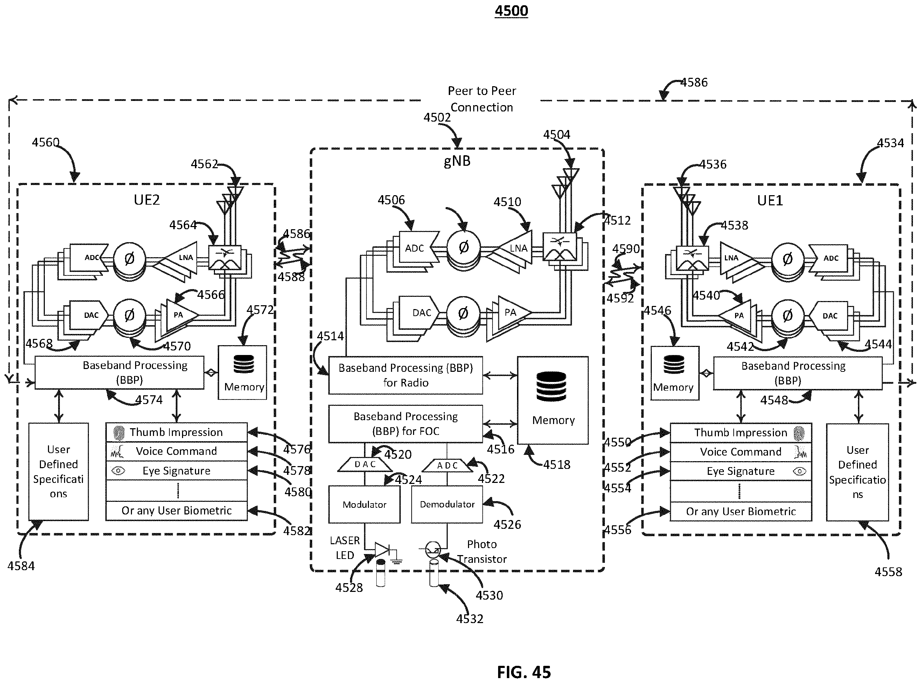

**Figure 45** shows the block diagram of a flexible wireless transceiver architecture for 5G/6G or high order MIMO (sub-6 GHz 5G NR), 5G or higher mmWave, IEEE 802.11a/b/g/n/ac/ax, IEEE 802.11ad/ay WiGig, Bluetooth, GNSS, 5G-CA, 5G-LAA, etc. The multiple antenna MMIMO system consists of LNA (Low Noise Amplifier) 4510, PA (Power Amplifier) 4540, 4566, Duplexers 4538, 4512, 4564 or Time Switch (TS), Phase Shifters ($\phi$) 4570, 4542 which are analog components working at GHz frequencies, while ADCs and DACs 4568, 4506, 4544 are mix signal components. In case of the Time Division Duplexing (TDD), the duplexer is replaced with the Time Switch (TS). Components 4564, 4512, 4538 are either duplexers or Time Switch depending on whether the TDD or FDD functionality of the system is used, respectively.

The UE (User Equipment), which can be for example an IoT device or a smart phone cellular device, has one or multiple Baseband Processors (BBPs) 4574, 4548 depending on the chip architecture, processing power, and other schemes available for low power operations. On the Base station (BT or NR gNB) side, in addition to the above hardware blocks the Fiber Optic (FO) interfaces 4528, 4530, and 4532 are also present in order to connect the base station with the cloud IT infrastructure. The FO interface has its own dedicated BBP 4516.

From the functional point of view, the BBPs 4548 and 4574 of UEs 4534 and 4560, Radio BBP 4514 of gNB 4502, and FOC BBP 4516 of gNB 4502 have the same or similar functional blocks which are flexible and programmable based on the system and user requirements. They have their own specific architecture and a dedicated operating system and can be programed to control the frequency bands, data rates, encryption modes and modulation types etc. They control all the programmable parameters of the RF hardware components like bandwidth and data rate of ADCs and DACs 4568, 4506, 4544, the amount of the phase shift designed for phase shifters 4570 and 4542 to control the beamforming angle, power of the PAs 4540 and 4566 and the gain of the LNA 4510 along with the TD/FD duplexing and overall bandwidth and switching rate utilized by the RF frontend. All the desired data to control the RF configuration parameters can be preprogramed based on the predefined factory settings or can be entered in baseband processors 4548 and 4574 or as a user defined specification in UEs 4560 and 4534. The same control data can be programed in gNB 4502, baseband processors 4514 and 4516 that are using the ADC 4522, Memory unit 4518, and FO interface 4532.

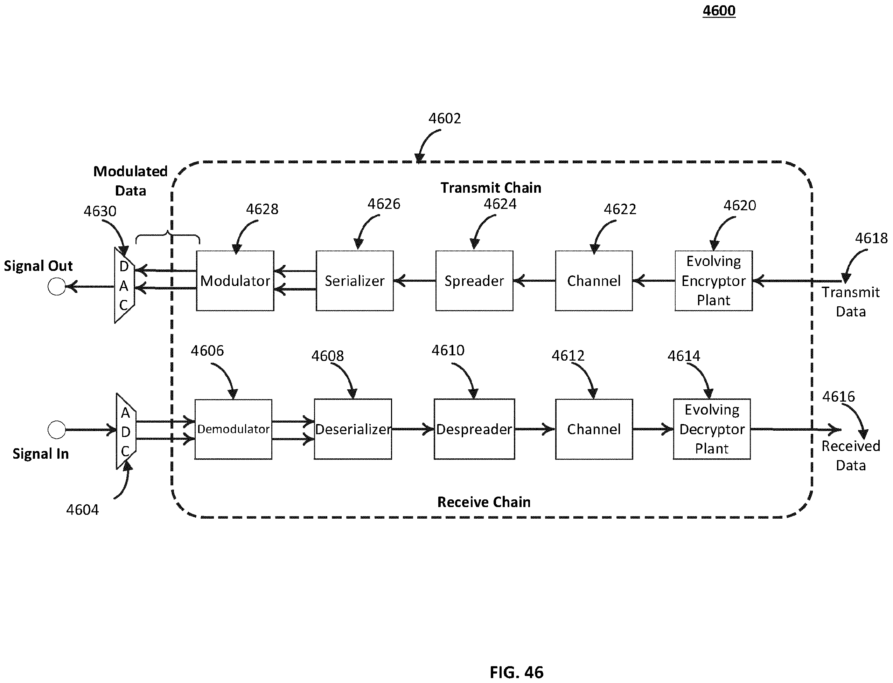

**Figure 46** shows further details of the baseband processor used in gNB radio, FO systems, and user equipment. All the digital functions are implemented in baseband processor that includes Evolving Encryptor Plant 4620, Evolving Decryptor Plant 4614, Channel selection 4612 and 4622, Spreader 4624, Despreader 4610, Serializer 4626, Deserializer 4608, Modulator 4628, Demodulator 4606, and A/D 4604 and D/A 4630 conversion. All encryption methods in NR, gNB and UE are implemented in the baseband processor using the encryptor and decryptor blocks 4620 and 4614, respectively, on the data transmitted and received on the airlink. In some applications, peer to peer encryption is done either in an application processor in a UE or using a separate secure encryption processor. In this case, encryptor and decryptor blocks 4620 and 4614, without loss of generality could be implemented in the application processor or secure encryption processor.

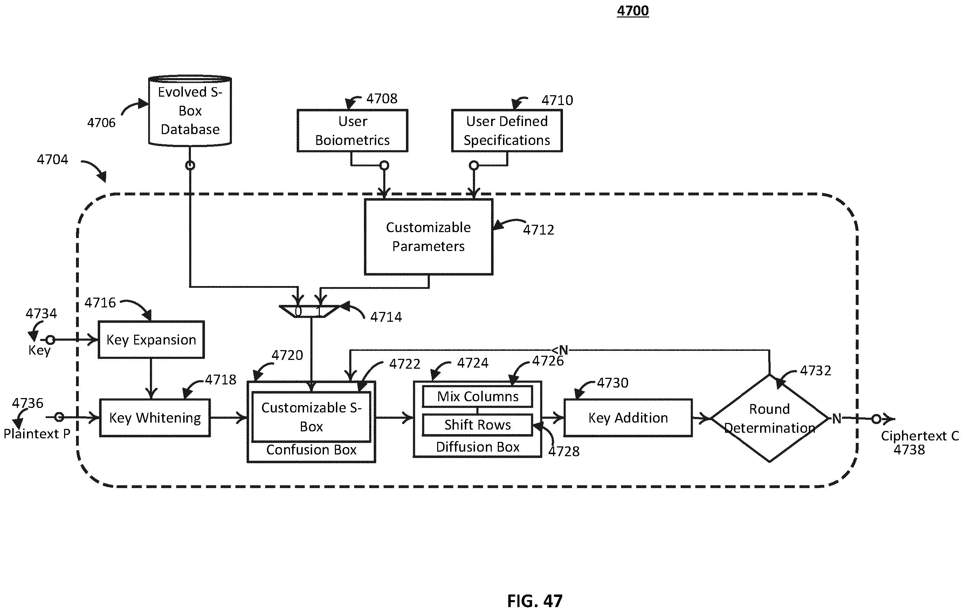

**Figure 47** shows an aspect of Evolving Encryptor Plant 4002 of **Figure 40** implemented as encryption circuitry, namely Evolving AES Plant 4704, running inside baseband processor 4602 of **Figure 46.** In this aspect, a user specifies that he wants to use standard AES and only wants to evolve its confusion box using Evolvable S-box modes 3202 of **Figure 32** or 3302 of **Figure 33.** Consequently, a user can either specify whether the user trusts the baseband processor to run mode 3202 (of **Figure 32**) in the hardware by computing Customizable Parameters 4712 from User Biometrics 4708 or other customized User Defined Specifications 4710. The user could also disable mode 3202 (of **Figure 32**) and instead force Evolving AES Plant to use Evolved S-Box from an Evolved S-Box Database 4706 in which elite S-boxes are stored that are generated offline using trustworthy methods for example like 3202 of **Figure 32** or 3302 of **Figure 33** in a trusted execution environment. The elite S-boxes are selected by Encryptor Requirements Scout 4008 of **Figure 40** after their fitness gets evaluated by Randomness Amplifier 4016. In this case, the circuitry of 3202 of **Figure 32** inside the baseband processor is disabled and the S-box from Evolved S-Box Database 4706 is selected and embedded into the confusion box of AES.

Customizable parameters can be defined by User Biometrics 4708, as mentioned above with reference to **Figure 45.** User Biometrics 4708 can be Thumb Impression 4550, Voice Command 4552, Eye Signature 4554, or any other User Biometrics 4556, as shown in **Figure 45.** Apart from User Biometrics 4708, customizable parameters 4712 can be set by some User Defined Specifications 4710 as well. Biometrics or user specifications or their combinations can be used to compute values of Alpha and Beta that are input to 3202 as shown in **Figure 32.**

Evolving AES Plant 4704 takes Key 4734, shared between the sender and the receiver for encryption of Plaintext 4736. Key Expansion 4716 transforms the input Key 4734 into multiple sub keys by rotation, swapping and nonlinear operations. Key Expansion 4716 besides adding nonlinearity, removes symmetry. Both properties are necessary to thwart certain block cipher attacks. Number of subkeys depends on the number of rounds N specified in AES standard or Customizable Parameters 4712. It is common to produce a separate subkey for each round N of the encryption method along with an additional key to be applied to Plaintext 4736 during the process of Key Whitening 4718.

Confusion Box 4720 adds non-linearity to its input using S-Box which in case of general AES uses Galois field $GF(2^8)$ and affine mapping. In case of Evolving AES plant, a Customizable S-Box 4722 is either generated by the baseband processor 4602 of **Figure 46** using Controlled Evolution Mode 3202 circuitry of **Figure 32** or selecting it from the Evolved S-box Database 4706.

Diffusion Box 4724 performs the linear mangling operations as specified for standard AES. Shift Rows 4728 and Mix Columns 4726 are used for diffusion in standard AES. The output of Diffusion Box 4724 is X-ORed with a subkey in a module called Key Addition 4730. The number of rounds N depends on the length of the key. For the key length of 128 bits, the number of rounds N= 10, and there are 11 subkeys, each of 128 bits. The AES with a 192-bit key requires 13 subkeys of length 128 bits and N=12, and for AES with a 256-bit key length has 15 subkeys and N=14. Round Determination 4732 sends back the state of data to Confusion Box 4720 if the current round is less than N. In Evolving AES plant, a user can specify to use a different S-box for each round of AES. After completion of all encryption rounds Cipher text C 4738 is produced.

Once Evolving AES Encryption Plant runs on the baseband processors 4548 and 4574 or application processors of UE1 4534 and UE2 4560 respectively and also on the baseband processors of 4514 and 4516, all of **Figure 45,** then a more secure user defined encryption method is available. Now if the two users want to enable peer to peer encryption on a virtual communication channel 4586, then they can exchange Customizable Parameters 4712 (of **Figure 47**) at mutually agreed periodic intervals and generate a strong and elite mutant of standard AES 129 Encryptor that is resilient to key-loss and adds at least $2^{780}$ security even when the key is compromised. Evolving AES plants give both users control over their privacy and information security.

Similarly, each user terminal UE1 4534 or UE2 4560 connected to the base station (gNB) 4502 (as shown in **Figure 45**) can also negotiate at regular intervals Customizable Parameters 4712 (of **Figure 47**) between 4534, 4560 and the base station 4502 on links 4586, 4588, 4590 and 4592; as a result, base station facilitates its users to have personalized encryptors to encrypt communication between a user terminal and the base station. Now, if UE1 4534 and UE2 4560 have negotiated personalized encryptors with gNB 4502 on links 4586, 4588, 4590 and 4592 and then use on top of peer-to-peer encryptors, these personalized encryptors for their communication channel 4586 exponentially squares the security strength i.e., from $2^{780}$ to $2^{1560}$ assuming the scenarios once the private keys are compromised. This added security in the behavioral dimension is due to a simplified embodiment of the Evolving AES plant in which only confusion box has been evolved. The security could be significantly enhanced once Key Expansion 4716, Key Whitening 4718, Diffusion Box 4724, and Key Addition 4730 of **Figure 47** are also evolved in a comprehensive Evolving AES Plant.

**Applications of an Evolving Encryptor Plant in Secure Satellite Constellations**

In case of Low Earth Satellites (LEO) or satellite systems that are constellation of satellites, Evolving Encryptor Plant provides significant security against adversaries that have tremendous computing power and resources to crack the static encryption method, especially in a key compromised scenario. The SpaceX Starlink type systems which currently consist of 1584 satellites and 72 orbital planes of 22 satellites each is an example of constellation of satellites. These types of systems could form the backbone of next generation IoT systems, Global WiFi, and cellular data communications.

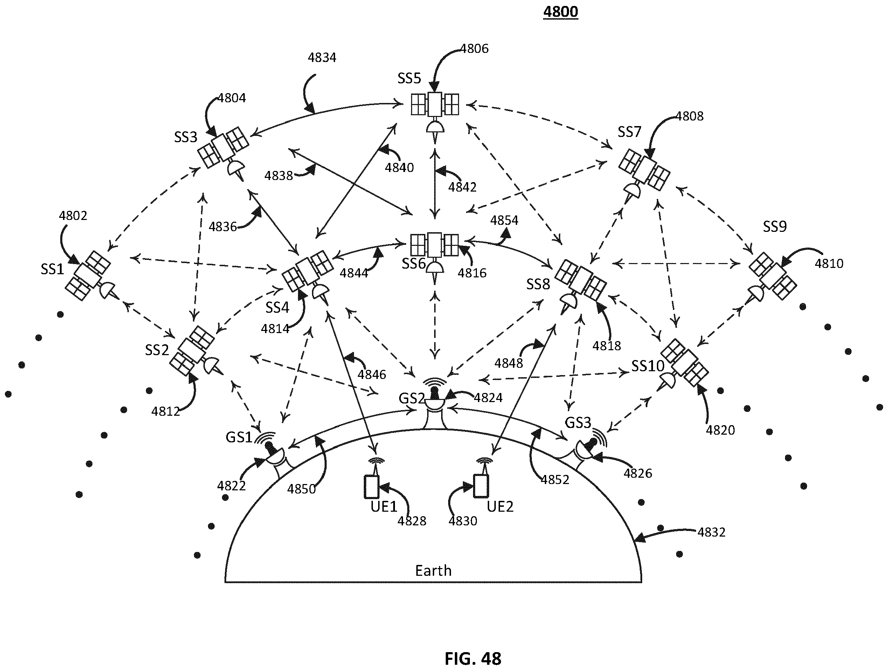

**Figure 48** shows one example incarnation of a LEO constellation. Without loss of generality, we focus on a scenario where satellites SS3 4804, SS4 4814, SS5 4806 and SS6 4816 are communicating through wireless communication links 4834, 4836, 4838, 4840, 4842 and 4844. Similarly, UE1 4828 can directly communicate with SS4 4814 on 4846 and UE2 4830 can directly communicate with SS8 4818 on 4848. Ground station GS1 4822 is connected to SS2 4812 and SS4 4814, GS2 4824 is connected to SS4 4814, SS6 4816 and SS8 4816, and GS3 4826 is connected to SS8 4818 and SS10 4820. All ground stations are interconnected using backhaul fiber optic links 4850 and 4852. All satellites, ground stations and UEs are assumed to be using the invention of Evolving AES Plant 4704 of **Figure 47.** Now, UE1 4828 wants to communicate with UE2 4830 through links 4846, 4844, 4854, and 4848. Since Evolving AES Plant 4704 is running on each node, therefore, a unique and different mutant of AES could be easily incarnated for each communication link; as a result (assuming AES 128) the Evolving AES Plant 4704 adds $(2^{780})*(2^{780})*(2^{780})*(2^{780}) = 2^{3120}$ bit security in the behavioral dimension assuming all private keys are compromised across all links. Now, if the two UEs decide to also negotiate peer to peer encryption then the security is further enhanced by $2^{780}$ and becomes $2^{3900}$. Evolving AES Plant 4704 adds this additional security by using the power efficient circuitry of 128-bit AES and only at a fraction of the additional processing power compared with the case when 256-bit AES is used. In a LEO system, if we assume an average connectivity of 3 links per satellite and ignore duplicate links then the constellation would have 4752 active links at a given moment in time; as a result, Evolving AES Plant 4704 can easily create an Encryption Constellation of 4752 customized AES Encryptors for each link. This is possible in real time keeping in view the fact that during one phase of Evolution, the plant could generate $2^{780}$ mutant variants of standard AES. Therefore, Evolving Encryptor Plant 4002 of **Figure 40** in general, and Evolving AES Plant 4704 of **Figure 47** in particular, are ideally suited for securing links in satellite communication including communication between satellites in a constellation; and between ground stations and satellites; and between UEs and satellites; between ground stations; and between UEs.

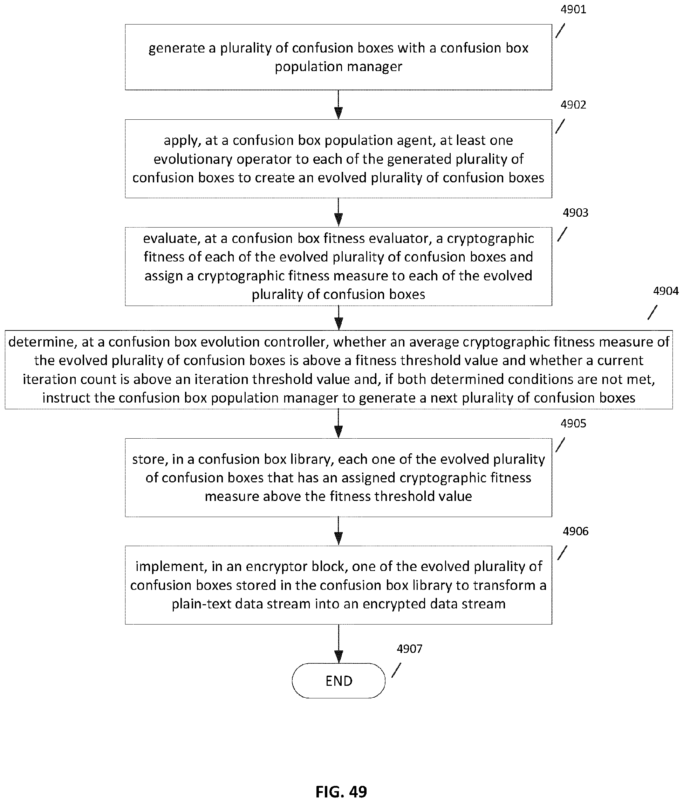

**Figure 49** presents a flowchart that depicts a method of evolving encryption for transforming a plain-text data stream into an encrypted data stream according to an aspect of the invention. As seen in **Figure 49,** the process starts at step 4901 in which a plurality of confusion boxes are generated with a confusion box population manager. Next, in step 4902, a confusion box population agent applies at least one evolutionary operator to each of the generated plurality of confusion boxes to create an evolved plurality of confusion boxes. In step 4903, a confusion box fitness evaluator evaluates a cryptographic fitness of each of the evolved plurality of confusion boxes and assigns a cryptographic fitness measure to each of the evolved plurality of confusion boxes. Then in step 4904, a confusion box evolution controller determines whether an average cryptographic fitness measure of the evolved plurality of confusion boxes is above a fitness threshold value and whether a current iteration count is above an iteration threshold value and, if both determined conditions are not met, instructs the confusion box population manager to generate a next plurality of confusion boxes. In step 4905, a confusion box library stores each one of the evolved plurality of confusion boxes that has an assigned cryptographic fitness measure above the fitness threshold value. The process proceeds to step 4906 in which an encryptor block implements one of the evolved plurality of confusion boxes stored in the confusion box library in order to enable the encryptor block to transform a plain-text data stream into an encrypted data stream. The process then ends at step 4907.

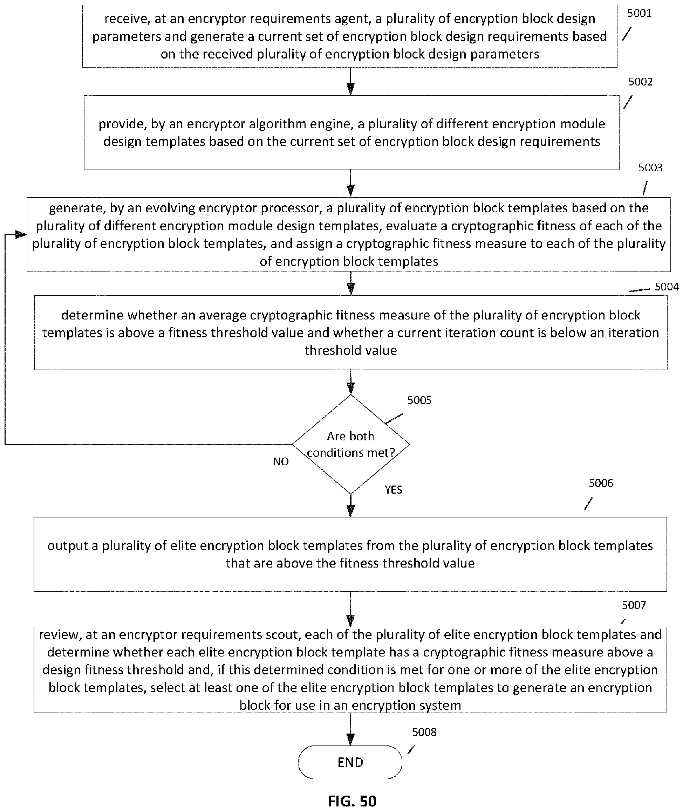

**Figure 50** is a flowchart that depicts a method for generating, by an evolving encryptor system, at least one customized user-defined encryption block according to an aspect of the invention. As seen in **Figure 50,** the process starts at step 5001 in which an encryptor requirements agent receives a plurality of encryption block design parameters and generates a current set of encryption block design requirements based on the received plurality of encryption block design parameters. Next, at step 5002, an encryptor algorithm engine provides a plurality of different encryption module design templates based on the current set of encryption block design requirements. In step 5003, an evolving encryptor processor generates a plurality of encryption block templates based on the plurality of different encryption module design templates, evaluates a cryptographic fitness of each of the plurality of encryption block templates, and assigns a cryptographic fitness measure to each of the plurality of encryption block templates. At step 5004, it is determined whether an average cryptographic fitness measure of the plurality of encryption block templates is above a fitness threshold value and whether a current iteration count is below an iteration threshold value. In step 5005, a decision is made whether both conditions are met that the average cryptographic fitness measure of the plurality of encryption block templates is above the fitness threshold value and that the current iteration count is below the iteration threshold value. If yes, then the process proceeds to step 5006 in which a plurality of elite encryption block templates are output from the plurality of encryption block templates that are above the fitness threshold value. If no, then the process reverts to step 5003 in which the evolving encryptor processor generates a next plurality of encryption block templates based on the plurality of different encryption module design templates. After step 5006, the process proceeds to step 5007 in which an encryptor requirements scout reviews each of the plurality of elite encryption block templates and determines whether each elite encryption block template has a cryptographic fitness measure above a design fitness threshold and, if this determined condition is met for one or more of the elite encryption block templates, selects at least one of the elite encryption block templates to generate an encryption block for use in an encryption system. The process then ends at step 5008.

In an aspect, a private time base is utilized to securely synchronize the change of encryption methods or systems or/and their parameters that are generated by the evolving cryptography system described above.

With respect to the usage scenarios described above with reference to **Figures 36, 37, 38,** and **39,** it is desirable to have the mutation parameters of an evolving encryption system or method or system mutation information (e.g., indices into a database, algorithm parameters, and specific algorithm mutations) synchronized in their usage between the communicating peer nodes so that both peer nodes use the same mutant of an evolving cryptography system or method or algorithm. Additionally, the mutation parameters of an encryption method or system may be used only once or remain valid only for a short time window. One-time keys and one-time pads are used to achieve this. For instance, IETF RFC 4226 defines the HMAC-based One-Time Password (HOTP) which uses a hash function HOTP(), a shared secret K, and a counter C. A key or a password is generated as Key = HOTP(K,C). The counter continues counting upwards and never repeats itself. This key is used to encrypt the mutation parameters of an evolving encryption system or method and may be exchanged on a different virtual or physical channel than the one used for exchanging data. It may further be used to verify that the counter C remains synchronized between the communicating peer devices. The synchronization of mutants of an evolving encryption system or method or algorithm may be a function of counter C.

It may be desirable to express a time window during which a particular set of mutant parameters of an evolving encryption system or method remains valid. This would then express the temporal window over which a particular mutant of an encryption system or method is used. IETF RFC 6238 defines the Time-Based One-Time Password (TOTP) which is a variant of HOTP where the counter C is replaced with T which is a function of time. The one-time password or key is generated as Key = TOTP(K,T). T is defined as T = [(Current UNIX Time - $T_0$)/X]. $T_0$ is an offset to a "start time" for the generation of T. X is a time window, for instance, 30 seconds. X is chosen to provide a validity time window during which the key or password remains valid and may be used. In the present invention, this may also be used to define the temporal window in which a particular mutant of an encryption system or method or algorithm may be used. Due to a possible lack of time synchronization between the two communicating peer devices, e.g., the devices 3908 and 3910 and the centralized server 3920 of **Figure 39,** of a secure transaction generating T, it is common to also generate Key2 = TOTP(K,T-1) and Key3 = TOTP(K,T+1). For the standard usages of TOTP, this effectively creates a window that is three times the duration of X.

HOTP and TOTP are both based on HMAC-SHA-1 with truncation. One skilled in the art would understand how to modify these or other hash functions in order to not use truncation or instead to truncate to a different number of bits.

These two examples of one-time key generation require that the clocks of the two communicating peer devices are synchronized for exchange of information in a secure fashion. This may be problematic as clocks can drift relative to each other in a system such as that shown in **Figure 39** in which devices 3908 and 3910 are isolated from other devices, and in particular from the centralized server 3920. Additionally, current time is known, and future time can be predicted from the current time. This may increase the vulnerability of a system using one-time keys if an attacker has access to multiple outputs of the hash function at different known times.

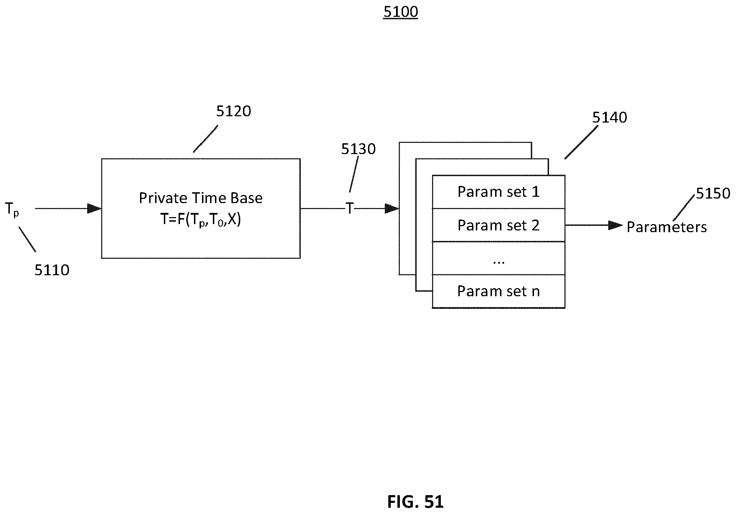

To solve this problem for a hash function that uses time as an input, we define a private time base. As shown in **Figure 51,** private time base module 5120 uses a private time, Tp 5110, to generate a time T 5130. Time T 5130 may be defined as a function F(Tp, $T_0$, X), for instance the function may be T = F($T_p$, $T_0$, X) = [($T_p$ - $T_0$)/X], Time T 5130 is used to generate or obtain mutation parameters 5150 of an evolving encryption system or method or algorithm, from a repository 5140 of parameter sets or from an evolving cryptography plant that has the capability to generate them. In an embodiment where T 5130 is used to index into a one-time pad or list to retrieve information such as mutation parameters of an encryption system or method or algorithm, T = F($T_p$, $T_0$, X) = [($T_p$ - $T_0$)/X] modulo one-time pad length. In the private time base function, $T_0$ and X are shared secrets between the communicating peer devices (and servers in certain scenarios where servers are present) in the same way as the hash function is a shared secret, K. Tp 5110 may be generated by a device at the time of use and passed to another device along with data on which the one-time key has been applied, such as mutation parameters 5150 of an encryption system or method or algorithm. The secure device may set its internal clock to time Tp, thereby allowing "time" to progress from that point. Since $T_0$ and X are secret, the value of T generated from $T_p$ will be difficult to guess within the temporal window during which T remains valid. In an embodiment, new values of Tp are later in time (e.g., greater value) than previously used values of Tp. In an alternative embodiment, new values of Tp are randomly generated and may be later or earlier in time. A hash function Key = H(K, T) may be used to generate a key or index. This use of a private time base mitigates any time synchronization issues between the communicating peer devices, hides the value of T, allows a changing value of time to decrease the prediction probability of future values of T, allows each set of communicating devices to have a unique validity time window X, and eliminates the need to allow a user to attempt using T-1 or T+1. These benefits increase security over a known time base.

One skilled in the art would understand how a private time base could be used to generate a time T used for selecting a one-time use (i.e., discarded after use) shared secret $K_T$ (e.g., mutation parameters of an encryption system or method or algorithm) from a one-time pad of shared secrets.

One skilled in the art would understand that additional information, A, may be used as input to a hash function, for instance by concatenating the input strings, denoted as Key = H(K,T,A).

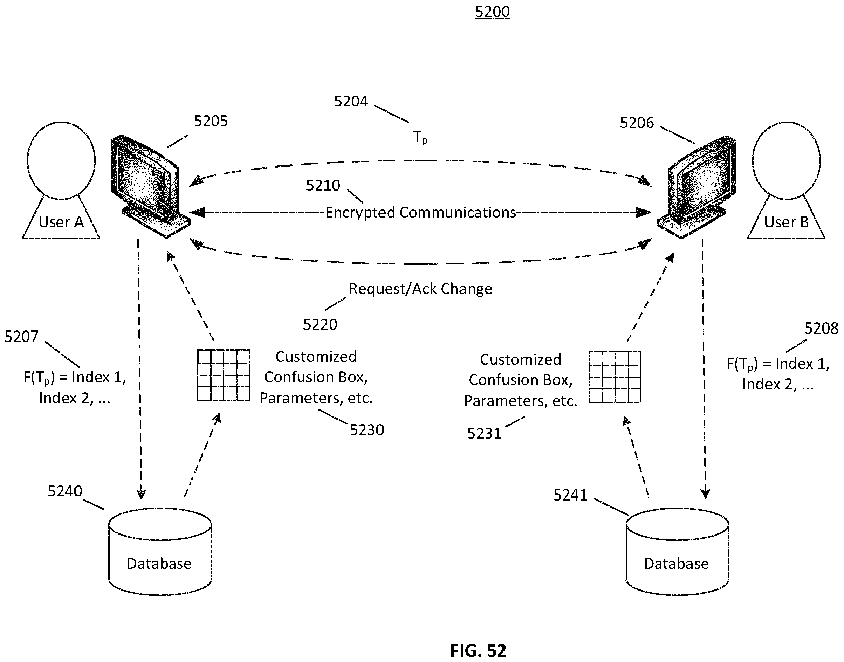

**Figure 52** shows an embodiment 5200 of a communication system similar to system 3600 of **Figure 36** in which encrypted communications 5210 are utilized between two peer devices 5205 and 5206. At least one of devices 5205 and 5206 may request a change 5220 in the encryption system or method or algorithm used. A private time, Tp, 5204 is transferred from one device to the other. Tp 5204 may be transmitted by either the device sending a request for change 5220 or the device acknowledging the request for change 5220. Tp 5204 may be transmitted based upon a timer or other event rather than in response to a request for change or an acknowledgement of a request for change. Devices 5205 and 5206 generate time T from Tp 5204. For instance, the private time base module may use device specific values for $T_0$ and X to create T using the equation $T = [(T_p - T_0)/X]$. T is then used to create indices 5207 and 5208 or other means to extract encryption modification or evolution information 5230 and 5231, respectively, comprised of one or more of customized or evolved encryption methods or algorithms, encryption method or algorithm portions, mutation parameters, etc. from local databases 5240 and 5241. One skilled in the art would understand that the function applied to Tp 5204 and T to retrieve this encryption modification information would result in encryption modification or evolution information 5230 and encryption modification or evolution information 5231 thereby generating compatible and corresponding mutant pair of encryption and decryption methods or algorithms for the secure channel but that the same mutants of encryption methods or algorithms need not be used in both directions. In an embodiment, local databases 5240 and 5241 are copies of S-box library 3331 of **Figure 33.** In an embodiment, a centralized database replaces local databases 5240 and 5241. In an embodiment, the indices into local databases 5240 and 5241 are stored in a pad of indices, which itself is indexed by $T = [(T_p - T_0)/X]$ modulo pad length. In an embodiment, local databases 5240 and 5241 are replaced by a pad in which mutation parameters or evolution information are stored. The pad may be indexed by $T = [(T_p - T_0)/X]$ modulo pad length.

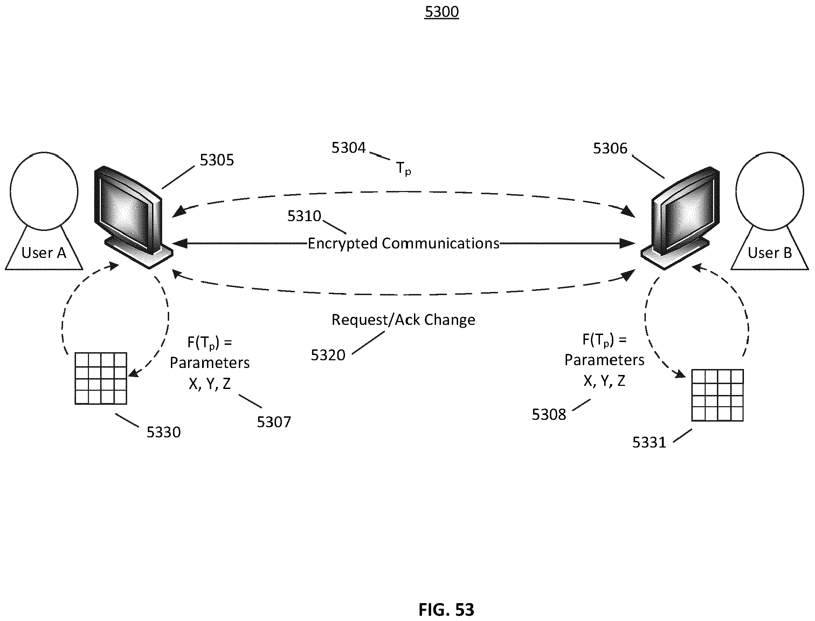

**Figure 53** shows an embodiment of a communication system 5300 similar to the system 3700 of **Figure 37** in which encrypted communications 5310 are utilized between two devices 5305 and 5306. In this case, devices 5305 and 5306 do not have access to local or centralized copies of a database of encryption algorithms or evolutions of the encryption algorithms. Rather than transmit parameters 3702 as in **Figure 37,** devices 5305 and 5306 instead exchange private time $T_p$ 5304. $T_p$ 5304 is then used to generate T, such as for instance by the equation $T = [(T_p - T_0)/X]$ modulo pad length. T may then be used to extract matching sets of parameters 5307 and 5308 from a pad, which may then be used to customize a local instance or mutant of an evolving encryption system or method or algorithm 5330 and 5331, respectively.

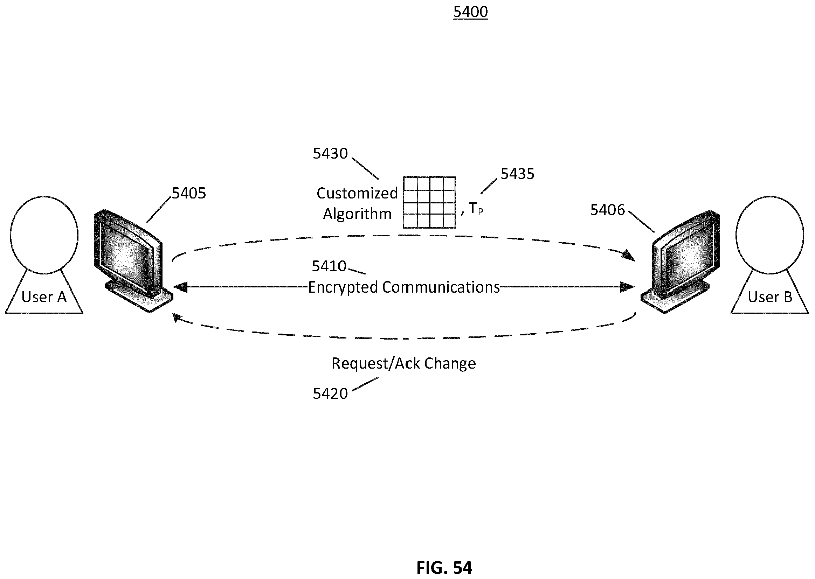

**Figure 54** shows an embodiment of a communication system 5400 similar to system 3800 of **Figure 38** in which encrypted communications 5410 are utilized between two peer devices 5405 and 5406. In this case, as shown in **Figure 54,** private time Tp 5435 is passed from peer device 5405 to peer device 5406 along with the customized or evolved algorithm 5430 to be used in any time-based calculations, such as when to start using the new mutant of an encryption method or algorithm.

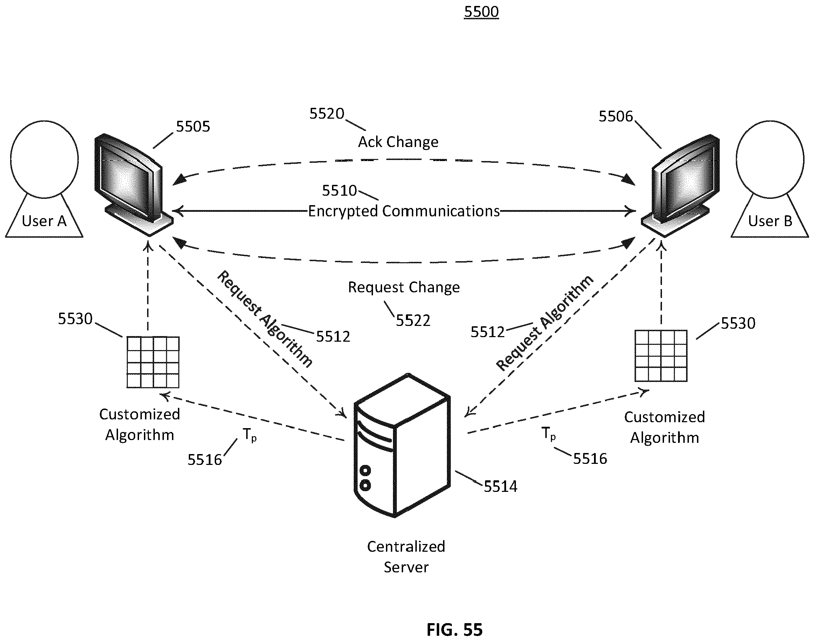

**Figure 55** shows an embodiment of a communication system 5500 similar to system 3900 of **Figure 39** in which encrypted communications 5506 are utilized between two peer devices 5505 and 5506. Devices 5505 and 5506 may both be thin clients, public access terminals, or otherwise restricted or incapable of modifying the encryption system or method or algorithm or generating their mutation parameters themselves. In this case, they both make algorithm requests 5512 to a centralized server 5514 for a customized or evolved encryption system or method or algorithm 5530 or its mutation parameters. The centralized server 5514 uses a private time Tp 5516 associated with its relationship with devices 5505 and 5506 to generate a time T that is used to generate customized encryption system or method or algorithm 5530 or their mutation parameters. Private time Tp 5516 may be passed to devices 5505 and 5506 along with the customized encryption system or method or algorithm 5530 or its mutation parameters to be used in any time-based calculations. Devices 5505 and 5506 may exchange a change request 5522 and a change acknowledgement 5520, rely on a time out, rely on receipt message from centralized server 5514, or other indication based on private time Tp 5516 to decide when to perform another algorithm request 5512 for a new mutant of the algorithm. In an embodiment, centralized server 5514 contains a database which is a copy of S-box library 3331 of **Figure 33.**

In an embodiment, devices have a private time base module, such as private time base module 5120 of **Figure 51,** which creates a private time value Tp which may be created in a number of ways. For instance, Tp may be Greenwich Mean Time, Universal Time, local wall clock time at a centralized server 5514, wall clock time at one of the communicating devices, a random number, or chosen specifically to cause a certain one-time pad entry or mutation parameters of an encryption system or method or algorithm to be used. Tp may be represented using any of a number of time steps, such as seconds, minutes, milliseconds, etc. The private time base module uses Tp to create a time T for use by other modules. In an embodiment, the private time base module uses parameters specific to a device in order to generate time T from Tp. For instance, the private time base module may use device specific values for $T_0$ and X to create T using the equation $T = [(T_p - T_0)/X]$ or $T = [(T_p - T_0)/X]$ modulo one-time pad length. Of course, other device specific parameters and functions may be used to generate time T.

Those of skill in the art will appreciate that the various method steps, illustrative logical and functional blocks, modules, units, and algorithm steps described in connection with the aspects disclosed herein can often be implemented as electronic hardware, application specific integrated chip (ASIC), computer software, or combinations of all. To clearly illustrate this interchangeability of hardware and software, various illustrative components, blocks, modules, and steps have been described above generally in terms of their functionality. Whether such functionality is implemented as hardware or software depends upon the particular constraints imposed on the overall system and devices. Skilled persons can implement the described functionality in varying ways for each particular system, but such implementation decisions should not be interpreted as causing a departure from the scope of the invention described herein. In addition, the grouping of functions within a unit, module, block, or step is for ease of description. Specific functions or steps can be moved from one unit, module, or block without departing from the invention.

Some or all of the various illustrative methods, algorithms, logical and functional blocks, units, steps and modules described in connection with the aspects disclosed herein, and those provided in the accompanying documents, can be implemented or performed with a processor, such as a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein, and those provided in the accompanying documents. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

The steps of a method or algorithm and the processes of a block or module described in connection with the aspects disclosed herein, and those provided in the accompanying documents, can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium. An exemplary storage medium can be coupled to the processor such that the processor can read information from, and write information to, the storage medium. In the alternative, the storage medium can be integral to the processor. The processor and the storage medium can reside in an ASIC. Additionally, devices, blocks, or modules that are described as coupled may be coupled via intermediary devices, blocks, or modules. Similarly, a first device may be described as transmitting data to (or receiving from) a second device wherein there are intermediary devices that couple the first and second device and also wherein the first device is unaware of the ultimate destination of the data.

Various aspects of the present invention are set forth in the following clauses:

Clause 1: An evolving encryptor system for generating at least one customized user-defined encryption block, the evolving encryptor system comprising: an encryptor requirements agent that receives a plurality of encryption block design parameters and then generates a current set of encryption block design requirements based on the received plurality of encryption block design parameters; an encryptor algorithm engine that provides a plurality of different encryption module design templates based on the current set of encryption block design requirements; and an evolving encryptor processor that generates a current plurality of encryption block templates based on the plurality of different encryption module design templates and evaluates a cryptographic fitness of each of the current plurality of encryption block templates and assigns a cryptographic fitness measure to each of the current plurality of encryption block templates, and determines whether a current iteration count is below an iteration threshold value and, if the current iteration count is below the iteration threshold value, conducts a next iteration by generating a next plurality of encryption block templates until both said determined conditions are met, in which case the next plurality of encryption block templates is saved into an encryption block template database as a plurality of elite encryption block templates.

Clause 2: The evolving encryptor system of Clause 1 further including an encryptor requirements scout that determines whether each elite encryption block template has a cryptographic fitness measure above a design fitness threshold and, if so, each elite encryption block template having a cryptographic fitness measure above the design fitness threshold is designated as an acceptable encryption block template for selection to generate an encryption block.

Clause 3: The evolving encryptor system of Clause 2 wherein a private time base value is used to select one of the acceptable encryption block templates from the encryption block template database for use in the generation of an encryption block.

Clause 4: The evolving encryptor system of Clause 3 wherein the private time base value is based on a private time base parameter that is shared between two devices to enable secure encrypted communications between the two devices.

Clause 5: The evolving encryptor system of Clause 4 wherein the private time base value is determined according to a function of the private time base parameter, an offset time parameter and a time window parameter.

Clause 6: The evolving encryptor system of Clause 5 wherein the private time base parameter and the offset time parameter are known by the two devices.

Clause 7: The evolving encryptor system of Clause 3 wherein an index is determined based on the private time base value and the index is used to obtain a corresponding designated elite encryption block template from the encryption block template database.

Clause 8: The evolving encryptor system of Clause 7 wherein a hash function based on the private time base value is used to determine the index.

Clause 9: The evolving encryptor system of Clause 3 wherein the private time base value is provided to the evolving encryptor processor to generate an acceptable encryption block template that is used to create an encryption block for use in encrypted communication between two devices.

Clause 10: The evolving encryptor system of Clause 4 wherein the private time base parameter is passed from a first one of the two devices to a second one of the two devices in response to an encryption change request provided by one of the two devices.

Clause 11: The evolving encryptor system of Clause 10 wherein each one of the two devices has a local encryption block template database that is a copy of the encryption block template database, and wherein each device generates a private time base value based on the private time base parameter and uses the private time base value to obtain a same acceptable encryption block template the device's respective local encryption block template database, thereby enabling synchronized encrypted communication between the two devices.

Clause 12: The evolving encryptor system of Clause 10 wherein each one of the two devices has access to the encryption block template database acting as a centralized encryption block template database, and wherein each device generates a private time base value based on the private time base parameter and uses the private time base value to obtain a same acceptable encryption block template the encryption block template database, thereby enabling synchronized encrypted communication between the two devices.

Clause 13: The evolving encryptor system of Clause 3 wherein an index is obtained from an index pad based on the private time base value and the index is used to obtain a corresponding designated elite encryption block template from the encryption block template database.

Clause 14: The evolving encryptor system of Clause 10 wherein each device generates a private time base value based on the private time base parameter and obtains matching encryption block parameters from a respective parameter pad based on the private time base value, and then uses the encryption block parameters to generate a matching customized encryption block, thereby enabling synchronized encrypted communication between the two devices using their matching customized encryption blocks.

Clause 15: The evolving encryptor system of Clause 1 wherein a private time base parameter and a customized encryption block is passed from a first one of the two devices to a second one of the two devices in response to an encryption change request provided by one of the two devices, thereby enabling synchronized encrypted communication between the two devices each of which are using the customized encryption block.

Clause 16: The evolving encryptor system of Clause 1 wherein, in response to an encryption change request issued by one of two devices, each device sends an encryption block request to the encryption block template database, and wherein the encryption block template database generates a private time base value based on the private time base parameter and uses the private time base value to obtain a customized encryption block and then passes the customized encryption block to each of the two devices.

Clause 17: The evolving encryptor system of Clause 16 wherein the timing of the issuance of the encryption change request is based on the time that a prior encryption change request was issued by one of the two devices.

Clause 18: The evolving encryptor system of Clause 16 wherein the timing of the issuance of the encryption change request is based on the time that an acknowledgement was issued by one of the two devices in response to a prior encryption change request.

Clause 19: The evolving encryptor system of Clause 16 wherein the timing of the issuance of the encryption change request is based on the expiration of a predetermined time period since a prior encryption change request was issued by one of the two devices.

Clause 20: The evolving encryptor system of Clause 16 wherein the timing of the issuance of the encryption change request is based on the time that an encryption block request receipt was issued by the encryption block template database in response to a prior encryption block request from at least one of the two devices.

Clause 21: The evolving encryptor system of Clause 16 wherein the timing of the issuance of the encryption change request is based on a function of the private time base value.

Clause 22: The evolving encryptor system of Clause 1 wherein each encryption block template in the encryption block template database represents an S-box encryption block.

Clause 23: The evolving encryptor system of Clause 1 wherein the evolving encryptor processor also determines whether an average cryptographic fitness measure of the current plurality of encryption block templates is above a fitness threshold value and the decision to conduct a next iteration is also based on a determination that the average cryptographic fitness measure of the current plurality of encryption block templates is above the fitness threshold value.

Clause 24: A method for providing synchronized encrypted communication between at least two communication devices, the method comprising the steps of: sending an encryption change request from a first communication device to a second communication device; determining a private time base value based on a private time base parameter; obtaining, by each of the first communication device and the second communication device, a matching encryption block based on the private time base value; and engaging in synchronized encrypted communication between the first communication device and the second communication device, each of which is using the matching encryption block for the encrypted communication.

Clause 25: The method of Clause 24 wherein the private time base value is used to select an encryption block template from an encryption block template database and then the matching encryption block is generated based on the selected encryption block template.

Clause 26: The method of Clause 24 wherein the private time base value is used to select an encryption parameter set from an encryption parameter set database and then the matching encryption block is generated based on the selected encryption parameter set.

Clause 27: The method of Clause 24 wherein the private time base parameter is shared between the first communication device and the second communication device.

Clause 28: The method of Clause 24 wherein the private time base value is determined according to a function of the private time base parameter, an offset time parameter and a time window parameter.

Clause 29: The method of Clause 28 wherein the private time base parameter and the offset time parameter are known by the first communication device and the second communication device.

Clause 30: The method of Clause 24 wherein an index is determined based on the private time base value, the index is used to select an encryption block template from an encryption block template database and then the matching encryption block is generated based on the selected encryption block template.

Clause 31: The method of Clause 30 wherein a hash function based on the private time base value is used to determine the index.

Clause 32: The method of Clause 24 wherein an encryption block engine is used to generate the matching encryption block based on the private time base value.

Clause 33: The method of Clause 27 wherein the private time base parameter is passed from the first communication device to the second communication device in response to an encryption change request that was issued by one of the first communication device and the second communication device.

Clause 34: The method of Clause 24 wherein each one of the first communication device and the second communication device has a local encryption parameter set database and wherein each one of the first communication device and the second communication device generates the private time base value based on the private time base parameter and uses the private time base value to obtain a same encryption parameter set from the device's respective local encryption parameter set database and uses the obtained encryption parameter set to generate the matching encryption block, thereby enabling synchronized encrypted communication between the first communication device and the second communication device.

Clause 35: The method of Clause 24 wherein each one of the first communication device and the second communication device has access to a centralized encryption parameter set database and wherein each one of the first communication device and the second communication device generates the private time base value based on the private time base parameter and uses the private time base value to obtain a same encryption parameter set from the centralized encryption parameter set database and uses the obtained encryption parameter set to generate the matching encryption block, thereby enabling synchronized encrypted communication between the first communication device and the second communication device.

Clause 36: The method of Clause 24 wherein each one of the first communication device and the second communication device has a local encryption block database and wherein each one of the first communication device and the second communication device generates the private time base value based on the private time base parameter and uses the private time base value to obtain an encryption block from the device's respective local encryption block database and uses the obtained encryption block as the matching encryption block, thereby enabling synchronized encrypted communication between the first communication device and the second communication device.

Clause 37: The method of Clause 24 wherein each one of the first communication device and the second communication device has access to a centralized encryption block database and wherein each one of the first communication device and the second communication device generates the private time base value based on the private time base parameter and uses the private time base value to obtain an encryption block from the centralized encryption block database and uses the obtained encryption block as the matching encryption block, thereby enabling synchronized encrypted communication between the first communication device and the second communication device.

Clause 38: The method of Clause 24 wherein an index is obtained from an index pad based on the private time base value and the index is used to obtain the matching encryption block.

Clause 39: The method of Clause 24 wherein each of the first communication device and the second communication device generates a private time base value based on the private time base parameter and obtains a matching encryption block parameter set from a respective parameter set pad based on the private time base value, and then uses the encryption block parameter set to generate the matching encryption block, thereby enabling synchronized encrypted communication between the first communication device and the second communication device.

Clause 40: The method of Clause 24 wherein a private time base parameter and a customized encryption block are passed from the first communication device to the second communication device in response to the encryption change request, the customized encryption block being used as the matching encryption block, thereby enabling synchronized encrypted communication between the first communication device and the second communication device.

Clause 41: The method of Clause 24 wherein, in response to the encryption change request, each of the first communication device and the second communication device sends an encryption block request to a centralized encryption block database, and wherein the centralized encryption block database generates the private time base value based on the private time base parameter and uses the private time base value to obtain a customized encryption block and then passes the customized encryption block to each of the first communication device and the second communication device for use as the matching encryption block.

Clause 42: The method of Clause 24 wherein the timing of the issuance of the encryption change request is based on the timing of a prior encryption change request that was issued by one of the first communication device and the second communication device.

Clause 43: The method of Clause 24 wherein the timing of the issuance of the encryption change request is based on the timing of an acknowledgement that was issued by one of the first communication device and the second communication device in response to a prior encryption change request.

Clause 44: The method of Clause 24 wherein the timing of the issuance of the encryption change request is based on the expiration of a predetermined time period since a prior encryption change request was issued by one of the first communication device and the second communication device.

Clause 45: The method of Clause 24 wherein the timing of the issuance of the encryption change request is based on the timing of an encryption block request receipt that was issued by an encryption parameter set database in response to a prior encryption block request from at least one of the first communication device and the second communication device.

Clause 46: The method of Clause 24 wherein the timing of the issuance of the encryption change request is based on a function of the private time base value.

Clause 47: The method of Clause 24 wherein the private time base value is used to obtain the matching encryption block from an S-box encryption block database.

The above description of the disclosed aspects, and that provided in the accompanying documents, is provided to enable any person skilled in the art to make or use the invention. Various modifications to these aspects will be readily apparent to those skilled in the art, and the generic principles described herein, and in the accompanying documents, can be applied to other aspects without departing from the spirit or scope of the invention. Thus, it is to be understood that the description and drawings presented herein, and presented in the accompanying documents, represent particular aspects of the invention and are therefore representative examples of the subject matter that is broadly contemplated by the present invention. It is further understood that the scope of the present invention fully encompasses other aspects that are, or may become, understood to those skilled in the art based on the descriptions presented herein and that the scope of the present invention is accordingly not limited by the descriptions presented herein, or by the descriptions presented in the accompanying documents.

**Claims**

1. A method for providing synchronized encrypted communication between at least two communication devices, the method comprising the steps of:

   sending an encryption change request from a first communication device to a second communication device;
   determining a private time base value based on a private time base parameter;
   obtaining, by each of the first communication device and the second communication device, a matching encryption block based on the private time base value; and
   engaging in synchronized encrypted communication between the first communication device and the second communication device, each of which is using the matching encryption block for the encrypted communication.

2. The method of Claim 1 wherein the private time base parameter is shared between the first communication device and the second communication device.

3. The method of Claim 1 wherein the private time base value is determined according to a function of the private time base parameter, an offset time parameter and a time window parameter.

4. The method of Claim 3 wherein the private time base parameter and the offset time parameter are known by the first communication device and the second communication device.

5. The method of Claim 1 wherein an index is determined based on the private time base value, the index is used to select an encryption block template from an encryption block template database and then the matching encryption block is generated based on the selected encryption block template.

6. The method of Claim 5 wherein a hash function based on the private time base value is used to determine the index.

7. The method of Claim 2 wherein the private time base parameter is passed from the first communication device to the second communication device in response to an encryption change request that was issued by one of the first communication device and the second communication device.

8. The method of Claim 1 wherein each one of the first communication device and the second communication device has a local encryption parameter set database and wherein each one of the first communication device and the second communication device generates the private time base value based on the private time base parameter and uses the private time base value to obtain a same encryption parameter set from the device's respective local encryption parameter set database and uses the obtained encryption parameter set to generate the matching encryption block, thereby enabling synchronized encrypted communication between the first communication device and the second communication device.

9. The method of Claim 1 wherein each one of the first communication device and the second communication device has access to a centralized encryption parameter set database and wherein each one of the first communication device and the second communication device generates the private time base value based on the private time base parameter and uses the private time base value to obtain a same encryption parameter set from the centralized encryption parameter set database and uses the obtained encryption parameter set to generate the matching encryption block, thereby enabling synchronized encrypted communication between the first communication device and the second communication device.

10. The method of Claim 1 wherein each one of the first communication device and the second communication device has a local encryption block database and wherein each one of the first communication device and the second communication device generates the private time base value based on the private time base parameter and uses the private time base value to obtain an encryption block from the device's respective local encryption block database and uses the obtained encryption block as the matching encryption block, thereby enabling synchronized encrypted communication between the first communication device and the second communication device.

11. The method of Claim 1 wherein each one of the first communication device and the second communication device has access to a centralized encryption block database and wherein each one of the first communication device and the second communication device generates the private time base value based on the private time base parameter and uses the private time base value to obtain an encryption block from the centralized encryption block database and uses the obtained encryption block as the matching encryption block, thereby enabling synchronized encrypted communication between the first communication device and the second communication device.

12. The method of Claim 1 wherein an index is obtained from an index pad based on the private time base value and the index is used to obtain the matching encryption block.

13. The method of Claim 1 wherein each of the first communication device and the second communication device generates a private time base value based on the private time base parameter and obtains a matching encryption block parameter set from a respective parameter set pad based on the private time base value, and then uses the encryption block parameter set to generate the matching encryption block, thereby enabling synchronized encrypted communication between the first communication device and the second communication device.

14. The method of Claim 1 wherein the timing of the issuance of the encryption change request is based on the expiration of a predetermined time period since a prior encryption change request was issued by one of the first communication device and the second communication device.

15. The method of Claim 1 wherein the timing of the issuance of the encryption change request is based on a function of the private time base value.

FIG. 1

FIG. 2

FIG. 3

FIG. 4

**FIG. 5**

FIG. 6

**FIG. 7**

EP 4 135 257 A1

606

FIG. 8

FIG. 9

FIG. 10

**1100**

| 1104 | 1106 | 1108 | 1110 | 1112 |
|---|---|---|---|---|

X → Stream Generator → Mode Selector → Randomness Amplifier → Randomness Scope → $R_{GAIN}$

**FIG. 11**

FIG. 12

FIG. 13

FIG. 14

**FIG. 15**

**1600**

$S_{ox}$

$S_{ix}$

$|R_{GAIN}|$

1602

1606

$\left\{\begin{matrix} S^I_{oy}, S^Q_{oy} \\ S^I_{oz}, S^Q_{oz} \end{matrix}\right\} S_{jx}$

$|R_{GAIN}|$

1604

$\Delta_{GAIN} \geq$
Threshold($\delta$)

**FIG. 16**

FIG. 17

FIG. 18

**FIG. 19**

2001

apply an encryption block to the input data stream to generate an encrypted data stream

2002

apply at least one randomness test block to the input data stream to determine a first randomness measurement and apply the at least one randomness test block to the encrypted data stream to determine a second randomness measurement

2003

determine a randomness gain by comparing the first randomness measurement associated with the input data stream to the second randomness measurement associated with the encrypted data stream

2005

END

**FIG. 20**

2101

a randomness amplifier receives a first input data stream as an input

2102

the randomness amplifier applies a standard encryption block to the first input data stream to generate a standard encrypted data stream

2103

the randomness amplifier determines a first randomness gain by comparing a first randomness measurement associated with the first input data stream to a second randomness measurement associated with the standard encrypted data stream

2104

a randomness comparator receives the first input data stream and a second encrypted data stream as inputs, the second encrypted data stream being generated by application of a second encryption block to the first input data stream

2105

the randomness comparator determines a second randomness gain by comparing the first randomness measurement associated with the first input data stream to a third randomness measurement associated with the second encrypted data stream

2106

a difference calculator determines a randomness gain difference by comparing the first randomness gain to the second randomness gain

2107

END

FIG. 21

2201

randomness enhancer applies one of a plurality of encryption blocks to an input data stream to generate an encrypted data stream

2202

at least one randomness evaluator applies at least one randomness test block to the input data stream to determine a first randomness measurement and to the encrypted data stream to determine a second randomness measurement

2203

randomness gain meter determines a randomness gain by comparing the first randomness measurement associated with the input data stream to the second randomness measurement associated with the encrypted data stream

2205

END

FIG. 22

2301

at least one randomness evaluator applies at least one randomness test block to a first one of a plurality of data streams to determine a first randomness measurement, wherein the plurality of data streams includes at least two input data streams and at least two output encrypted data streams

2302

the at least one randomness evaluator applies the at least one randomness test block to a second one of the plurality of data streams to determine a second randomness measurement

2303

a randomness gain meter determines the randomness gain by comparing the first randomness measurement to the second randomness measurement

2305

END

FIG. 23

2401

first randomness amplifier receives a first input data stream as an input

2402

first randomness amplifier applies a first encryption block to the first input data stream to generate a first encrypted data stream

2403

first randomness amplifier determines a first randomness gain by comparing a first randomness measurement associated with the first input data stream to a second randomness measurement associated with the first encrypted data stream

2404

second randomness amplifier receives the first input data stream as an input

2405

second randomness amplifier applies a second encryption block to the first input data stream to generate a second encrypted data stream

2406

second randomness amplifier determines a second randomness gain by comparing the first randomness measurement associated with the first input data stream to a third randomness measurement associated with the second encrypted data stream

2407

difference calculator determines a randomness gain difference by comparing the first randomness gain to the second randomness gain

2410

END

FIG. 24

input section accesses a first set of randomness gain values from a first memory, the first set of randomness gain values including a separate randomness gain value generated by a first randomness amplifier using each one of a plurality of different encryption component blocks

2501

input section accesses a second set of randomness gain values from a second memory, the second set of randomness gain values including a separate randomness gain value generated by a second randomness amplifier using each one of the plurality of different encryption component blocks

2502

randomness curve generator generates a first set of randomness curves associated with the first set of randomness gain values and a second set of randomness curves associated with the second set of randomness gain values

2503

randomness distance display displays any of the first set of randomness curves and the second set of randomness curves based on curve selection input(s) from a user interface, at least one curve selection input being associated with one of the different encryption component blocks

2504

2510

END

**FIG. 25**

**2600**

INPUT     2601

OUTPUT    2605

2603

| PLAIN TEXT<br>PLAIN TEXT + KEY<br><br><br>128 bits<br>192 bits<br>256 bits | KNOWN MATHEMATICAL<br>TRANSFORMATIONS<br><br>(Plaintext to Cyphertext) | ENCRYPTED<br>TEXT |

Mutual Key is agreed upon by both users
(sender and receiver)

(PRIOR ART)

**FIG. 26**

EP 4 135 257 A1

**2800**

(PRIOR ART)

**FIG. 28**

**2900**

AES S-Box — 2902
2904 — Divider Polynomial $X^8+x^4+x^3+x+1$ — 2906
2908 — Power Function
Nonlinear Transformation

2910
2912 — Constant = 63
2914 — Linear Transformation
Affine Transformation

$X = (x_7,...,x_1,x_0)$

$Z$

$Y = (y_7,...,y_1,y_0)$

(PRIOR ART)

**FIG. 29**

EP 4 135 257 A1

Y = (y₇,...,y₁,y₀) $\to$  X = (x₇,...,x₁,x₀)

**Inverse AES S-Box**

3002 — 3010 — 3020 — 3022

3012

Constant=63

3014

Inverse Linear
Transformation

Inverse Affine Transformation

Divider Polynomial
$X^8+x^4+x^3+x+1$

3024

Inverse of Power
Function

Inverse NonlinearTransformation

(PRIOR ART)

**FIG. 30**

EP 4 135 257 A1

**3100**

**FIG. 31**

FIG. 32

EP 4 135 257 A1

(PRIOR ART)

FIG. 27

FIG. 33

**3400**

3402

3410

3412 — S-Box Chromosome Builder

3413 — S-Box Population Manager

3414 — S-Box Evolution Controller

3415 — Iterators — No / Yes

Next Generation of Population

3416 — S-Box Fitness Evaluator

3417 — S-Box Population Evolution Agent

3420 — Randomness Amplifier

3430

3431 — Inv_S-Box Library

3432 — Evolved Inv_S-Box

$X = (x_{n-1}, \ldots, x_1, x_0)$

$Y = (y_{n-1}, \ldots, y_1, y_0)$

**FIG. 34**

FIG. 35

EP 4 135 257 A1

3600

3602
Index 1, Index 2, ...

3608

3612
Encrypted Communications

Request Change

3606
Index 1,
Index 2, ...

3614
Customized
Confusion Box,
Parameters, etc.

3616

3610

3618
Customized
Confusion Box,
Parameters, etc.

3604
Index 1,
Index 2, ...

User A

User B

3620

Database

3622

Database

EP 4 135 257 A1

FIG. 36

FIG. 37

3800

FIG. 38

3900

User B

3910

3918

Customized Algorithm

Request Algorithm

3916

Encrypted Communications

3912

Request Change

3914

3920

Centralized Server

Request Algorithm

3916

3908

User A

3918

Customized Algorithm

FIG. 39

FIG. 40

FIG. 41

EP 4 135 257 A1

**4200**

FIG. 42

**FIG. 43**

FIG. 44

EP 4 135 257 A1

**4500**

FIG. 45

4600

4602 Transmit Chain

4618 → Transmit Data
4620 Evolving Encryptor Plant
4622 Channel
4624 Spreader
4626 Serializer
4628 Modulator

Modulated Data
4630 D A C
Signal Out

4604 A D C
Signal In
4606 Demodulator
4608 Deserializer
4610 Despreader
4612 Channel
4614 Evolving Decryptor Plant
4616 → Received Data

Receive Chain

FIG. 46

**FIG. 47**

4800

FIG. 48

generate a plurality of confusion boxes with a confusion box population manager

4901

apply, at a confusion box population agent, at least one evolutionary operator to each of the generated plurality of confusion boxes to create an evolved plurality of confusion boxes

4902

evaluate, at a confusion box fitness evaluator, a cryptographic fitness of each of the evolved plurality of confusion boxes and assign a cryptographic fitness measure to each of the evolved plurality of confusion boxes

4903

4904

determine, at a confusion box evolution controller, whether an average cryptographic fitness measure of the evolved plurality of confusion boxes is above a fitness threshold value and whether a current iteration count is above an iteration threshold value and, if both determined conditions are not met, instruct the confusion box population manager to generate a next plurality of confusion boxes

store, in a confusion box library, each one of the evolved plurality of confusion boxes that has an assigned cryptographic fitness measure above the fitness threshold value

4905

implement, in an encryptor block, one of the evolved plurality of confusion boxes stored in the confusion box library to transform a plain-text data stream into an encrypted data stream

4906

END

4907

**FIG. 49**

receive, at an encryptor requirements agent, a plurality of encryption block design parameters and generate a current set of encryption block design requirements based on the received plurality of encryption block design parameters — 5001

provide, by an encryptor algorithm engine, a plurality of different encryption module design templates based on the current set of encryption block design requirements — 5002

generate, by an evolving encryptor processor, a plurality of encryption block templates based on the plurality of different encryption module design templates, evaluate a cryptographic fitness of each of the plurality of encryption block templates, and assign a cryptographic fitness measure to each of the plurality of encryption block templates — 5003

determine whether an average cryptographic fitness measure of the plurality of encryption block templates is above a fitness threshold value and whether a current iteration count is below an iteration threshold value — 5004

Are both conditions met? — 5005

NO

YES

output a plurality of elite encryption block templates from the plurality of encryption block templates that are above the fitness threshold value — 5006

review, at an encryptor requirements scout, each of the plurality of elite encryption block templates and determine whether each elite encryption block template has a cryptographic fitness measure above a design fitness threshold and, if this determined condition is met for one or more of the elite encryption block templates, select at least one of the elite encryption block templates to generate an encryption block for use in an encryption system — 5007

END — 5008

**FIG. 50**

5100

5120

5140

5130

5150

$T_p$ → Private Time Base $T=F(T_p,T_0,X)$ → T → | Param set 1 | | Param set 2 | | ... | | Param set n | → Parameters

5110

92

EP 4 135 257 A1

**FIG. 51**

5200

FIG. 52

5305

5304

$T_p$

5306

5310

Encrypted Communications

User A

User B

Request/Ack Change

5320

$F(T_p) =$
Parameters
X, Y, Z

$F(T_p) =$
Parameters
X, Y, Z

5307

5308

5330

5331

FIG. 53

5400

5430

5435

5405

Customized
Algorithm

, T$_P$

5406

5410

User A

Encrypted Communications

User B

Request/Ack Change

5420

EP 4 135 257 A1

FIG. 54

FIG. 55

Europäisches
Patentamt

European
Patent Office

Office européen
des brevets

**EUROPEAN SEARCH REPORT**

Application Number

EP 22 18 7180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/295932 A1 (CHIEN DANIEL [US]) 17 September 2020 (2020-09-17) * abstract * * paragraph [0022] – paragraph [0042] * ----- | 1-15 | INV. H04L9/12 H04L9/32 |
| X | WO 2015/153559 A1 (WI LAN LABS INC [US]) 8 October 2015 (2015-10-08) * paragraph [0081] – paragraph [0088] * * paragraph [0231] – paragraph [00258] * ----- | 1-15 | |
| X | US 2014/173238 A1 (WARE FREDERICK A [US] ET AL) 19 June 2014 (2014-06-19) * paragraph [0027] – paragraph [0041] * * paragraph [0081] – paragraph [0086] * * figures 1, 13 * ----- | 1-15 | |
| | | | TECHNICAL FIELDS SEARCHED (IPC) H04L |

The present search report has been drawn up for all claims

| Place of search | Date of completion of the search | Examiner |
|---|---|---|
| Munich | 15 December 2022 | Apostolescu, Radu |

EPO FORM 1503 03.82 (P04C01)

## ANNEX TO THE EUROPEAN SEARCH REPORT
## ON EUROPEAN PATENT APPLICATION NO.

EP 22 18 7180

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2022

| Patent document cited in search report | Publication date | Patent family member(s) | Publication date |
|---|---|---|---|
| US 2020295932 A1 | 17-09-2020 | US 2020295932 A1<br>WO 2021247061 A1 | 17-09-2020<br>09-12-2021 |
| WO 2015153559 A1 | 08-10-2015 | US 2017185761 A1<br>WO 2015153559 A1 | 29-06-2017<br>08-10-2015 |
| US 2014173238 A1 | 19-06-2014 | NONE | |

**EP 4 135 257 A1**

REFERENCES CITED IN THE DESCRIPTION

**Patent documents cited in the description**

- US 34411321
- US 11925720
- US 63116757
- US 63143474